(19) Europäisches Patentamt / European Patent Office / Office européen des brevets

(11) **EP 4 024 870 A1**

(12) **EUROPEAN PATENT APPLICATION**
published in accordance with Art. 153(4) EPC

(43) Date of publication:
**06.07.2022 Bulletin 2022/27**

(21) Application number: **20864638.0**

(22) Date of filing: **21.09.2020**

(51) International Patent Classification (IPC):
*H04N 19/60* (2014.01)     *H04N 19/137* (2014.01)
*H04N 19/132* (2014.01)    *H04N 19/119* (2014.01)
*H04N 19/18* (2014.01)     *H04N 19/122* (2014.01)
*H04N 19/70* (2014.01)

(52) Cooperative Patent Classification (CPC):
H04N 19/119; H04N 19/122; H04N 19/132;
H04N 19/137; H04N 19/18; H04N 19/60;
H04N 19/70

(86) International application number:
**PCT/KR2020/012708**

(87) International publication number:
**WO 2021/054799 (25.03.2021 Gazette 2021/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.09.2019 US 201962903822 P
23.09.2019 US 201962904634 P**

(71) Applicant: **LG Electronics Inc.
SEOUL 07336 (KR)**

(72) Inventors:
• **KOO, Moonmo**
  **Seoul 06772 (KR)**
• **LIM, Jaehyun**
  **Seoul 06772 (KR)**
• **KIM, Seunghwan**
  **Seoul 06772 (KR)**

(74) Representative: **Plasseraud IP
66, rue de la Chaussée d'Antin
75440 Paris Cedex 09 (FR)**

(54) **TRANSFORM-BASED IMAGE CODING METHOD AND DEVICE THEREFOR**

(57)     An image decoding method according to the present document comprises a step of deriving a corrected transform coefficient, wherein the step of deriving the corrected transform coefficient comprises the steps of: determining whether the transform coefficient exists in a second region excluding the upper left first region of the current block; parsing a LFNST index on the basis of the determined result; and deriving the corrected transform coefficient on the basis of the LFNST index and a LFNST matrix, wherein the LFNST index can be parsed on the basis of the current block being divided into a plurality of sub-partition blocks, and the absence of the transform coefficient in some of the individual second regions for the plurality of sub-partition blocks.

FIG. 20

RECEIVE RESIDUAL INFORMATION FROM BITSTREAM — S2010

DERIVE TRANSFORM COEFFICIENT FOR CURRENT BLOCK BASED ON RESIDUAL INFORMATION — S2020

DETERMINE WHETHER CURRENT BLOCK IS SPLIT INTO PLURALITY OF SUB-PARTITION BLOCKS AND WHETHER TRANSFORM COEFFICIENT DOES NOT EXIST IN ALL OF RESPECTIVE SECOND REGIONS FOR PLURALITY OF SUB-PARTITION BLOCKS — S2030

PARSE LFNST INDEX BASED ON DETERMINATION RESULT — S2040

DERIVE MODIFIED TRANSFORM COEFFICIENT BASED ON LFNST INDEX AND LFNST MATRIX — S2050

DERIVE RESIDUAL SAMPLE FOR CURRENT BLOCK BASED ON INVERSE PRIMARY TRANSFORM FOR MODIFIED TRANSFORM COEFFICIENT — S2060

GENERATE RECONSTRUCTED PICTURE BASED ON RESIDUAL SAMPLES — S2070

**Description**

**BACKGROUND OF THE DISCLOSURE**

Field of the disclosure

The present disclosure relates to an image coding technique and, more particularly, to a method and an apparatus for coding an image based on transform in an image coding system.

Related Art

Nowadays, the demand for high-resolution and high-quality images/videos such as 4K, 8K or more ultra high definition (UHD) images/videos has been increasing in various fields. As the image/video data becomes higher resolution and higher quality, the transmitted information amount or bit amount increases as compared to the conventional image data. Therefore, when image data is transmitted using a medium such as a conventional wired/wireless broadband line or image/video data is stored using an existing storage medium, the transmission cost and the storage cost thereof are increased.

Further, nowadays, the interest and demand for immersive media such as virtual reality (VR), artificial reality (AR) content or hologram, or the like is increasing, and broadcasting for images/videos having image features different from those of real images, such as a game image is increasing.

Accordingly, there is a need for a highly efficient image/video compression technique for effectively compressing and transmitting or storing, and reproducing information of high resolution and high quality images/videos having various features as described above.

**Summary**

A technical aspect of the present disclosure is to provide a method and an apparatus for increasing image coding efficiency.

Another technical aspect of the present disclosure is to provide a method and an apparatus for increasing efficiency in transform index coding.

Still another technical aspect of the present disclosure is to provide an image coding method and apparatus using LFNST.

Still another technical aspect of the present disclosure is to provide an image coding method and apparatus in which LFNST is applied to a sub-partition block.

According to an embodiment of the present disclosure, there is provided an image decoding method performed by a decoding apparatus. The method may include deriving a modified transform coefficient. The deriving of the modified transform coefficient includes: determining whether the transform coefficient exists in a second region other than a first region located at a top-left position of the current block; parsing a low-frequency non-separable transform (LFNST) index, based on a result of the determination; and deriving the modified transform coefficient, based on the LFNST index and an LFNST matrix. The LFNST index may be parsed based on that the current block is split into a plurality of sub-partition blocks and the transform coefficient does not exist in all of the respective second regions for the plurality of sub-partition blocks.

The LFNST index may be parsed if the current block is not split into the plurality of sub-partition blocks and the transform coefficient does not exist in the second region.

The current block may be a coding block. If a width and height of each sub-partition block are greater than or equal to 4, the LFNST index for the current block may be applied to the plurality of sub-partition blocks.

If the split sub-partition block is a 4x4 block or an 8x8 block, the LFNST may be applied to up to an 8th transform coefficient in a scan direction from a top-left position of the current block.

The deriving of the modified transform coefficient may further include deriving a first variable indicating whether the transform coefficient exists in a region other than a DC position of the current block. The LFNST index may be parsed when the first variable indicates that the transform coefficient exists in the region other than the DC position.

The LFNST index may be parsed without deriving the first variable based on the current block being split into the plurality of sub-partition blocks.

If the sub-partition block is not a 4x4 block or an 8x8 block, the LFNST may be applied to a transform coefficient of a 4x4 region located at a top-left position of the sub-partition block.

According to an embodiment of the present disclosure, there is provided an image encoding method performed by an encoding apparatus. The method may include: deriving transform coefficients for the current block, based on a primary transform for the residual samples;

deriving modified transform coefficients for the current block, based on a specific LFNST matrix and transform coefficients of a first region located at a top-left position of the current block; zeroing-out a second region of the current block, in which the modified transform coefficients do not exist; configuring image information so that the LFNST index is signaled based on that the current block is split into a plurality of sub-partition blocks and the zero-out is performed on all of the plurality of sub-partition blocks; and outputting the image information including the LFNST index and residual information derived through quantization of the modified transform coefficients.

According to still another embodiment of the present disclosure, there may be provided a digital storage medium that stores image data including encoded image information and a bitstream generated according to an image encoding method performed by an encoding apparatus.

According to yet another embodiment of the present disclosure, there may be provided a digital storage medium that stores image data including encoded image information and a bitstream to cause a decoding apparatus to perform the image decoding method.

According to the present disclosure, it is possible to increase overall image/video compression efficiency.

According to the present disclosure, it is possible to increase efficiency in transform index coding.

A technical aspect of the present disclosure may provide an image coding method and apparatus using LFNST.

Another technical aspect of the present disclosure may provide an image coding method and apparatus in which LFNST is applied to a sub-partition block.

Effects that can be obtained through specific examples of the present specification are not limited to the effects listed above. For example, various technical effects that a person having ordinary skill in the related art can understand or derive from the present specification may exist. Accordingly, specific effects of the present specification are not limited to those explicitly described in the present specification, and can include various effects that can be understood or derived from the technical characteristics of the present specification.

## BRIEF DESCRIPTION OF THE DRAWINGS

FIG. 1 is a diagram schematically explaining a configuration of a video/image encoding apparatus to which embodiments of the present disclosure are applicable.

FIG. 2 is a diagram schematically explaining a configuration of a video/image decoding apparatus to which embodiments of the present disclosure are applicable.

FIG. 3 schematically illustrates a multiple transform technique according to an embodiment of the present disclosure.

FIG. 4 exemplarily shows intra directional modes of 65 prediction directions.

FIG. 5 is a diagram illustrating an RST according to an embodiment of the present disclosure.

FIG. 6 is a diagram illustrating a sequence of arranging output data of a forward primary transformation into a one-dimensional vector according to an example.

FIG. 7 is a diagram illustrating a sequence of arranging output data of a forward secondary transform into a two-dimensional block according to an example.

FIG. 8 is a diagram illustrating a block shape to which the LFNST is applied.

FIG. 9 is a diagram illustrating an arrangement of output data of a forward LFNST according to an example, and shows a block in which output data of the forward LFNST is arranged according to a block shape.

FIG. 10 shows that the number of output data for the forward LFNST is limited to a maximum of 16 according to an example.

FIG. 11 is a diagram illustrating the zero-out in a block to which the 4x4 LFNST is applied according to an example.

FIG. 12 is a diagram illustrating the zero-out in a block to which the 8x8 LFNST is applied according to an example.

FIG. 13 is a diagram illustrating the zero-out in a block to which the 8x8 LFNST is applied according to another example.

FIG. 14 is a diagram illustrating an example of a sub-block split from one coding block.

FIG. 15 is a diagram illustrating another example of a sub-block split from one coding block.

FIG. 16 is a diagram illustrating symmetry between an Mx2 (Mxl) block and a 2xM (1xM) block according to an example.

FIG. 17 is a diagram exemplifying a 2xM block transposed according to an example.

FIG. 18 illustrates a scanning order for an 8x2 or 2x8 region according to an example.

FIG. 19 is a drawing illustrating a sampled LFSNT kernel when in an ISP mode according to an embodiment.

FIG. 20 is a flowchart illustrating an operation of a video decoding apparatus according to an embodiment of the present disclosure.

FIG. 21 is a flowchart illustrating an operation of a video encoding apparatus according to an embodiment of the present disclosure.

FIG. 22 illustrates an example of a video/image coding system to which the present disclosure is applicable.
FIG. 23 illustrates the structure of a content streaming system to which the present disclosure is applied.

## DESCRIPTION OF EXEMPLARY EMBODIMENTS

While the present disclosure may be susceptible to various modifications and include various embodiments, specific embodiments thereof have been shown in the drawings by way of example and will now be described in detail. However, this is not intended to limit the present disclosure to the specific embodiments disclosed herein. The terminology used herein is for the purpose of describing specific embodiments only, and is not intended to limit technical idea of the present disclosure. The singular forms may include the plural forms unless the context clearly indicates otherwise. The terms such as "include" and "have" are intended to indicate that features, numbers, steps, operations, elements, components, or combinations thereof used in the following description exist, and thus should not be understood as that the possibility of existence or addition of one or more different features, numbers, steps, operations, elements, components, or combinations thereof is excluded in advance.

Meanwhile, each component on the drawings described herein is illustrated independently for convenience of description as to characteristic functions different from each other, and however, it is not meant that each component is realized by a separate hardware or software. For example, any two or more of these components may be combined to form a single component, and any single component may be divided into plural components. The embodiments in which components are combined and/or divided will belong to the scope of the patent right of the present disclosure as long as they do not depart from the essence of the present disclosure.

Hereinafter, preferred embodiments of the present disclosure will be explained in more detail while referring to the attached drawings. In addition, the same reference signs are used for the same components on the drawings, and repeated descriptions for the same components will be omitted.

This document relates to video/image coding. For example, the method/example disclosed in this document may relate to a VVC (Versatile Video Coding) standard (ITU-T Rec. H.266), a next-generation video/image coding standard after VVC, or other video coding related standards (e.g. , HEVC (High Efficiency Video Coding) standard (ITU-T Rec. H.265), EVC (essential video coding) standard, AVS2 standard, etc.).

In this document, a variety of embodiments relating to video/image coding may be provided, and, unless specified to the contrary, the embodiments may be combined to each other and be performed.

In this document, a video may mean a set of a series of images over time. Generally a picture means a unit representing an image at a specific time zone, and a slice/tile is a unit constituting a part of the picture. The slice/tile may include one or more coding tree units (CTUs). One picture may be constituted by one or more slices/tiles. One picture may be constituted by one or more tile groups. One tile group may include one or more tiles.

A pixel or a pel may mean a smallest unit constituting one picture (or image). Also, 'sample' may be used as a term corresponding to a pixel. A sample may generally represent a pixel or a value of a pixel, and may represent only a pixel/pixel value of a luma component or only a pixel/pixel value of a chroma component. Alternatively, the sample may refer to a pixel value in the spatial domain, or when this pixel value is converted to the frequency domain, it may refer to a transform coefficient in the frequency domain.

A unit may represent the basic unit of image processing. The unit may include at least one of a specific region and information related to the region. One unit may include one luma block and two chroma (e.g., cb, cr) blocks. The unit and a term such as a block, an area, or the like may be used in place of each other according to circumstances. In a general case, an M $\times$ N block may include a set (or an array) of samples (or sample arrays) or transform coefficients consisting of M columns and N rows.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C."

Further, in the document, the term "or" should be interpreted to indicate "and/or." For instance, the expression "A or B" may include 1) only A, 2) only B, and/or 3) both A and B. In other words, the term "or" in this document should be interpreted to indicate "additionally or alternatively."

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "prediction (intra prediction)", it may mean that "intra prediction" is proposed as an example of "prediction". In other words, the "prediction" of the present disclosure is not limited to "intra prediction", and "intra prediction" may be proposed as an example of "prediction". In addition, when indicated as "prediction (i.e., intra prediction)", it may also mean that "intra prediction" is proposed as an example of "prediction".

Technical features individually described in one figure in the present disclosure may be individually implemented or may be simultaneously implemented.

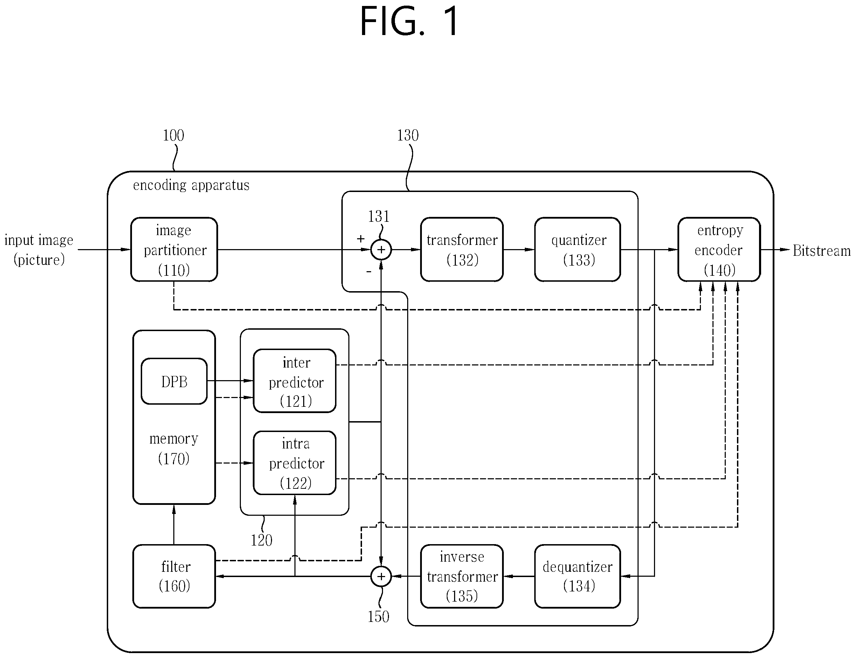

FIG. 1 is a diagram schematically explaining a configuration of a video/image encoding apparatus to which embodiments of the present disclosure are applicable. Hereinafter, what is referred to as the video encoding apparatus may include an image encoding apparatus.

Referring to FIG. 1, an encoding apparatus 100 may include and be configured with an image partitioner 110, a predictor 120, a residual processor 130, an entropy encoder 140, an adder 150, a filter 160, and a memory 170. The predictor 120 may include an inter predictor 121 and an intra predictor 122. The residual processor 130 may include a transformer 132, a quantizer 133, a dequantizer 134, and an inverse transformer 135. The residual processor 130 may further include a subtractor 131. The adder 150 may be called a reconstructor or a reconstructed block generator. The image partitioner 110, the predictor 120, the residual processor 130, the entropy encoder 140, the adder 150, and the filter 160, which have been described above, may be configured by one or more hardware components (e.g., encoder chipsets or processors) according to an embodiment. In addition, the memory 170 may include a decoded picture buffer (DPB), and may also be configured by a digital storage medium. The hardware component may further include the memory 170 as an internal/external component.

The image partitioner 110 may split an input image (or, picture, frame) input to the encoding apparatus 100 into one or more processing units. As an example, the processing unit may be called a coding unit (CU). In this case, the coding unit may be recursively split according to a quad-tree binary-tree ternary-tree (QTBTTT) structure from a coding tree unit (CTU) or a largest coding unit (LCU). For example, one coding unit may be split into a plurality of coding units of a deeper depth based on a quad-tree structure, a binary-tree structure, and/or a ternary-tree structure. In this case, for example, the quad-tree structure may be applied first and the binary-tree structure and/or the ternary-tree structure may be applied later. Alternatively, the binary-tree structure may also be applied first. A coding procedure according to this document may be performed based on a final coding unit which is not split any more. In this case, based on coding efficiency according to image characteristics or the like, the LCU may be directly used as the final coding unit, or optionally, the coding unit may be recursively split into coding units of a deeper depth, such that a coding unit having an optimal size may be used as the final coding unit. Here, the coding procedure may include a procedure such as prediction, transform, and reconstruction to be described later. As another example, the processing unit may further include a prediction unit (PU) or a transform unit (TU). In this case, each of the PU and the TU may be split or partitioned from the aforementioned final coding unit. The PU may be a unit for sample prediction, and the TU may be a unit for inducing a transform coefficient and/or a unit for inducing a residual signal from the transform coefficient.

The unit may be interchangeably used with the term such as a block or an area in some cases. Generally, an MxN block may represent samples composed of M columns and N rows or a group of transform coefficients. The sample may generally represent a pixel or a value of the pixel, and may also represent only the pixel/pixel value of a luma component and also represent only the pixel/pixel value of a chroma component. The sample may be used as the term corresponding to a pixel or a pel configuring one picture (or image).

The encoding apparatus 100 may generate a residual signal (residual block, residual sample array) by subtracting a predicted signal (predicted block, prediction sample array) output from the inter predictor 121 or the intra predictor 122 from the input image signal (original block, original sample array), and the generated residual signal is transmitted to the transformer 132. In this case, as illustrated, the unit for subtracting the predicted signal (predicted block, prediction sample array) from the input image signal (original block, original sample array) within an encoder 100 may be called the subtractor 131. The predictor may perform prediction for a block to be processed (hereinafter, referred to as a current block), and generate a predicted block including prediction samples of the current block. The predictor may determine whether intra prediction is applied or inter prediction is applied in units of the current block or the CU. The predictor may generate various information about prediction, such as prediction mode information, to transfer the generated information to the entropy encoder 140 as described later in the description of each prediction mode. The information about prediction may be encoded by the entropy encoder 140 and may be output in the form of a bitstream.

The intra predictor 122 may predict a current block with reference to samples within a current picture. The referenced samples may be located neighboring to the current block, or may also be located away from the current block according to the prediction mode. The prediction modes in the intra prediction may include a plurality of non-directional modes and a plurality of directional modes. The non-directional mode may include, for example, a DC mode or a planar mode. The directional mode may include, for example, 33 directional prediction modes or 65 directional prediction modes according to the fine degree of the prediction direction. However, this is illustrative and the directional prediction modes which are more or less than the above number may be used according to the setting. The intra predictor 122 may also determine the prediction mode applied to the current block using the prediction mode applied to the neighboring block.

The inter predictor 121 may induce a predicted block of the current block based on a reference block (reference sample array) specified by a motion vector on a reference picture. At this time, in order to decrease the amount of motion information transmitted in the inter prediction mode, the motion information may be predicted in units of a block, a sub-block, or a sample based on the correlation of the motion information between the neighboring block and the current block. The motion information may include a motion vector and a reference picture index. The motion information may further include inter prediction direction (L0 prediction, L1 prediction, Bi prediction, or the like) information. In the case of the inter prediction, the neighboring block may include a spatial neighboring block existing within the current picture and a temporal neighboring block existing in the reference picture. The reference picture including the reference block and the reference picture including the temporal neighboring block may also be the same as each other, and may also be different from each other. The temporal neighboring block may be called the name such as a collocated reference block, a collocated CU (colCU), or the like, and the reference picture including the temporal neighboring block may also be called a collocated picture (colPic). For example, the inter predictor 121 may configure a motion information candidate list based on the neighboring blocks, and generate information indicating what candidate is used to derive the motion vector and/or the reference picture index of the current block. The inter prediction may be performed based on various prediction modes, and for example, in the case of a skip mode and a merge mode, the inter predictor 121 may use the motion information of the neighboring block as the motion information of the current block. In the case of the skip mode, the residual signal may not be transmitted unlike the merge mode. A motion vector prediction (MVP) mode may indicate the motion vector of the current block by using the motion vector of the neighboring block as a motion vector predictor and by signaling a motion vector difference.

The predictor 120 may generate a predicted signal based on various prediction methods to be described later. For example, the predictor may not only apply the intra prediction or the inter prediction for predicting one block, but also simultaneously apply the intra prediction and the inter prediction. This may be called a combined inter and intra prediction (CIIP). Further, the predictor may be based on an intra block copy (IBC) prediction mode or a palette mode in order to perform prediction on a block. The IBC prediction mode or palette mode may be used for content image/video coding of a game or the like, such as screen content coding (SCC). The IBC basically performs prediction in a current picture, but it may be performed similarly to inter prediction in that it derives a reference block in a current picture. That is, the IBC may use at least one of inter prediction techniques described in this document. The palette mode may be regarded as an example of intra coding or intra prediction. When the palette mode is applied, a sample value in a picture may be signaled based on information on a palette index and a palette table.

The predicted signal generated through the predictor (including the inter predictor 121 and/or the intra predictor 122) may be used to generate a reconstructed signal or used to generate a residual signal. The transformer 132 may generate transform coefficients by applying the transform technique to the residual signal. For example, the transform technique may include at least one of a discrete cosine transform (DCT), a discrete sine transform (DST), a Karhunen-Loève transform (KLT), a graph-based transform (GBT), or a conditionally non-linear transform (CNT). Here, when the relationship information between pixels is illustrated as a graph, the GBT means the transform obtained from the graph. The CNT means the transform which is acquired based on a predicted signal generated by using all previously reconstructed pixels. In addition, the transform process may also be applied to a pixel block having the same size of the square, and may also be applied to the block having a variable size rather than the square.

The quantizer 133 may quantize the transform coefficients to transmit the quantized transform coefficients to the entropy encoder 140, and the entropy encoder 140 may encode the quantized signal (information about the quantized transform coefficients) to output the encoded quantized signal in the form of a bitstream. The information about the quantized transform coefficients may be called residual information. The quantizer 133 may rearrange the quantized transform coefficients having a block form in a one-dimensional vector form based on a coefficient scan order, and may also generate the information about the quantized transform coefficients based on the quantized transform coefficients of the one dimensional vector form. The entropy encoder 140 may perform various encoding methods, for example, such as an exponential Golomb coding, a context-adaptive variable length coding (CAVLC), and a context-adaptive binary arithmetic coding (CABAC). The entropy encoder 140 may also encode information (e.g., values of syntax elements and the like) necessary for video/image reconstruction together or separately other than the quantized transform coefficients. The encoded information (e.g., encoded video/image information) may be transmitted or stored in units of network abstraction layer (NAL) unit in the form of a bitstream. The video/image information may further include information about various parameter sets such as an adaptation parameter set (APS), a picture parameter set (PPS), a sequence parameter set (SPS), or a video parameter set (VPS). In addition, the video/image information may further include general constraint information. In this document, syntax elements and/or information transferred/signaled from the encoding apparatus to the decoding apparatus may be included in video/image information. The video/image information may be included in the bitstream by being encoded through the aforementioned encoding procedure. The bitstream may be transmitted through a network, or may be stored in a digital storage medium. Herein, the network may include a broadcasting network and/or a communication network, or the like, and the digital storage medium may include various storage media such as USB, SD, CD, DVD, Blue-ray, HDD, and SSD. A transmitter (not shown) for transmitting the signal output from the entropy encoder 140 and/or a storage (not shown) for storing the signal may be configured as the internal/external elements of the encoding apparatus 100, or the transmitter may also be included in the entropy encoder 140.

The quantized transform coefficients output from the quantizer 133 may be used to generate a predicted signal. For example, the dequantizer 134 and the inverse transformer 135 may apply dequantization and inverse transform to the quantized transform coefficients, so as to restore the residual signal (residual block or residual samples). The adder 150 may add the reconstructed residual signal to the predicted signal output from the inter predictor 121 or the intra predictor 122, so as to generate the reconstructed signal (reconstructed picture, reconstructed block, reconstructed sample array). As in the case where the skip mode is applied, if there is no residual for the block to be processed, the predicted block may be used as the reconstructed block. The adder 150 may be called a reconstructor or a reconstructed block generator. The generated reconstructed signal may be used for the intra prediction of the next block to be processed within the current picture, and as described later, also used for the inter prediction of the next picture through filtering.

Meanwhile, luma mapping with chroma scaling (LMCS) may also be applied in a picture encoding and/or reconstruction process.

The filter 160 may apply filtering to the reconstructed signal, thereby improving subjective/objective image qualities. For example, the filter 160 may apply various filtering methods to the reconstructed picture to generate a modified reconstructed picture, and store the modified reconstructed picture in the memory 170, specifically, the DPB of the memory 170. Various filtering methods may include, for example, a deblocking filtering, a sample adaptive offset, an adaptive loop filter, a bilateral filter, and the like. The filter 160 may generate various filtering-related information to transfer the generated information to the entropy encoder 140, as described later in the description of each filtering method. The filtering-related information may be encoded by the entropy encoder 140 and may be output in the form of a bitstream.

The modified reconstructed picture transmitted to the memory 170 may be used as the reference picture in the inter predictor 121. If the inter prediction is applied by the inter predictor, the encoding apparatus may avoid the prediction mismatch between the encoding apparatus 100 and the decoding apparatus, and may also improve coding efficiency.

The DPB of the memory 170 may store the modified reconstructed picture to be used as the reference picture in the inter predictor 121. The memory 170 may store motion information of the block in which the motion information within the current picture is derived (or encoded) and/or motion information of the blocks within the previously reconstructed picture. The stored motion information may be transferred to the inter predictor 121 to be utilized as motion information of the spatial neighboring block or motion information of the temporal neighboring block. The memory 170 may store the reconstructed samples of the reconstructed blocks within the current picture, and transfer the reconstructed samples to the intra predictor 122.

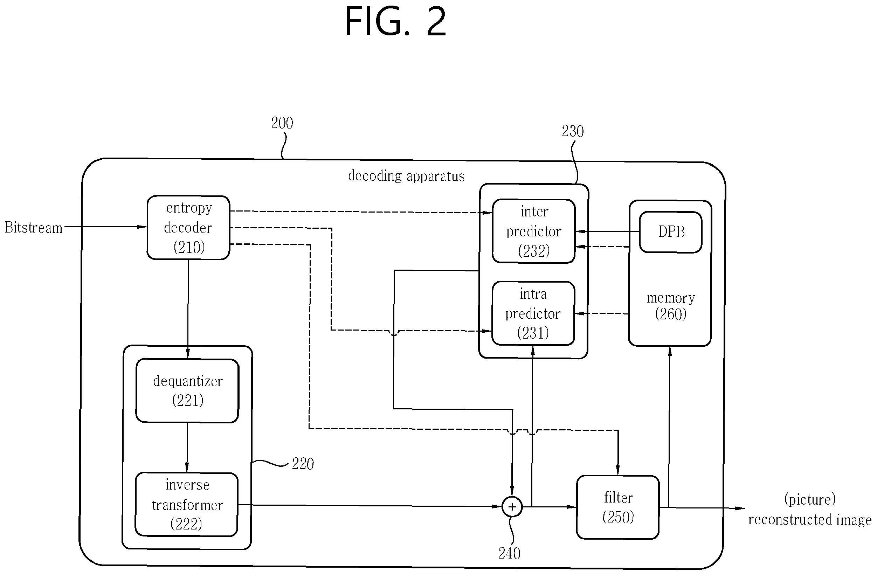

FIG. 2 is a diagram schematically explaining a configuration of a video/image decoding apparatus to which embodiments of the present disclosure are applicable.

Referring to FIG. 2, a decoding apparatus 200 may include and be configured with an entropy decoder 210, a residual processor 220, a predictor 230, an adder 240, a filter 250, and a memory 260. The predictor 230 may include an inter predictor 232 and an intra predictor 231. The residual processor 220 may include a dequantizer 221 and an inverse transformer 222. The entropy decoder 210, the residual processor 220, the predictor 230, the adder 240, and the filter 250, which have been described above, may be configured by one or more hardware components (e.g., decoder chipsets or processors) according to an embodiment. Further, the memory 260 may include a decoded picture buffer (DPB), and may be configured by a digital storage medium. The hardware component may further include the memory 260 as an internal/external component.

When a bitstream including video/image information is input, the decoding apparatus 200 may reconstruct an image in response to a process in which the video/image information is processed in the encoding apparatus illustrated in FIG. 1. For example, the decoding apparatus 200 may derive units/blocks based on block split-related information acquired from the bitstream. The decoding apparatus 200 may perform decoding using the processing unit applied to the encoding apparatus. Therefore, the processing unit for the decoding may be, for example, a coding unit, and the coding unit may be split according to a quad-tree structure, a binary-tree structure, and/or a ternary-tree structure from a CTU or a LCU. One or more transform units may be derived from the coding unit. In addition, the reconstructed image signal decoded and output through the decoding apparatus 200 may be reproduced through a reproducing apparatus.

The decoding apparatus 200 may receive the signal output from the encoding apparatus illustrated in FIG. 1 in the form of a bitstream, and the received signal may be decoded through the entropy decoder 210. For example, the entropy decoder 210 may derive information (e.g., video/image information) necessary for the image reconstruction (or picture reconstruction) by parsing the bitstream. The video/image information may further include information about various parameter sets such as an adaptation parameter set (APS), a picture parameter set (PPS), a sequence parameter set (SPS), and a video parameter set (VPS). In addition, the video/image information may further include general constraint information. The decoding apparatus may decode the picture further based on the information about the parameter set and/or the general constraint information. Syntax elements and/or information to be signaled/received, which will be described later in this document, may be decoded through the decoding procedure and acquired from the bitstream. For example, the entropy decoder 210 may decode information within the bitstream based on a coding method such as an exponential Golomb coding, a CAVLC, or a CABAC, and output a value of the syntax element necessary for the image reconstruction, and the quantized values of the residual-related transform coefficient. More specifically, the CABAC entropy decoding method may receive a bin corresponding to each syntax element from the bitstream, determine a context model using syntax element information to be decoded and decoding information of the neighboring block and the block to be decoded or information of the symbol/bin decoded in the previous stage, and generate a symbol corresponding to a value of each syntax element by predicting the probability of generation of the bin according to the determined context model to perform the arithmetic decoding of the bin. At this time, the CABAC entropy decoding method may determine the context model and then update the context model using the information of the decoded symbol/bin for a context model of a next symbol/bin. The information about prediction among the information decoded by the entropy decoder 210 may be provided to the predictor (the inter predictor 232 and the intra predictor 231), and a residual value at which the entropy decoding is performed by the entropy decoder 210, that is, the quantized transform coefficients and the related parameter information may be input to the residual processor 220. The residual processor 220 may derive a residual signal (residual block, residual samples, residual sample array). In addition, the information about filtering among the information decoded by the entropy decoder 210 may be provided to the filter 250. Meanwhile, a receiver (not shown) for receiving the signal output from the encoding apparatus may be further configured as the internal/external element of the decoding apparatus 200, or the receiver may also be a component of the entropy decoder 210. Meanwhile, the decoding apparatus according to the present disclosure may be called a video/image/picture decoding apparatus, and the decoding apparatus may also be classified into an information decoder (video/image/picture information decoder) and a sample decoder (video/image/picture sample decoder). The information decoder may include the entropy decoder 210, and the sample decoder may include at least one of the dequantizer 221, the inverse transformer 222, the adder 240, the filter 250, the memory 260, the inter predictor 232, and the intra predictor 231.

The dequantizer 221 may dequantize the quantized transform coefficients to output the transform coefficients. The dequantizer 221 may rearrange the quantized transform coefficients in a two-dimensional block form. In this case, the rearrangement may be performed based on a coefficient scan order performed by the encoding apparatus. The dequantizer 221 may perform dequantization for the quantized transform coefficients using a quantization parameter (e.g., quantization step size information), and acquire the transform coefficients.

The inverse transformer 222 inversely transforms the transform coefficients to acquire the residual signal (residual block, residual sample array).

The predictor 230 may perform prediction on the current block, and generate a predicted block including the prediction samples of the current block. The predictor may determine whether intra prediction is applied or inter prediction is applied to the current block based on the information about prediction output from the entropy decoder 210, and determine a specific intra/inter prediction mode.

The predictor may generate a predicted signal based on various prediction methods to be described later. For example, the predictor may not only apply the intra prediction or the inter prediction for prediction of one block, but also apply the intra prediction and the inter prediction at the same time. This may be called a combined inter and intra prediction (CIIP). Further, the predictor may be based on an intra block copy (IBC) prediction mode or a palette mode in order to perform prediction on a block. The IBC prediction mode or palette mode may be used for content image/video coding of a game or the like, such as screen content coding (SCC). The IBC basically performs prediction in a current picture, but it may be performed similarly to inter prediction in that it derives a reference block in a current picture. That is, the IBC may use at least one of inter prediction techniques described in this document. The palette mode may be regarded as an example of intra coding or intra prediction. When the palette mode is applied, information on a palette table and a palette index may be signaled by being included in the video/image information.

The intra predictor 231 may predict the current block with reference to the samples within the current picture. The referenced samples may be located neighboring to the current block according to the prediction mode, or may also be located away from the current block. The prediction modes in the intra prediction may include a plurality of non-directional modes and a plurality of directional modes. The intra predictor 231 may also determine the prediction mode applied to the current block using the prediction mode applied to the neighboring block.

The inter predictor 232 may induce the predicted block of the current block based on the reference block (reference sample array) specified by the motion vector on the reference picture. At this time, in order to decrease an amount of motion information transmitted in the inter prediction mode, the motion information may be predicted in units of a block, a sub-block, or a sample based on the correlation of the motion information between the neighboring block and the current block. The motion information may include a motion vector and a reference picture index. The motion information may further include inter prediction direction (L0 prediction, L1 prediction, Bi prediction, or the like) information. In the case of the inter prediction, the neighboring block may include a spatial neighboring block existing within the current picture and a temporal neighboring block existing in the reference picture. For example, the inter predictor 232 may configure a motion information candidate list based on the neighboring blocks, and derive the motion vector and/or the reference picture index of the current block based on received candidate selection information. The inter prediction may be performed based on various prediction modes, and the information about the prediction may include information indicating the mode of the inter prediction of the current block.

The adder 240 may add the acquired residual signal to the predicted signal (predicted block, prediction sample array) output from the predictor (including the inter predictor 232 and/or the intra predictor 231) to generate the reconstructed signal (reconstructed picture, reconstructed block, reconstructed sample array). As in the case where the skip mode is applied, if there is no residual for the block to be processed, the predicted block may be used as the reconstructed block.

The adder 240 may be called a reconstructor or a reconstructed block generator. The generated reconstructed signal may be used for the intra prediction of a next block to be processed within the current picture, and as described later, may also be output through filtering or may also be used for the inter prediction of a next picture.

Meanwhile, luma mapping with chroma scaling (LMCS) may also be applied in the picture decoding process.

The filter 250 may apply filtering to the reconstructed signal, thereby improving the subjective/objective image qualities. For example, the filter 250 may apply various filtering methods to the reconstructed picture to generate a modified reconstructed picture, and transmit the modified reconstructed picture to the memory 260, specifically, the DPB of the memory 260. Various filtering methods may include, for example, a deblocking filtering, a sample adaptive offset, an adaptive loop filter, a bidirectional filter, and the like.

The (modified) reconstructed picture stored in the DPB of the memory 260 may be used as the reference picture in the inter predictor 232. The memory 260 may store motion information of the block in which the motion information within the current picture is derived (decoded) and/or motion information of the blocks within the previously reconstructed picture. The stored motion information may be transferred to the inter predictor 260 so as to be utilized as motion information of the spatial neighboring block or motion information of the temporal neighboring block. The memory 260 may store the reconstructed samples of the reconstructed blocks within the current picture, and transfer the stored reconstructed samples to the intra predictor 231.

In this document, exemplary embodiments described in the filter 160, the inter predictor 121, and the intra predictor 122 of the encoding apparatus 100 may be applied equally to or to correspond to the filter 250, the inter predictor 232, and the intra predictor 231 of the decoding apparatus 200, respectively.

As described above, prediction is performed in order to increase compression efficiency in performing video coding. Through this, a predicted block including prediction samples for a current block, which is a coding target block, may be generated. Here, the predicted block includes prediction samples in a space domain (or pixel domain). The predicted block may be identically derived in the encoding apparatus and the decoding apparatus, and the encoding apparatus may increase image coding efficiency by signaling to the decoding apparatus not original sample value of an original block itself but information on residual (residual information) between the original block and the predicted block. The decoding apparatus may derive a residual block including residual samples based on the residual information, generate a reconstructed block including reconstructed samples by adding the residual block to the predicted block, and generate a reconstructed picture including reconstructed blocks.

The residual information may be generated through transform and quantization procedures. For example, the encoding apparatus may derive a residual block between the original block and the predicted block, derive transform coefficients by performing a transform procedure on residual samples (residual sample array) included in the residual block, and derive quantized transform coefficients by performing a quantization procedure on the transform coefficients, so that it may signal associated residual information to the decoding apparatus (through a bitstream). Here, the residual information may include value information, position information, a transform technique, transform kernel, a quantization parameter or the like of the quantized transform coefficients. The decoding apparatus may perform a quantization/dequantization procedure and derive the residual samples (or residual sample block), based on residual information. The decoding apparatus may generate a reconstructed block based on a predicted block and the residual block. The encoding apparatus may derive a residual block by dequantizing/inverse transforming quantized transform coefficients for reference for inter prediction of a next picture, and may generate a reconstructed picture based on this.

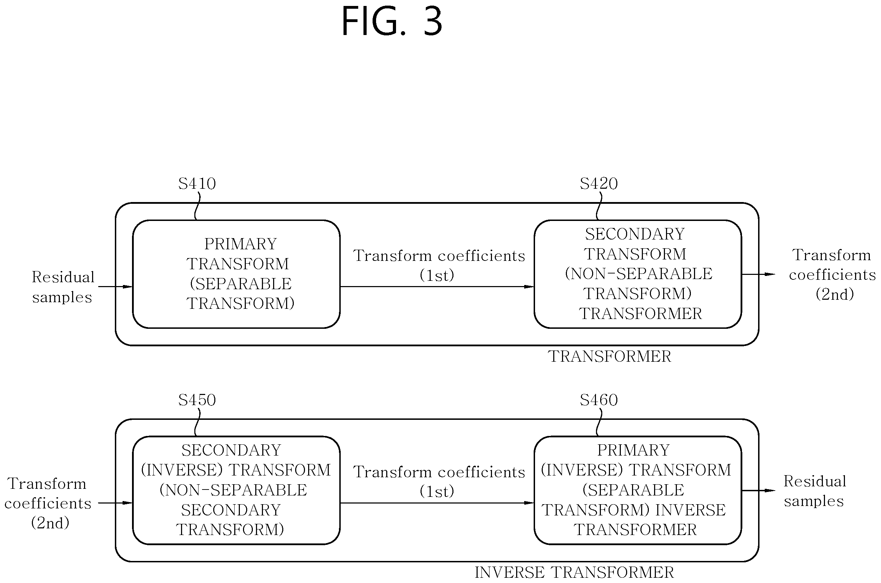

FIG. 3 schematically illustrates a multiple transform technique according to an embodiment of the present disclosure.

Referring to FIG. 3, a transformer may correspond to the transformer in the encoding apparatus of foregoing FIG. 1, and an inverse transformer may correspond to the inverse transformer in the encoding apparatus of foregoing FIG. 1, or to the inverse transformer in the decoding apparatus of FIG. 2.

The transformer may derive (primary) transform coefficients by performing a primary transform based on residual samples (residual sample array) in a residual block (S310). This primary transform may be referred to as a core transform. Herein, the primary transform may be based on multiple transform selection (MTS), and when a multiple transform is applied as the primary transform, it may be referred to as a multiple core transform.

The multiple core transform may represent a method of transforming additionally using discrete cosine transform (DCT) type 2 and discrete sine transform (DST) type 7, DCT type 8, and/or DST type 1. That is, the multiple core transform may represent a transform method of transforming a residual signal (or residual block) of a space domain into transform coefficients (or primary transform coefficients) of a frequency domain based on a plurality of transform kernels selected from among the DCT type 2, the DST type 7, the DCT type 8 and the DST type 1. Herein, the primary transform coefficients may be called temporary transform coefficients from the viewpoint of the transformer.

In other words, when the conventional transform method is applied, transform coefficients might be generated by applying transform from a space domain to a frequency domain for a residual signal (or residual block) based on the DCT type 2. Unlike to this, when the multiple core transform is applied, transform coefficients (or primary transform coefficients) may be generated by applying transform from a space domain to a frequency domain for a residual signal (or residual block) based on the DCT type 2, the DST type 7, the DCT type 8, and/or DST type 1. Herein, the DCT type 2, the DST type 7, the DCT type 8, and the DST type 1 may be called a transform type, transform kernel or transform core. These DCT/DST transform types can be defined based on basis functions.

When the multiple core transform is performed, a vertical transform kernel and a horizontal transform kernel for a target block may be selected from among the transform kernels, a vertical transform may be performed on the target block based on the vertical transform kernel, and a horizontal transform may be performed on the target block based on the horizontal transform kernel. Here, the horizontal transform may indicate a transform on horizontal components of the target block, and the vertical transform may indicate a transform on vertical components of the target block. The vertical transform kernel/horizontal transform kernel may be adaptively determined based on a prediction mode and/or a transform index for the target block (CU or subblock) including a residual block.

Further, according to an example, if the primary transform is performed by applying the MTS, a mapping relationship for transform kernels may be set by setting specific basis functions to predetermined values and combining basis functions to be applied in the vertical transform or the horizontal transform. For example, when the horizontal transform kernel is expressed as trTypeHor and the vertical direction transform kernel is expressed as trTypeVer, a trTypeHor or trTypeVer value of 0 may be set to DCT2, a trTypeHor or trTypeVer value of 1 may be set to DST7, and a trTypeHor or trTypeVer value of 2 may be set to DCT8.

In this case, MTS index information may be encoded and signaled to the decoding apparatus to indicate any one of a plurality of transform kernel sets. For example, an MTS index of 0 may indicate that both trTypeHor and trTypeVer values are 0, an MTS index of 1 may indicate that both trTypeHor and trTypeVer values are 1, an MTS index of 2 may indicate that the trTypeHor value is 2 and the trTypeVer value. Is 1, an MTS index of 3 may indicate that the trTypeHor value is 1 and the trTypeVer value is 2, and an MTS index of 4 may indicate that both trTypeHor and trTypeVer values are 2.

In one example, transform kernel sets according to MTS index information are illustrated in the following table.

[Table 1]

| tu_mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

The transformer may perform a secondary transform based on the (primary) transform coefficients to derive modified (secondary) transform coefficients (S320). The primary transform is a transform from a spatial domain to a frequency domain, and the secondary transform refers to transforming into a more compact expression using a correlation existing between (primary) transform coefficients. The secondary transform may include a non-separable transform. In this case, the secondary transform may be referred to as a non-separable secondary transform (NSST) or a mode-dependent non-separable secondary transform (MDNSST). The NSST may represent a transform that secondarily transforms (primary) transform coefficients derived through the primary transform based on a non-separable transform matrix to generate modified transform coefficients (or secondary transform coefficients) for a residual signal. Here, the transform may be applied at once without separating (or independently applying a horizontal/vertical transform) a vertical transform and a horizontal transform to the (primary) transform coefficients based on the non-separable transform matrix. In other words, the NSST is not separately applied to the (primary) transform coefficients in a vertical direction and a horizontal direction, and may represent, for example, a transform method of rearranging two-dimensional signals (transform coefficients) into a one-dimensional signal through a specific predetermined direction (e.g., row-first direction or column-first direction) and then generating modified transform coefficients (or secondary transform coefficients) based on the non-separable transform matrix. For example, a row-first order is to dispose in a line in order of a 1st row, a 2nd row,..., an Nth row for MxN blocks, and a column-first order is to dispose in a line in order of a 1st column, a 2nd column,..., an Mth column for MxN blocks. The NSST may be applied to a top-left region of a block (hereinafter, referred to as a transform coefficient block) configured with (primary) transform coefficients. For example, when both a width W and height H of the transform coefficient block are 8 or more, an 8×8 NSST may be applied to the top-left 8×8 region of the transform coefficient block. Further, while both the width (W) and height (H) of the transform coefficient block are 4 or more, when the width (W) or height (H) of the transform coefficient block is smaller than 8, 4×4 NSST may be applied to the top-left min(8,W)×min(8,H) region of the transform coefficient block. However, the embodiment is not limited thereto, and for example, even if only the condition that the width W or the height H of the transform coefficient block is 4 or greater is satisfied, the 4×4 NSST may be applied to the top-left end min(8,W)×min(8,H) region of the transform coefficient block.

Specifically, for example, if a 4x4 input block is used, the non-separable secondary transform may be performed as follows.

The 4x4 input block X may be represented as follows.

[Equation 1]

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

If the X is represented in the form of a vector, the vector $\vec{X}$ may be represented as below.

[Equation 2]

$$\vec{X} = [X_{00} \quad X_{01} \quad X_{02} \quad X_{03} \quad X_{10} \quad X_{11} \quad X_{12} \quad X_{13} \quad X_{20} \quad X_{21} \quad X_{22} \quad X_{23} \quad X_{30} \quad X_{31} \quad X_{32} \quad X_{33}]^T$$

In Equation 2, the vector $\vec{X}$ is a one-dimensional vector obtained by rearranging the two-dimensional block X of Equation 1 according to the row-first order.

In this case, the secondary non-separable transform may be calculated as below.

[Equation 3]

$$\vec{F} = T \cdot \vec{X}$$

In this equation, $\vec{F}$ represents a transform coefficient vector, and T represents a 16x16 (non-separable) transform matrix.

Through foregoing Equation 3, a 16x1 transform coefficient vector $\vec{F}$ may be derived, and the $\vec{F}$ may be re-organized into a 4x4 block through a scan order (horizontal, vertical, diagonal and the like). However, the above-described calculation is an example, and hypercube-Givens transform (HyGT) or the like may be used for the calculation of the non-separable secondary transform in order to reduce the computational complexity of the non-separable secondary transform.

Meanwhile, in the non-separable secondary transform, a transform kernel (or transform core, transform type) may be selected to be mode dependent. In this case, the mode may include the intra prediction mode and/or the inter prediction mode.

As described above, the non-separable secondary transform may be performed based on an 8x8 transform or a 4x4 transform determined based on the width (W) and the height (H) of the transform coefficient block. The 8x8 transform refers to a transform that is applicable to an 8x8 region included in the transform coefficient block when both W and H are equal to or greater than 8, and the 8x8 region may be a top-left 8x8 region in the transform coefficient block. Similarly, the 4x4 transform refers to a transform that is applicable to a 4x4 region included in the transform coefficient block when both W and H are equal to or greater than 4, and the 4x4 region may be a top-left 4x4 region in the transform coefficient block.. For example, an 8x8 transform kernel matrix may be a 64x64/16x64 matrix, and a 4x4 transform kernel matrix may be a 16x16/8x16 matrix.

Here, to select a mode-dependent transform kernel, two non-separable secondary transform kernels per transform set for a non-separable secondary transform may be configured for both the 8 × 8 transform and the 4 × 4 transform, and there may be four transform sets. That is, four transform sets may be configured for the 8 × 8 transform, and four transform sets may be configured for the 4 × 4 transform. In this case, each of the four transform sets for the 8 × 8 transform may include two $8 \times 8$ transform kernels, and each of the four transform sets for the $4 \times 4$ transform may include two $4 \times 4$ transform kernels.

However, as the size of the transform, that is, the size of a region to which the transform is applied, may be, for example, a size other than $8 \times 8$ or $4 \times 4$, the number of sets may be n, and the number of transform kernels in each set may be k.

The transform set may be referred to as an NSST set or an LFNST set. A specific set among the transform sets may be selected, for example, based on the intra prediction mode of the current block (CU or subblock). A low-frequency non-separable transform (LFNST) may be an example of a reduced non-separable transform, which will be described later, and represents a non-separable transform for a low frequency component.

For reference, for example, the intra prediction mode may include two non-directional (or non-angular) intra prediction modes and 65 directional (or angular) intra prediction modes. The non-directional intra prediction modes may include a planar intra prediction mode of No. 0 and a DC intra prediction mode of No. 1, and the directional intra prediction modes may include 65 intra prediction modes of Nos. 2 to 66. However, this is an example, and this document may be applied even when the number of intra prediction modes is different. Meanwhile, in some cases, intra prediction mode No. 67 may be further used, and the intra prediction mode No. 67 may represent a linear model (LM) mode.

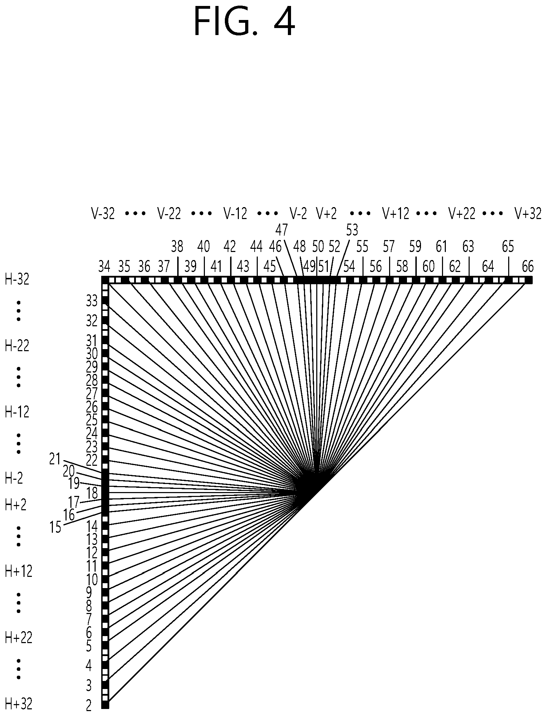

FIG. 4 exemplarily shows intra directional modes of 65 prediction directions.

Referring to FIG. 4, on the basis of intra prediction mode 34 having a left upward diagonal prediction direction, the intra prediction modes may be divided into intra prediction modes having horizontal directionality and intra prediction modes having vertical directionality. In FIG. 4, H and V denote horizontal directionality and vertical directionality, respectively, and numerals -32 to 32 indicate displacements in 1/32 units on a sample grid position. These numerals may represent an offset for a mode index value. Intra prediction modes 2 to 33 have the horizontal directionality, and intra prediction modes 34 to 66 have the vertical directionality. Strictly speaking, intra prediction mode 34 may be considered as being neither horizontal nor vertical, but may be classified as belonging to the horizontal directionality in determining a transform set of a secondary transform. This is because input data is transposed to be used for a vertical direction mode symmetrical on the basis of intra prediction mode 34, and an input data alignment method for a horizontal mode is used for intra prediction mode 34. Transposing input data means that rows and columns of two-dimensional $M \times N$ block data are switched into $N \times M$ data. Intra prediction mode 18 and intra prediction mode 50 may represent a horizontal intra prediction mode and a vertical intra prediction mode, respectively, and intra prediction mode 2 may be referred to as a right upward diagonal intra prediction mode because intra prediction mode 2 has a left reference pixel and performs prediction in a right upward direction. Likewise, intra prediction mode 34 may be referred to as a right downward diagonal intra prediction mode, and intra prediction mode 66 may be referred to as a left downward diagonal intra prediction mode.

According to an example, the four transform sets according to the intra prediction mode may be mapped, for example, as shown in the following table.

[Table 2]

| lfnstPredModeIntra | lfnstTrSetIdx |
|---|---|
| lfnstPredModeIntra < 0 | 1 |
| 0 <= lfnstPredModeIntra <= 1 | 0 |
| 2 <= lfnstPredModeIntra <= 12 | 1 |
| 13 <= lfnstPredModeIntra <= 23 | 2 |
| 24 <= lfnstPredModeIntra <= 44 | 3 |
| 45 <= lfnstPredModeIntra <= 55 | 2 |
| 56 <= lfnstPredModeIntra <= 80 | 1 |
| 81 <= lfnstPredModeIntra <= 83 | 0 |

As shown in Table 2, any one of the four transform sets, that is, lfnstTrSetIdx, may be mapped to any one of four indexes, that is, 0 to 3, according to the intra prediction mode.

When it is determined that a specific set is used for the non-separable transform, one of k transform kernels in the specific set may be selected through a non-separable secondary transform index. An encoding apparatus may derive a non-separable secondary transform index indicating a specific transform kernel based on a rate-distortion (RD) check and may signal the non-separable secondary transform index to a decoding apparatus. The decoding apparatus may select one of the k transform kernels in the specific set based on the non-separable secondary transform index. For example, lfnst index value 0 may refer to a first non-separable secondary transform kernel, lfnst index value 1 may refer to a second non-separable secondary transform kernel, and lfnst index value 2 may refer to a third non-separable secondary transform kernel. Alternatively, lfnst index value 0 may indicate that the first non-separable secondary transform is not applied to the target block, and lfnst index values 1 to 3 may indicate the three transform kernels.

The transformer may perform the non-separable secondary transform based on the selected transform kernels, and may obtain modified (secondary) transform coefficients. As described above, the modified transform coefficients may be derived as transform coefficients quantized through the quantizer, and may be encoded and signaled to the decoding apparatus and transferred to the dequantizer/inverse transformer in the encoding apparatus.

Meanwhile, as described above, if the secondary transform is omitted, (primary) transform coefficients, which are an output of the primary (separable) transform, may be derived as transform coefficients quantized through the quantizer as described above, and may be encoded and signaled to the decoding apparatus and transferred to the dequantizer/inverse transformer in the encoding apparatus.

The inverse transformer may perform a series of procedures in the inverse order to that in which they have been performed in the above-described transformer. The inverse transformer may receive (dequantized) transformer coefficients, and derive (primary) transform coefficients by performing a secondary (inverse) transform (S350), and may obtain a residual block (residual samples) by performing a primary (inverse) transform on the (primary) transform coefficients (S360). In this connection, the primary transform coefficients may be called modified transform coefficients from the viewpoint of the inverse transformer. As described above, the encoding apparatus and the decoding apparatus may generate the reconstructed block based on the residual block and the predicted block, and may generate the reconstructed picture based on the reconstructed block.

The decoding apparatus may further include a secondary inverse transform application determinator (or an element to determine whether to apply a secondary inverse transform) and a secondary inverse transform determinator (or an element to determine a secondary inverse transform). The secondary inverse transform application determinator may determine whether to apply a secondary inverse transform. For example, the secondary inverse transform may be an NSST, an RST, or an LFNST and the secondary inverse transform application determinator may determine whether to apply the secondary inverse transform based on a secondary transform flag obtained by parsing the bitstream. In another example, the secondary inverse transform application determinator may determine whether to apply the secondary inverse transform based on a transform coefficient of a residual block.

The secondary inverse transform determinator may determine a secondary inverse transform. In this case, the secondary inverse transform determinator may determine the secondary inverse transform applied to the current block based on an LFNST (NSST or RST) transform set specified according to an intra prediction mode. In an embodiment, a secondary transform determination method may be determined depending on a primary transform determination method. Various combinations of primary transforms and secondary transforms may be determined according to the intra prediction mode. Further, in an example, the secondary inverse transform determinator may determine a region to which a secondary inverse transform is applied based on the size of the current block.

Meanwhile, as described above, if the secondary (inverse) transform is omitted, (dequantized) transform coefficients may be received, the primary (separable) inverse transform may be performed, and the residual block (residual samples) may be obtained. As described above, the encoding apparatus and the decoding apparatus may generate the reconstructed block based on the residual block and the predicted block, and may generate the reconstructed picture based on the reconstructed block.

Meanwhile, in the present disclosure, a reduced secondary transform (RST) in which the size of a transform matrix (kernel) is reduced may be applied in the concept of NSST in order to reduce the amount of computation and memory required for the non-separable secondary transform.

Meanwhile, the transform kernel, the transform matrix, and the coefficient constituting the transform kernel matrix, that is, the kernel coefficient or the matrix coefficient, described in the present disclosure may be expressed in 8 bits. This may be a condition for implementation in the decoding apparatus and the encoding apparatus, and may reduce the amount of memory required to store the transform kernel with a performance degradation that can be reasonably accommodated compared to the existing 9 bits or 10 bits. In addition, the expressing of the kernel matrix in 8 bits may allow a small multiplier to be used, and may be more suitable for single instruction multiple data (SIMD) instructions used for optimal software implementation.

In the present specification, the term "RST" may mean a transform which is performed on residual samples for a target block based on a transform matrix whose size is reduced according to a reduced factor. In the case of performing the reduced transform, the amount of computation required for transform may be reduced due to a reduction in the size of the transform matrix. That is, the RST may be used to address the computational complexity issue occurring at the non-separable transform or the transform of a block of a great size.

RST may be referred to as various terms, such as reduced transform, reduced secondary transform, reduction transform, simplified transform, simple transform, and the like, and the name which RST may be referred to as is not limited to the listed examples. Alternatively, since the RST is mainly performed in a low frequency region including a non-zero coefficient in a transform block, it may be referred to as a Low-Frequency Non-Separable Transform (LFNST).

The transform index may be referred to as an LFNST index.

Meanwhile, when the secondary inverse transform is performed based on RST, the inverse transformer 235 of the encoding apparatus 100 and the inverse transformer 222 of the decoding apparatus 200 may include an inverse reduced secondary transformer which derives modified transform coefficients based on the inverse RST of the transform coefficients, and an inverse primary transformer which derives residual samples for the target block based on the inverse primary transform of the modified transform coefficients. The inverse primary transform refers to the inverse transform of the primary transform applied to the residual. In the present disclosure, deriving a transform coefficient based on a transform may refer to deriving a transform coefficient by applying the transform.

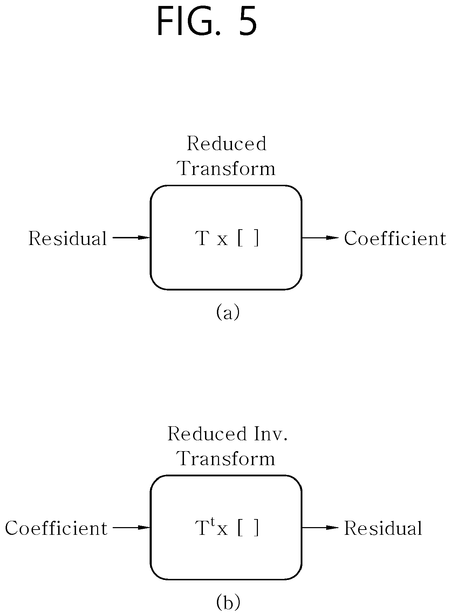

FIG. 5 is a diagram illustrating an RST according to an embodiment of the present disclosure.

In the present disclosure, a "target block" may refer to a current block to be coded, a residual block, or a transform block.

In the RST according to an example, an N-dimensional vector may be mapped to an R-dimensional vector located in another space, so that the reduced transform matrix may be determined, where R is less than N. N may mean the square of the length of a side of a block to which the transform is applied, or the total number of transform coefficients corresponding to a block to which the transform is applied, and the reduced factor may mean an R/N value. The reduced factor may be referred to as a reduced factor, reduction factor, simplified factor, simple factor or other various terms. Meanwhile, R may be referred to as a reduced coefficient, but according to circumstances, the reduced factor may mean R. Further, according to circumstances, the reduced factor may mean the N/R value.

In an example, the reduced factor or the reduced coefficient may be signaled through a bitstream, but the example is not limited to this. For example, a predefined value for the reduced factor or the reduced coefficient may be stored in each of the encoding apparatus 100 and the decoding apparatus 200, and in this case, the reduced factor or the reduced coefficient may not be signaled separately.

The size of the reduced transform matrix according to an example may be RxN less than N × N, the size of a conventional transform matrix, and may be defined as in Equation 4 below.

[Equation 4]

$$T_{RxN} = \begin{bmatrix} t_{11} & t_{12} & t_{13} & \cdots & t_{1N} \\ t_{21} & t_{22} & t_{23} & & t_{2N} \\ & \vdots & & \ddots & \vdots \\ t_{R1} & t_{R2} & t_{R3} & \cdots & t_{RN} \end{bmatrix}$$

The matrix T in the Reduced Transform block shown in (a) of FIG. 5 may mean the matrix $T_{R \times N}$ of Equation 4. As shown in (a) of FIG. 5, when the reduced transform matrix $T_{R \times N}$ is multiplied to residual samples for the target block, transform coefficients for the target block may be derived.

In an example, if the size of the block to which the transform is applied is 8x8 and R =16 (i.e., R/N = 16/64 = 1/4), then the RST according to (a) of FIG. 5 may be expressed as a matrix operation as shown in Equation 5 below. In this case, memory and multiplication calculation can be reduced to approximately 1/4 by the reduced factor.

In the present disclosure, a matrix operation may be understood as an operation of multiplying a column vector by a matrix, disposed on the left of the column vector, to obtain a column vector.

[Equation 5]

$$\begin{bmatrix} t_{1,1} & t_{1,2} & t_{1,3} & \cdots & t_{1,64} \\ t_{2,1} & t_{2,2} & t_{2,3} & & t_{2,64} \\ & \vdots & & \ddots & \vdots \\ t_{16,1} & t_{16,2} & t_{16,3} & \cdots & t_{16,64} \end{bmatrix} \times \begin{bmatrix} r_1 \\ r_2 \\ \vdots \\ r_{64} \end{bmatrix}$$

In Equation 5, $r_1$ to $r_{64}$ may represent residual samples for the target block and may be specifically transform coefficients generated by applying a primary transform. As a result of the calculation of Equation 5 transform coefficients ci for the target block may be derived, and a process of deriving ci may be as in Equation 6.

[Equation 6]

$$\text{for i from to R:}$$
$$c_i = 0$$
$$\text{for j from 1 to N}$$
$$c_i \mathrel{+}= t_{ij} * r_j$$

As a result of the calculation of Equation 6, transform coefficients $c_1$ to $c_R$ for the target block may be derived. That is, when R=16, transform coefficients $c_1$ to $c_{16}$ for the target block may be derived. If, instead of RST, a regular transform is applied and a transform matrix of 64x64 (N $\times$ N) size is multiplied to residual samples of 64x1 (N$\times$1) size, then only 16 (R) transform coefficients are derived for the target block because RST was applied, although 64 (N) transform coefficients are derived for the target block. Since the total number of transform coefficients for the target block is reduced from N to R, the amount of data transmitted by the encoding apparatus 100 to the decoding apparatus 200 decreases, so efficiency of transmission between the encoding apparatus 100 and the decoding apparatus 200 can be improved.

When considered from the viewpoint of the size of the transform matrix, the size of the regular transform matrix is 64x64 (N $\times$ N), but the size of the reduced transform matrix is reduced to 16x64 (RxN), so memory usage in a case of performing the RST can be reduced by an R/N ratio when compared with a case of performing the regular transform. In addition, when compared to the number of multiplication calculations N $\times$ N in a case of using the regular transform matrix, the use of the reduced transform matrix can reduce the number of multiplication calculations by the R/N ratio (R$\times$N).

In an example, the transformer 132 of the encoding apparatus 100 may derive transform coefficients for the target block by performing the primary transform and the RST-based secondary transform on residual samples for the target block. These transform coefficients may be transferred to the inverse transformer of the decoding apparatus 200, and the inverse transformer 222 of the decoding apparatus 200 may derive the modified transform coefficients based on the inverse reduced secondary transform (RST) for the transform coefficients, and may derive residual samples for the target block based on the inverse primary transform for the modified transform coefficients.

The size of the inverse RST matrix $T_{N \times R}$ according to an example is NxR less than the size N $\times$ N of the regular inverse transform matrix, and is in a transpose relationship with the reduced transform matrix $T_{R \times N}$ shown in Equation 4.

The matrix $T^t$ in the Reduced Inv. Transform block shown in (b) of FIG. 5 may mean the inverse RST matrix $T_{R \times N}{}^{T}$ (the superscript T means transpose). When the inverse RST matrix $T_{R \times N}{}^{T}$ is multiplied to the transform coefficients for the target block as shown in (b) of FIG. 5, the modified transform coefficients for the target block or the residual samples for the current block may be derived. The inverse RST matrix $T_{R \times N}{}^{T}$ may be expressed as $(T_{R \times N})^{T}{}_{N \times R}$.

More specifically, when the inverse RST is applied as the secondary inverse transform, the modified transform coefficients for the target block may be derived when the inverse RST matrix $T_{R \times N}{}^{T}$ is multiplied to the transform coefficients for the target block. Meanwhile, the inverse RST may be applied as the inverse primary transform, and in this case, the residual samples for the target block may be derived when the inverse RST matrix $T_{R \times N}{}^{T}$ is multiplied to the transform coefficients for the target block.

In an example, if the size of the block to which the inverse transform is applied is 8x8 and R =16 (i.e., R/N = 16/64 = 1/4), then the RST according to (b) of FIG. 5 may be expressed as a matrix operation as shown in Equation 7 below.

[Equation 7]

$$\begin{bmatrix} t_{1,1} & t_{2,1} & & t_{16,1} \\ t_{1,2} & t_{2,2} & & t_{16,2} \\ t_{1,3} & t_{2,3} & \cdots & t_{16,3} \\ \vdots & \vdots & & \vdots \\ & & \ddots & \vdots \\ t_{1,64} & t_{2,64} & \cdots & t_{16,64} \end{bmatrix} \times \begin{bmatrix} c_1 \\ c_2 \\ \vdots \\ c_{16} \end{bmatrix}$$

In Equation 7, $c_1$ to $c_{16}$ may represent the transform coefficients for the target block. As a result of the calculation of Equation 7, $r_i$ representing the modified transform coefficients for the target block or the residual samples for the target block may be derived, and the process of deriving $r_i$ may be as in Equation 8.

[Equation 8]

$$\begin{aligned} &\text{For } i \text{ from } 1 \text{ to } N \\ &\quad r_i = 0 \\ &\quad \text{for } j \text{ from } 1 \text{ to } R \\ &\quad\quad r_i \mathrel{+}= t_{ji} * c_j \end{aligned}$$

As a result of the calculation of Equation 8, $r_1$ to $r_N$ representing the modified transform coefficients for the target block or the residual samples for the target block may be derived. When considered from the viewpoint of the size of the inverse transform matrix, the size of the regular inverse transform matrix is 64x64 (NxN), but the size of the reduced inverse transform matrix is reduced to 64x16 (RxN), so memory usage in a case of performing the inverse RST can be reduced by an R/N ratio when compared with a case of performing the regular inverse transform. In addition, when compared to the number of multiplication calculations N $\times$ N in a case of using the regular inverse transform matrix, the use of the reduced inverse transform matrix can reduce the number of multiplication calculations by the R/N ratio (NxR).

A transform set configuration shown in Table 2 may also be applied to an 8 $\times$ 8 RST. That is, the 8 $\times$ 8 RST may be applied according to a transform set in Table 2. Since one transform set includes two or three transforms (kernels) according to an intra prediction mode, it may be configured to select one of up to four transforms including that in a case where no secondary transform is applied. In a transform where no secondary transform is applied, it may be considered to apply an identity matrix. Assuming that indexes 0, 1, 2, and 3 are respectively assigned to the four transforms (e.g., index 0 may be allocated to a case where an identity matrix is applied, that is, a case where no secondary transform is applied), a transform index or an lfnst index as a syntax element may be signaled for each transform coefficient block, thereby designating a transform to be applied. That is, for a top-left 8 $\times$ 8 block, through the transform index, it is possible to designate an 8 $\times$ 8 RST in an RST configuration, or to designate an 8 $\times$ 8 lfnst when the LFNST is applied. The 8 $\times$ 8 lfnst and the 8 $\times$ 8 RST refer to transforms applicable to an 8 $\times$ 8 region included in the transform coefficient block when both W and H of the target block to be transformed are equal to or greater than 8, and the 8 $\times$ 8 region may be a top-left 8 $\times$ 8 region in the transform coefficient block. Similarly, a 4 $\times$ 4 lfnst and a 4 $\times$ 4 RST refer to transforms applicable to a 4 $\times$ 4 region included in the transform coefficient block when both W and H of the target block to are equal to or greater than 4, and the 4 $\times$ 4 region may be a top-left 4 $\times$ 4 region in the transform coefficient block.

According to an embodiment of the present disclosure, for a transform in an encoding process, only 48 pieces of data may be selected and a maximum 16 $\times$ 48 transform kernel matrix may be applied thereto, rather than applying a 16 $\times$ 64 transform kernel matrix to 64 pieces of data forming an 8 $\times$ 8 region. Here, "maximum" means that m has a maximum value of 16 in an m $\times$ 48 transform kernel matrix for generating m coefficients. That is, when an RST is performed by applying an m $\times$ 48 transform kernel matrix (m $\leq$ 16) to an 8 $\times$ 8 region, 48 pieces of data are input and m coefficients are generated. When m is 16, 48 pieces of data are input and 16 coefficients are generated. That is, assuming that 48 pieces of data form a 48×1 vector, a 16×48 matrix and a 48×1 vector are sequentially multiplied, thereby generating a 16×1 vector. Here, the 48 pieces of data forming the 8 × 8 region may be properly arranged, thereby forming the 48 × 1 vector. For example, a 48 × 1 vector may be constructed based on 48 pieces of data constituting a region excluding the bottom right 4 × 4 region among the 8 × 8 regions. Here, when a matrix operation is performed by applying a maximum 16 × 48 transform kernel matrix, 16 modified transform coefficients are generated, and the 16 modified transform coefficients may be arranged in a top-left 4 × 4 region according to a scanning order, and a top-right 4 × 4 region and a bottom-left 4 × 4 region may be filled with zeros.

For an inverse transform in a decoding process, the transposed matrix of the foregoing transform kernel matrix may be used. That is, when an inverse RST or LFNST is performed in the inverse transform process performed by the decoding apparatus, input coefficient data to which the inverse RST is applied is configured in a one-dimensional vector according to a predetermined arrangement order, and a modified coefficient vector obtained by multiplying the one-dimensional vector and a corresponding inverse RST matrix on the left of the one-dimensional vector may be arranged in a two-dimensional block according to a predetermined arrangement order.

In summary, in the transform process, when an RST or LFNST is applied to an 8 × 8 region, a matrix operation of 48 transform coefficients in top-left, top-right, and bottom-left regions of the 8 × 8 region excluding the bottom-right region among transform coefficients in the 8 × 8 region and a 16 × 48 transform kernel matrix. For the matrix operation, the 48 transform coefficients are input in a one-dimensional array. When the matrix operation is performed, 16 modified transform coefficients are derived, and the modified transform coefficients may be arranged in the top-left region of the 8 x 8 region.

On the contrary, in the inverse transform process, when an inverse RST or LFNST is applied to an 8 × 8 region, 16 transform coefficients corresponding to a top-left region of the 8 × 8 region among transform coefficients in the 8 × 8 region may be input in a one-dimensional array according to a scanning order and may be subjected to a matrix operation with a 48 × 16 transform kernel matrix. That is, the matrix operation may be expressed as (48 × 16 matrix) * (16 × 1 transform coefficient vector) = (48 × 1 modified transform coefficient vector). Here, an n × 1 vector may be interpreted to have the same meaning as an n × 1 matrix and may thus be expressed as an n×1 column vector. Further, * denotes matrix multiplication. When the matrix operation is performed, 48 modified transform coefficients may be derived, and the 48 modified transform coefficients may be arranged in top-left, top-right, and bottom-left regions of the 8x8 region excluding a bottom-right region.

When a secondary inverse transform is based on an RST, the inverse transformer 135 of the encoding apparatus 100 and the inverse transformer 222 of the decoding apparatus 200 may include an inverse reduced secondary transformer to derive modified transform coefficients based on an inverse RST on transform coefficients and an inverse primary transformer to derive residual samples for the target block based on an inverse primary transform on the modified transform coefficients. The inverse primary transform refers to the inverse transform of a primary transform applied to a residual. In the present disclosure, deriving a transform coefficient based on a transform may refer to deriving the transform coefficient by applying the transform.

The above-described non-separated transform, the LFNST, will be described in detail as follows. The LFNST may include a forward transform by the encoding apparatus and an inverse transform by the decoding apparatus.

The encoding apparatus receives a result (or a part of a result) derived after applying a primary (core) transform as an input, and applies a forward secondary transform (secondary transform).

[Equation 9]

$$y = G^T x$$

In Equation 9, x and y are inputs and outputs of the secondary transform, respectively, and G is a matrix representing the secondary transform, and transform basis vectors are composed of column vectors. In the case of an inverse LFNST, when the dimension of the transformation matrix G is expressed as [ number of rows x number of columns ], in the case of an forward LFNST, the transposition of matrix G becomes the dimension of $G^T$.

For the inverse LFNST, the dimensions of matrix G are [ 48 × 16], [ 48 × 8 ], [ 16 × 16 ], [16 × 8 ], and the [ 48 × 8 ] matrix and the [ 16 × 8 ] matrix are partial matrices that sampled 8 transform basis vectors from the left of the [ 48 × 16 ] matrix and the [ 16 × 16 ] matrix, respectively.

On the other hand, for the forward LFNST, the dimensions of matrix $G^T$ are [ 16 × 48 ], [ 8 × 48 ], [ 16 × 16 ], [ 8 × 16 ], and the [ 8 × 48 ] matrix and the [ 8 × 16 ] matrix are partial matrices obtained by sampling 8 transform basis vectors from the top of the [16 × 48 ] matrix and the [ 16 × 16 ] matrix, respectively.

Therefore, in the case of the forward LFNST, a [ 48 × 1 ] vector or [ 16 × 1 ] vector is possible as an input x, and a [ 16 × 1 ] vector or a [ 8 × 1 ] vector is possible as an output y. In video coding and decoding, the output of the forward primary transform is two-dimensional (2D) data, so to construct the [ 48 × 1 ] vector or the [ 16 × 1 ] vector as the input x, a one-dimensional vector must be constructed by properly arranging the 2D data that is the output of the forward transformation.

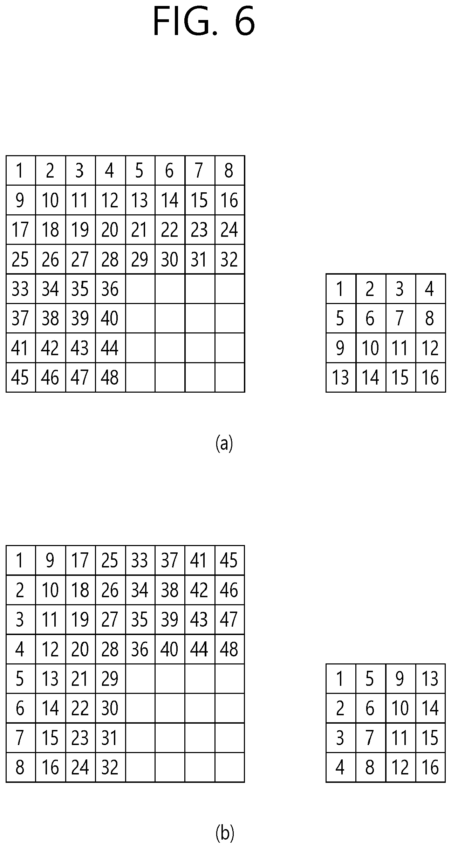

FIG. 6 is a diagram illustrating a sequence of arranging output data of a forward primary transformation into a one-dimensional vector according to an example. The left diagrams of (a) and (b) of FIG. 6 show the sequence for constructing a [ 48 × 1 ] vector, and the right diagrams of (a) and (b) of FIG. 6 shows the sequence for constructing a [ 16 × 1 ] vector. In the case of the LFNST, a one-dimensional vector x can be obtained by sequentially arranging 2D data in the same order as in (a) and (b) of FIG. 6.

The arrangement direction of the output data of the forward primary transform may be determined according to an intra prediction mode of the current block. For example, when the intra prediction mode of the current block is in the horizontal direction with respect to the diagonal direction, the output data of the forward primary transform may be arranged in the order of (a) of FIG. 6, and when the intra prediction mode of the current block is in the vertical direction with respect to the diagonal direction, the output data of the forward primary transform may be arranged in the order of (b) of FIG. 6.

According to an example, an arrangement order different from the arrangement orders of (a) and (b) FIG. 6 may be applied, and in order to derive the same result (y vector) as when the arrangement orders of (a) and (b) FIG. 6 is applied, the column vectors of the matrix G may be rearranged according to the arrangement order. That is, it is possible to rearrange the column vectors of G so that each element constituting the x vector is always multiplied by the same transform basis vector.

Since the output y derived through Equation 9 is a one-dimensional vector, when two-dimensional data is required as input data in the process of using the result of the forward secondary transformation as an input, for example, in the process of performing quantization or residual coding, the output y vector of Equation 9 must be properly arranged as 2D data again.

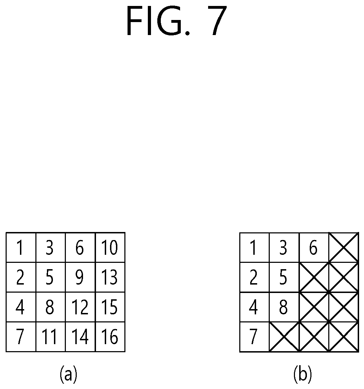

FIG. 7 is a diagram illustrating a sequence of arranging output data of a forward secondary transform into a two-dimensional block according to an example.

In the case of the LFNST, output values may be arranged in a 2D block according to a predetermined scan order. (a) of FIG. 7 shows that when the output y is a [ 16 × 1 ] vector, the output values are arranged at 16 positions of the 2D block according to a diagonal scan order. (b) of FIG. 7 shows that when the output y is a [8 × 1] vector, the output values are arranged at 8 positions of the 2D block according to the diagonal scan order, and the remaining 8 positions are filled with zeros. X in (b) of FIG. 7 indicates that it is filled with zero.

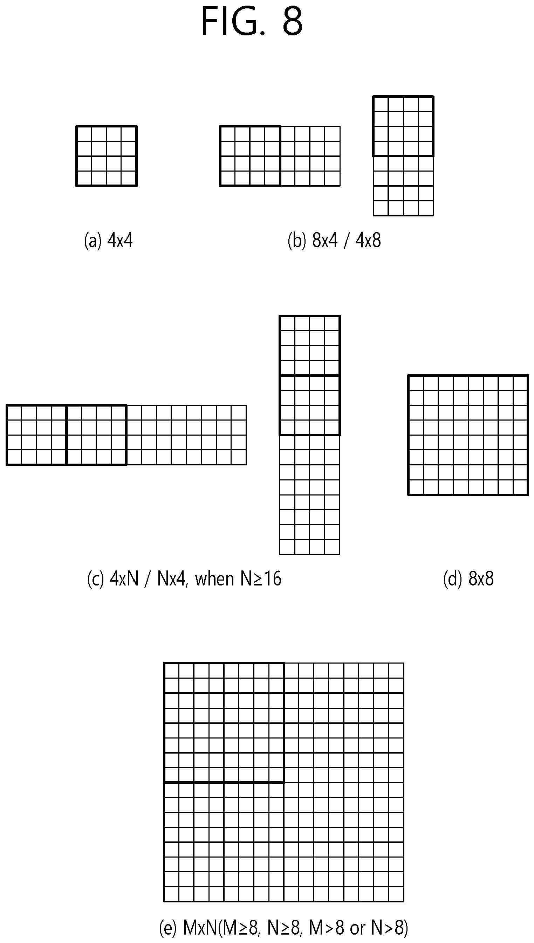

According to another example, since the order in which the output vector y is processed in performing quantization or residual coding may be preset, the output vector y may not be arranged in the 2D block as shown in FIG. 7. However, in the case of the residual coding, data coding may be performed in 2D block (e.g., 4x4) units such as CG (Coefficient Group), and in this case, the data are arranged according to a specific order as in the diagonal scan order of FIG. 8.

Meanwhile, the decoding apparatus may configure the one-dimensional input vector y by arranging two-dimensional data output through a dequantization process or the like according to a preset scan order for the inverse transformation. The input vector y may be output as the output vector x by the following equation.

$$[\text{Equation 10}]$$

$$x = Gy$$

In the case of the inverse LFNST, an output vector x can be derived by multiplying an input vector y, which is a [16 × 1] vector or a [8 × 1] vector, by a G matrix. For the inverse LFNST, the output vector x can be either a [ 48 × 1 ] vector or a [ 16 × 1 ] vector.

The output vector x is arranged in a two-dimensional block according to the order shown in FIG. 6 and is arranged as two-dimensional data, and this two-dimensional data becomes input data (or a part of input data) of the inverse primary transformation.

Accordingly, the inverse secondary transformation is the opposite of the forward secondary transformation process as a whole, and in the case of the inverse transformation, unlike in the forward direction, the inverse secondary transformation is first applied, and then the inverse primary transformation is applied.

In the inverse LFNST, one of 8 [ 48 × 16 ] matrices and 8 [ 16 × 16 ] matrices may be selected as the transformation matrix G. Whether to apply the [ 48 × 16 ] matrix or the [ 16 × 16 ] matrix depends on the size and shape of the block.

In addition, 8 matrices may be derived from four transform sets as shown in Table 2 above, and each transform set may consist of two matrices. Which transform set to use among the 4 transform sets is determined according to the intra prediction mode, and more specifically, the transform set is determined based on the value of the intra prediction mode extended by considering the Wide Angle Intra Prediction (WAIP). Which matrix to select from among the two matrices constituting the selected transform set is derived through index signaling. More specifically, 0, 1, and 2 are possible as the transmitted index value, 0 may indicate that the LFNST is not applied, and 1 and 2 may indicate any one of two transform matrices constituting a transform set selected based on the intra prediction mode value.

Meanwhile, as described above, which transform matrix of the [48 × 16] matrix and the [16 × 16] matrix is applied to the LFNST is determined by the size and shape of the transform target block.

FIG. 8 is a diagram illustrating a block shape to which the LFNST is applied. (a) of FIG. 8 shows 4 × 4 blocks, (b) shows 4 × 8 and 8 × 4 blocks, (c) shows 4 × N or N × 4 blocks in which N is 16 or more, (d) shows 8 × 8 blocks, (e) shows M × N blocks where M ≥ 8, N ≥ 8, and N > 8 or M > 8.

In FIG. 8, blocks with thick borders indicate regions to which the LFNST is applied. For the blocks of (a) and (b) of FIG.8, the LFNST is applied to the top-left 4x4 region, and for the block of (c) of FIG. 8, the LFNST is applied individually the two top-left 4x4 regions are continuously arranged. In (a), (b), and (c) of FIG. 8, since the LFNST is applied in units of 4x4 regions, this LFNST will be hereinafter referred to as "4x4 LFNST". Based on the matrix dimension for G, a [ 16 × 16 ] or [ 16 × 8 ] matrix may be applied.

More specifically, the [16 × 8] matrix is applied to the 4x4 block (4x4 TU or 4x4 CU) of (a) of FIG. 8 and the [ 16 × 16 ] matrix is applied to the blocks in (b) and (c) of FIG. 8. This is to adjust the computational complexity for the worst case to 8 multiplications per sample.

With respect to (d) and (e) of FIG. 8, the LFNST is applied to the top-left 8x8 region, and this LFNST is hereinafter referred to as "8x8 LFNST". As a corresponding transformation matrix, a [ 48 × 16 ] matrix or [ 48 × 8 ] matrix may be applied. In the case of the forward LFNST, since the [48 × 1] vector (x vector in Equation 9) is input as input data, all sample values of the top-left 8x8 region are not used as input values of the forward LFNST. That is, as can be seen in the left order of (a) of FIG. 6 or the left order of (b) of FIG. 6, the [48 × 1 ] vector may be constructed based on samples belonging to the remaining 3 4x4 blocks while leaving the bottom-right 4x4 block as it is.

The [ 48 × 8 ] matrix may be applied to an 8×8 block (8×8 TU or 8×8 CU) in (d) of FIG. 8, and the [48×16] matrix may be applied to the 8×8 block in (e) of FIG. 8. This is also to adjust the computational complexity for the worst case to 8 multiplications per sample.

Depending on the block shape, when the corresponding forward LFNST (4x4 LFNST or 8x8 LFNST) is applied, 8 or 16 output data (y vector in Equation 9, [ 8 × 1 ] or [ 16 × 1 ] vector) is generated. In the forward LFNST, the number of output data is equal to or less than the number of input data due to the characteristics of the matrix GT.

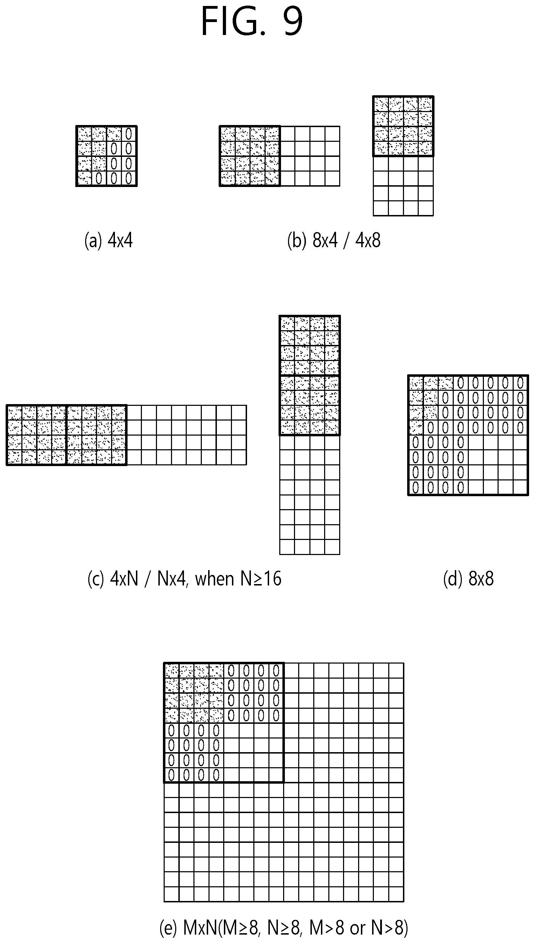

FIG. 9 is a diagram illustrating an arrangement of output data of a forward LFNST according to an example, and shows a block in which output data of the forward LFNST is arranged according to a block shape.

The shaded area at the top-left of the block shown in FIG. 9 corresponds to the area where the output data of the forward LFNST is located, the positions marked with 0 indicate samples filled with 0 values, and the remaining area represents regions that are not changed by the forward LFNST. In the area not changed by the LFNST, the output data of the forward primary transform remains unchanged.

As described above, since the dimension of the transform matrix applied varies according to the shape of the block, the number of output data also varies. As FIG. 9, the output data of the forward LFNST may not completely fill the top-left 4x4 block. In the case of (a) and (d) of FIG. 9, a [ 16 × 8 ] matrix and a [ 48 × 8 ] matrix are applied to the block indicated by a thick line or a partial region inside the block, respectively, and a [ 8 × 1 ] vector as the output of the forward LFNST is generated. That is, according to the scan order shown in (b) of FIG. 7, only 8 output data may be filled as shown in (a) and (d) of FIG. 9, and 0 may be filled in the remaining 8 positions. In the case of the LFNST applied block of (d) of FIG. 8, as shown in (d) of FIG. 9, two 4x4 blocks in the top-right and bottom-left adjacent to the top-left 4x4 block are also filled with 0 values.

As described above, basically, by signaling the LFNST index, whether to apply the LFNST and the transform matrix to be applied are specified. As shown FIG. 9, when the LFNST is applied, since the number of output data of the forward LFNST may be equal to or less than the number of input data, a region filled with a zero value occurs as follows.

1) As shown in (a) of FIG. 9, samples from the 8th and later positions in the scan order in the top-left 4x4 block, that is, samples from the 9th to the 16th.
2) As shown in (d) and (e) of FIG. 9, when the [ 48 × 16 ] matrix or the [ 48 × 8 ] matrix is applied, two 4x4 blocks adjacent to the top-left 4x4 block or the second and third 4x4 blocks in the scan order.

Therefore, if non-zero data exists by checking the areas 1) and 2), it is certain that the LFNST is not applied, so that the signaling of the corresponding LFNST index can be omitted.

According to an example, for example, in the case of LFNST adopted in the VVC standard, since signaling of the LFNST index is performed after the residual coding, the encoding apparatus may know whether there is the non-zero data (significant coefficients) for all positions within the TU or CU block through the residual coding. Accordingly, the encoding apparatus may determine whether to perform signaling on the LFNST index based on the existence of the non-zero data, and the decoding apparatus may determine whether the LFNST index is parsed. When the non-zero data does not exist in the area designated in 1) and 2) above, signaling of the LFNST index is performed.

Since a truncated unary code is applied as a binarization method for the LFNST index, the LFNST index consists of up to two bins, and 0, 10, and 11 are assigned as binary codes for possible LFNST index values of 0, 1, and 2, respectively. In the case of the LFNST currently adopted for VVC, a context-based CABAC coding is applied to the first bin (regular coding), and a bypass coding is applied to the second bin. The total number of contexts for the first bin is 2, when (DCT-2, DCT-2) is applied as a primary transform pair for the horizontal and vertical directions, and a luma component and a chroma component are coded in a dual tree type, one context is allocated and another context applies for the remaining cases. The coding of the LFNST index is shown in a table as follows.

[Table 3]

| Syntax element | binIdx | | | | | |
|---|---|---|---|---|---|---|
| | 0 | 1 | 2 | 3 | 4 | >= 5 |
| lfnst_idx[ ][ ] | ( tu_mts_idx[ x0 ][ y0 ] == 0 && treeType != SINGLE_TREE ) ? 1 : 0 | bypass | na | na | na | na |

Meanwhile, for the adopted LFNST, the following simplification methods may be applied.

(i) According to an example, the number of output data for the forward LFNST may be limited to a maximum of 16.

In the case of (c) of FIG. 8, the 4x4 LFNST may be applied to two 4x4 regions adjacent to the top-left, respectively, and in this case, a maximum of 32 LFNST output data may be generated. when the number of output data for forward LFNST is limited to a maximum of 16, in the case of 4xN/Nx4 (N≥16) blocks (TU or CU), the 4x4 LFNST is only applied to one 4x4 region in the top-left, the LFNST may be applied only once to all blocks of FIG. 8. Through this, the implementation of image coding may be simplified.

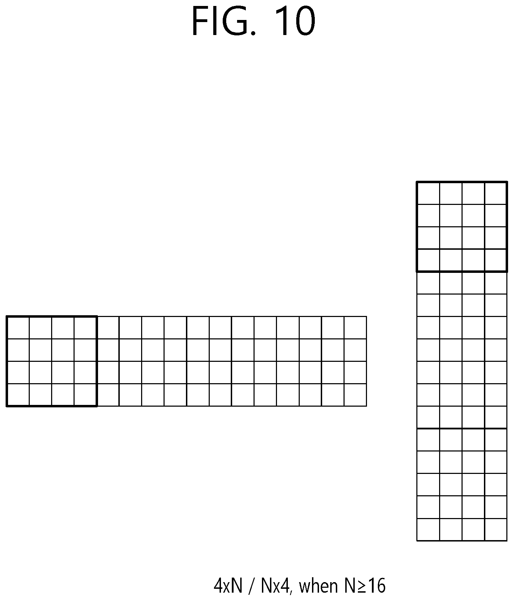

FIG. 10 shows that the number of output data for the forward LFNST is limited to a maximum of 16 according to an example. As FIG. 10, when the LFNST is applied to the most top-left 4x4 region in a 4xN or Nx4 block in which N is 16 or more, the output data of the forward LFNST becomes 16 pieces.

(ii) According to an example, zero-out may be additionally applied to a region to which the LFNST is not applied. In this document, the zero-out may mean filling values of all positions belonging to a specific region with a value of 0. That is, the zero-out can be applied to a region that is not changed due to the LFNST and maintains the result of the forward primary transformation. As described above, since the LFNST is divided into the 4x4 LFNST and the 8x8 LFNST, the zero-out can be divided into two types ((ii)-(A) and (ii)-(B)) as follows.

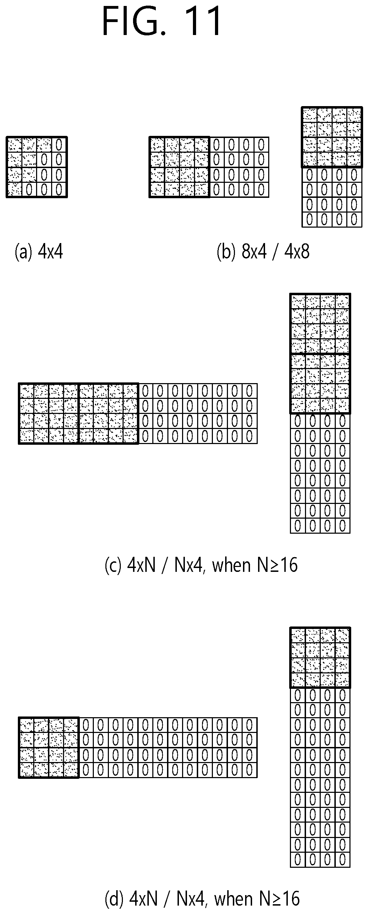

(ii)-(A) When the 4x4 LFNST is applied, a region to which the 4x4 LFNST is not applied may be zeroed out. FIG. 11 is a diagram illustrating the zero-out in a block to which the 4x4 LFNST is applied according to an example.

As shown in FIG. 11, with respect to a block to which the 4x4 LFNST is applied, that is, for all of the blocks in (a), (b) and (c) of FIG. 9, the whole region to which the LFNST is not applied may be filled with zeros.

On the other hand, (d) of FIG. 11 shows that when the maximum value of the number of the output data of the forward LFNST is limited to 16 as shown in FIG. 10, the zero-out is performed on the remaining blocks to which the 4x4 LFNST is not applied.

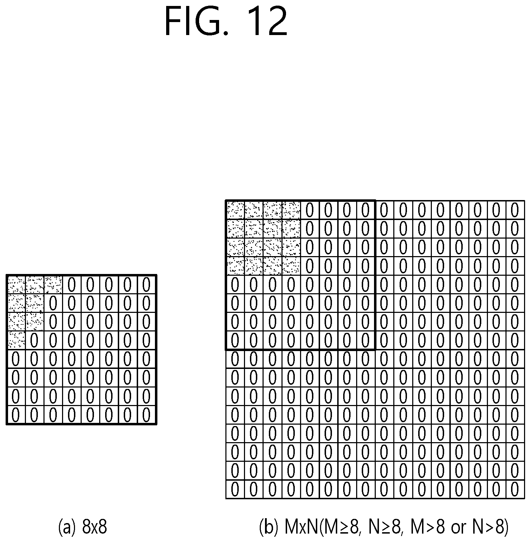

(ii)-(B) When the 8x8 LFNST is applied, a region to which the 8x8 LFNST is not applied may be zeroed out. FIG. 12 is a diagram illustrating the zero-out in a block to which the 8x8 LFNST is applied according to an example.

As shown in FIG. 12, with respect to a block to which the 8x8 LFNST is applied, that is, for all of the blocks in (d) and (e) of FIG. 9, the whole region to which the LFNST is not applied may be filled with zeros.

(iii) Due to the zero-out presented in (ii) above, the area filled with zeros may be not same when the LFNST is applied. Accordingly, it is possible to check whether the non-zero data exists according to the zero-out proposed in (ii) over a wider area than the case of the LFNST of FIG. 9.

For example, when (ii)-(B) is applied, after checking whether the non-zero data exists where the area filled with zero values in (d) and (e) of Fig. 9 in addition to the area filled with 0 additionally in FIG. 12, signaling for the LFNST index can be performed only when the non-zero data does not exist.

Of course, even if the zero-out proposed in (ii) is applied, it is possible to check whether the non-zero data exists in the same way as the existing LFNST index signaling. That is, after checking whether the non-zero data exists in the block filled with zeros in FIG. 9, the LFNST index signaling may be applied. In this case, the encoding apparatus only performs the zero out and the decoding apparatus does not assume the zero out, that is, checking only whether the non-zero data exists only in the area explicitly marked as 0 in FIG. 9, may perform the LFNST index parsing.

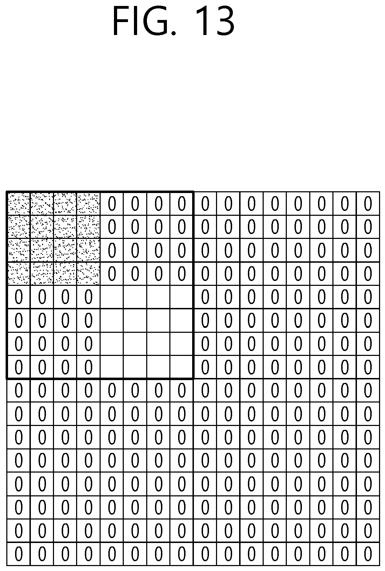

Alternatively, according to another example, the zero-out may be performed as shown in FIG. 13. FIG. 13 is a diagram illustrating the zero-out in a block to which the 8x8 LFNST is applied according to another example.

As shown in FIGs. 11 and 12, the zero-out may be applied to all regions other than the region to which the LFNST is applied, or the zero-out may be applied only to a partial region as shown in FIG. 13. The zero-out is applied only to regions other than the top-left 8x8 region of FIG. 13, the zero-out may not be applied to the bottom-right 4x4 block within the top-left 8x8 region.

Various embodiments in which combinations of the simplification methods ((i), (ii)-(A), (ii)-(B), (iii)) for the LFNST are applied may be derived. Of course, the combinations of the above simplification methods are not limited to the following an embodiment, and any combination may be applied to the LFNST.

Embodiment

- Limit the number of output data for forward LFNST to a maximum of 16 → (i)
- When the 4x4 LFNST is applied, all areas to which the 4x4 LFNST is not applied are zero-out → (ii)-(A)
- When the 8x8 LFNST is applied, all areas to which the 8x8 LFNST is not applied are zero-out → (ii)-(B)
- After checking whether the non-zero data exists also the existing area filled with zero value and the area filled with zeros due to additional zero outs ((ii)-(A), (ii)-(B)), the LFNST index is signaled only when the non-zero data does not exist → (iii)

In the case of the Embodiment, when the LFNST is applied, an area in which the non-zero output data can exist is limited to the inside of the top-left 4x4 area. In more detail, in the case of (a) of FIG. 11 and (a) of FIG. 12, the 8th position in the scan order is the last position where non-zero data can exist. In the case of (b) and (c) of FIG. 11 and (b) of FIG. 12, the 16th position in the scan order (i.e., the position of the bottom-right edge of the top-left 4x4 block) is the last position where data other than 0 may exist.

Therefore, when the LFNST is applied, after checking whether the non-zero data exists in a position where the residual coding process is not allowed (at a position beyond the last position), it can be determined whether the LFNST index is signaled.

In the case of the zero-out method proposed in (ii), since the number of data finally generated when both the primary transform and the LFNST are applied, the amount of computation required to perform the entire transformation process can be reduced. That is, when the LFNST is applied, since zero-out is applied to the forward primary transform output data existing in a region to which the LFNST is not applied, there is no need to generate data for the region that become zero-out during performing the forward primary transform. Accordingly, it is possible to reduce the amount of computation required to generate the corresponding data. The additional effects of the zero-out method proposed in (ii) are summarized as follows.

First, as described above, the amount of computation required to perform the entire transform process is reduced.

In particular, when (ii)-(B) is applied, the amount of calculation for the worst case is reduced, so that the transform process can be lightened. In other words, in general, a large amount of computation is required to perform a large-size primary transformation. By applying (ii)-(B), the number of data derived as a result of performing the forward LFNST can be reduced to 16 or less. In addition, as the size of the entire block (TU or CU) increases, the effect of reducing the amount of transform operation is further increased.

Second, the amount of computation required for the entire transform process can be reduced, thereby reducing the power consumption required to perform the transform.

Third, the latency involved in the transform process is reduced.

The secondary transformation such as the LFNST adds a computational amount to the existing primary transformation, thus increasing the overall delay time involved in performing the transformation. In particular, in the case of intra prediction, since reconstructed data of neighboring blocks is used in the prediction process, during encoding, an increase in latency due to a secondary transformation leads to an increase in latency until reconstruction. This can lead to an increase in overall latency of intra prediction encoding.

However, if the zero-out suggested in (ii) is applied, the delay time of performing the primary transform can be greatly reduced when LFNST is applied, the delay time for the entire transform is maintained or reduced, so that the encoding apparatus can be implemented more simply.

In the conventional intra prediction, a block to be currently encoded is regarded as one encoding unit and encoding was performed without splitting. However, intra sub-partitions (ISP) coding means performing intra prediction encoding by dividing a block to be currently encoded in a horizontal direction or a vertical direction. In this case, a reconstructed block may be generated by performing encoding/decoding in units of divided blocks, and the reconstructed block may be used as a reference block of the next divided block. According to an embodiment, in ISP coding, one coding block may be divided into two or four sub-blocks and coded, and in ISP, in one sub-block, intra prediction is performed with reference to a reconstructed pixel value of a sub-block located at the adjacent left side or adjacent upper side. Hereinafter, "coding" may be used as a concept including both coding performed by an encoding apparatus and decoding performed by a decoding apparatus.

Table 4 represents the number of sub-blocks divided according to block sizes when ISP is applied, and sub-partitions divided according to ISP may be referred to as transform blocks (TUs).

[Table 4]

| Block size (CU) | Number of divisions |
| --- | --- |
| 4x4 | Not available |
| 4×8, 8×4 | 2 |
| All other cases | 4 |

The ISP is to divide a block predicted as luma intra into two or four sub-partitions in a vertical direction or a horizontal direction according to the size of the block. For example, the minimum block size to which the ISP can be applied is 4 × 8 or 8 × 4. When the block size is greater than 4 × 8 or 8 × 4, the block is divided into 4 sub-partitions.

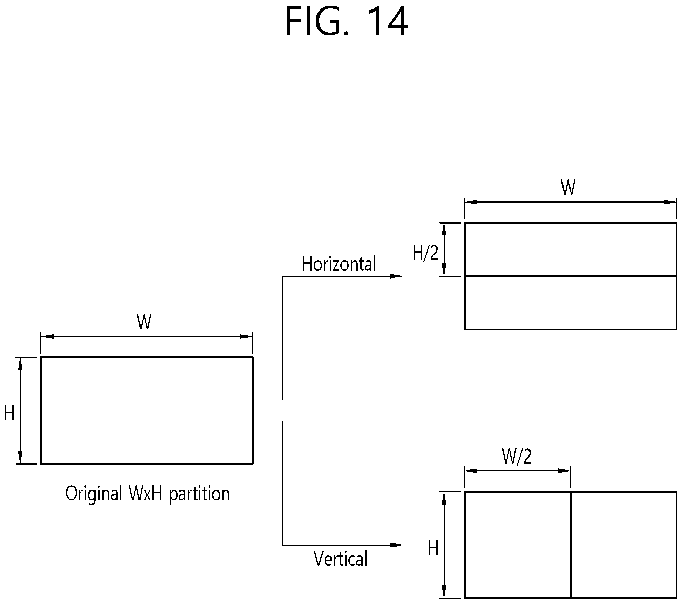

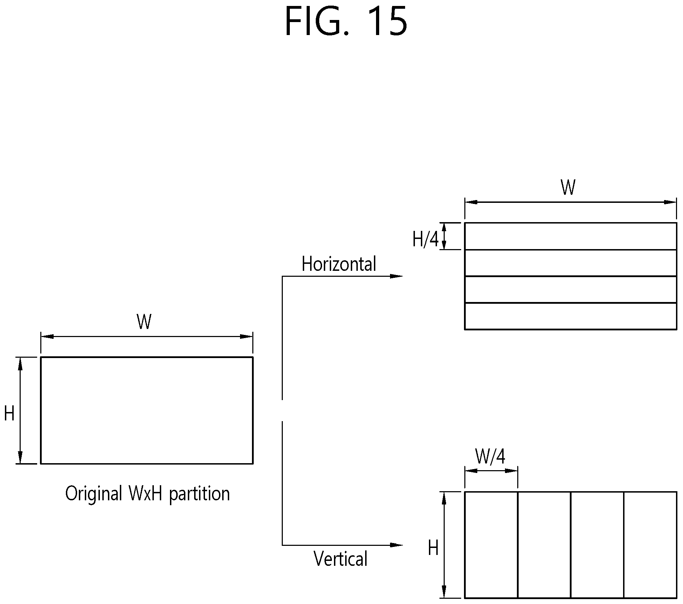

FIGS. 14 and 15 illustrate an example of a sub-block into which one coding block is divided, and more specifically, FIG. 14 illustrates an example of division of a case in which a coding block (width (W) X height (H)) is 4 × 8 blocks or 8 × 4 blocks, and FIG. 15 illustrates an example of division of a case in which a coding block is not 4 × 8 blocks, 8 × 4 blocks, or 4 × 4 blocks.

When ISP is applied, sub-blocks are sequentially coded, for example, horizontally or vertically, from left to right or from top to bottom according to a division type, and after a reconstruction process is performed via inverse transform and intra prediction for one sub-block, coding for the next sub-block may be performed. For the leftmost or uppermost subblock, a reconstructed pixel of the already coded coding block is referred to, as in a conventional intra prediction method. Further, when each side of a subsequent internal sub-block is not adjacent to a previous sub-block, in order to derive reference pixels adjacent to the corresponding side, reconstructed pixels of an already coded adjacent coding block are referred to, as in a conventional intra prediction method.

In the ISP coding mode, all sub-blocks may be coded with the same intra prediction mode, and a flag indicating whether to use ISP coding and a flag indicating whether to divide (horizontally or vertically) in which direction may be signaled. As illustrated in FIGS. 14 and 15, the number of sub-blocks may be adjusted to 2 or 4 according to a block shape, and when the size (width x height) of one sub-block is less than 16, it may be restricted so that division into the corresponding sub-block is not allowed or the ISP coding itself is not applied.

In the case of the ISP prediction mode, one coding unit is divided into two or four partition blocks, that is, sub-blocks and predicted, and the same intra prediction mode is applied to the divided two or four partition blocks.

As described above, in the division direction, the horizontal direction (when an MxN coding unit having horizontal and vertical lengths of M and N, respectively, is divided in the horizontal direction, if the MxN coding unit is divided into two, the MxN coding unit is divided into Mx(N/2) blocks, and if the MxN coding unit is divided into four blocks, the MxN coding unit is divided into Mx(N/4) blocks) and the vertical direction (when an MxN coding unit is divided in a vertical direction, if the MxN coding unit is divided into two, and the MxN coding unit is divided into (M/2)xN blocks, and if the MxN coding unit is divided into four, the MxN coding unit is divided into (M/4)xN blocks) are both possible. When the MxN coding unit is divided in the horizontal direction, partition blocks are coded in a top-down order, and when the MxN coding unit is divided in the vertical direction, partition blocks are coded in order from left to right. The currently coded partition block may be predicted with reference to the reconstructed pixel values of the upper (left) partition block in the case of horizontal (vertical) direction division.

A transform may be applied to a residual signal generated by the ISP prediction method in units of partition blocks. Multiple transform selection (MTS) technology based on a DST-7/DCT-8 combination as well as the existing DCT-2 may be applied to a primary transform (core transform) based on a forward direction, and a forward low frequency non-separable transform (LFNST) may be applied to transform coefficients generated according to the primary transform to generate a final modified transform coefficient.

That is, an LFNST may be applied to partition blocks divided by applying an ISP prediction mode, and the same intra prediction mode is applied to the divided partition blocks, as described above. Accordingly, when the LFNST set derived based on the intra prediction mode is selected, the derived LFNST set may be applied to all partition blocks. That is, because the same intra prediction mode is applied to all partition blocks, the same LFNST set may be applied to all partition blocks.

According to an embodiment, an LFNST may be applied only to transform blocks having both a horizontal length and a vertical length of 4 or more. Therefore, when the horizontal or vertical length of the divided partition block according to the ISP prediction method is less than 4, the LFNST is not applied and an LFNST index is not signaled. Further, when the LFNST is applied to each partition block, the corresponding partition block may be regarded as one transform block. When the ISP prediction method is not applied, the LFNST may be applied to the coding block.

A method of applying an LFNST to each partition block will be described in detail.

According to an embodiment, after a forward LFNST is applied to individual partition blocks, only maximum 16 (8 or 16) coefficients are left in the top-left 4x4 region in transform coefficient scanning order, and then zero out in which the remaining positions and regions are all filled with a value of 0 may be applied.

Alternatively, according to an embodiment, when a length of one side of the partition block is 4, the LFNST is applied only to the top-left 4x4 region, and when a length of all sides of the partition block, that is, the width and height is 8 or more, the LFNST may be applied to the remaining 48 coefficients, except for a bottom-right 4x4 region inside a top-left 8x8 region.

Alternatively, according to an embodiment, in order to adjust computational complexity of the worst case to 8 multiplications per sample, when each partition block is 4x4 or 8x8, only 8 transform coefficients may be output after applying the forward LFNST. That is, when the partition block is 4x4, an 8x16 matrix may be applied as a transform matrix, and when the partition block is 8x8, an 8x48 matrix may be applied as a transform matrix.

In the current VVC standard, LFNST index signaling is performed in units of coding units. Therefore, in the ISP prediction mode and when an LFNST is applied to all partition blocks, the same LFNST index value may be applied to the corresponding partition blocks. That is, when the LFNST index value is transmitted once at a coding unit level, the corresponding LFNST index may be applied to all partition blocks in the coding unit. As described above, the LFNST index value may have values of 0, 1, and 2, where 0 represents a case in which an LFNST is not applied, and 1 and 2 indicate two transform matrices existing in one LFNST set when an LFNST is applied.

As described above, the LFNST set is determined by the intra prediction mode, and in the case of the ISP prediction mode, because all partition blocks in the coding unit are predicted in the same intra prediction mode, the partition blocks may refer to the same LFNST set.

As another example, LFNST index signaling is still performed in units of a coding unit, but in the case of the ISP prediction mode, whether to uniformly apply an LFNST to all partition blocks is not determined, and for each partition block, whether to apply the LFNST index value signaled at a coding unit level or whether not to apply the LFNST may be determined through a separate condition. Here, a separate condition may be signaled in the form of a flag for each partition block through a bitstream, and when a flag value is 1, an LFNST index value signaled at the coding unit level is applied, and when a flag value is 0, the LFNST may not be applied.

In a coding unit to which the ISP mode is applied, an example of applying an LFNST when a length of one side of the partition block is less than 4 is described as follows.

First, when the size of the partition block is Nx2 (2xN), an LFNST may be applied to the top-left Mx2 (2xM) region (where M ≤ N). For example, when M = 8, the top-left region becomes 8x2 (2x8) and thus a region in which 16 residual signals exist may be an input of a forward LFNST, and an R×16 (R ≤ 16) forward transform matrix may be applied.

Here, the forward LFNST matrix may be a separate additional matrix other than the matrix included in the current VVC standard. Further, for complexity control of the worst case, an 8x16 matrix in which only upper 8 row vectors of a 16x16 matrix are sampled may be used for transformation. The complexity control method will be described in detail later.

Second, when the size of the partition block is N×1 (1×N), an LFNST may be applied to a top-left M×1 (1×M) region (where M ≤ N). For example, when M = 16, the top-left region becomes 16x1 (1x16) and thus a region in which 16 residual signals exist may be an input of the forward LFNST, and an R×16 (R ≤ 16) forward transform matrix may be applied.

Here, the corresponding forward LFNST matrix may be a separate additional matrix other than the matrix included in the current VVC standard. Further, for complexity control of the worst case, an 8x16 matrix in which only the upper 8 row vectors of the 16x16 matrix are sampled may be used for transformation. The complexity control method will be described in detail later.

The first embodiment and the second embodiment may be applied simultaneously, or either one of the two embodiments may be applied. In particular, in the case of the second embodiment, because a primary transform is considered in an LFNST, it was observed through experiments that compression performance improvement that could be obtained in the existing LFNST is relatively small compared to an LFNST index signaling cost. However, in the case of the first embodiment, compression performance improvement similar to that which could be obtained from the conventional LFNST was observed. That is, in the case of ISP, it may be checked through experiments that the application of LFNST for 2xN and Nx2 contributes to an actual compression performance.

In an LFNST in the current VVC, symmetry between intra prediction modes is applied. The same LFNST set is applied to two directional modes disposed around a mode 34 (prediction in a 45 degree diagonal direction to the bottom-right), for example, the same LFNST set is applied to a mode 18 (horizontal direction prediction mode) and a mode 50 (vertical direction prediction mode). However, in modes 35 to 66, when a forward LFNST is applied, input data is transposed and then an LFNST is applied.

VVC supports a wide angle intra prediction (WAIP) mode, and an LFNST set is derived based on the modified intra prediction mode in consideration of the WAIP mode. For modes extended by WAIP, the LFNST set is determined by using symmetry, as in the general intra prediction direction mode. For example, because a mode -1 is symmetric with a mode 67, the same LFNST set is applied, and because a mode -14 is symmetric with a mode 80, the same LFNST set is applied. Modes 67 to 80 apply an LFNST transform after transposing input data before applying a forward LFNST.

In the case of the LFNST applied to the top-left Mx2 (Mxl) block, because the block to which the LFNST is applied is non-square, the symmetry to the LFNST cannot be applied. Therefore, instead of applying the symmetry based on the intra prediction mode, as in the LFNST of Table 2, the symmetry between the Mx2 (Mxl) block and the 2xM (1×M) block may be applied.

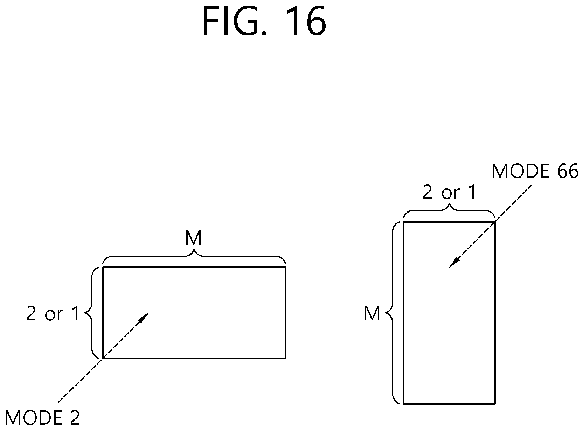

FIG. 16 is a diagram illustrating symmetry between Mx2 (Mxl) blocks and 2xM (1×M) blocks according to an embodiment.

As illustrated in FIG. 16, because it may be regarded that a mode 2 in the Mx2 (Mxl) block is symmetric with a mode 66 in the 2xM (1×M) block, the same LFNST set may be applied to the 2xM (1×M) block and the Mx2 (Mxl) block.

In this case, in order to apply the LFNST set applied to the Mx2 (Mxl) block to the 2xM (1×M) block, the LFNST set is selected based on the mode 2 instead of the mode 66. That is, before applying the forward LFNST, after transposing input data of the 2xM (1×M) block, the LFNST may be applied.

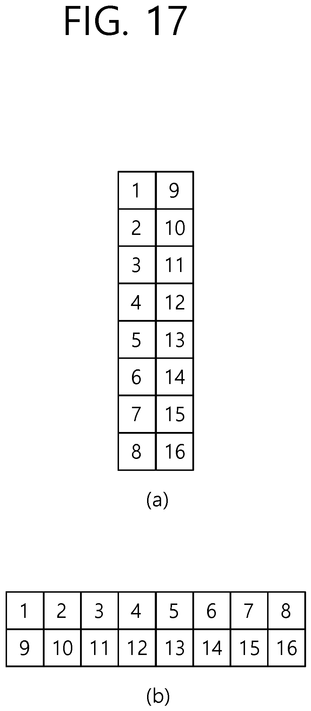

FIG. 17 is a diagram illustrating an example of transposing a 2xM block according to an embodiment.

(a) of FIG. 17 is a diagram illustrating that an LFNST may be applied by reading input data in column-first order for a 2xM block, and (b) of FIG. 17 is a diagram illustrating that an LFNST may be applied by reading input data in row-first order for an Mx2 (Mxl) block. A method of applying an LFNST to the top-left Mx2 (Mxl) or 2xM (Mxl) block is described as follows.

1. First, as illustrated in (a) and (b) of FIG. 17, input data is arranged to configure an input vector of the forward LFNST. For example, referring to FIG. 16, for an Mx2 block predicted in a mode 2, the order in (b) of FIG. 17 is followed, and for a 2xM block predicted in a mode 66, the input data are arranged in order of (a) of FIG. 17 and then the LFNST set for the mode 2 may be applied.

2. For the Mx2 (Mxl) block, the LFNST set is determined based on a modified intra prediction mode in consideration of WAIP. As described above, a preset mapping relationship is established between the intra prediction mode and the LFNST set, which may be represented by a mapping table as shown table 2.

For a 2xM (1×M) block, a symmetric mode around a prediction mode (mode 34 in the case of the VVC standard) in a 45 degree diagonal direction downward from the modified intra prediction mode in consideration of WAIP is obtained, and then the LFNST set is determined based on the corresponding symmetric mode and the mapping table. A symmetrical mode (y) around the mode 34 may be derived through the following equation. The mapping table will be described in more detail below.

【Equation 11】

$$\text{if } 2 \leq x \leq 66, \ y = 68 - x,$$

$$\text{otherwise } (x \leq -1 \text{ or } x \geq 67), \ y = 66 - x$$

3. When a forward LFNST is applied, transform coefficients may be derived by multiplying input data prepared in a process 1 by an LFNST kernel. An LFNST kernel may be selected from an LFNST set determined in a process 2 and a predetermined LFNST index.

For example, when M = 8 and a 16x16 matrix is applied as the LFNST kernel, 16 transform coefficients may be generated by multiplying the matrix by 16 input data. The generated transform coefficients may be arranged in the top-left 8x2 or 2x8 region in scanning order used in the VVC standard.

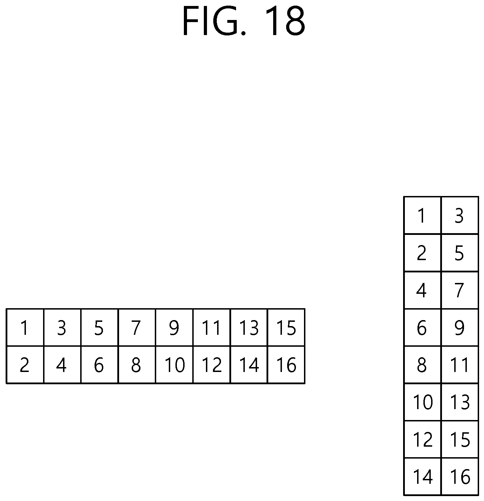

FIG. 18 illustrates scanning order for 8x2 or 2x8 regions according to an embodiment.

All regions other than the top-left 8x2 or 2x8 region may be filled with zero values (zero-out) or the existing transform coefficients to which a primary transform is applied may be maintained as they are. The predetermined LFNST index may be one of the LFNST index values (0, 1, 2) attempted when calculating an RD cost while changing the LFNST index value in an encoding process.

In the case (e.g., 8 multiplications/samples) of a configuration that adjusts computational complexity for the worst case to a certain level or less, for example, after generating only 8 transform coefficients by multiplying an 8x16 matrix that takes only the upper 8 rows of the 16x16 matrix, 8 transform coefficients may be disposed in scanning order of FIG. 18, and zero-out may be applied to the remaining coefficient regions. The complexity control for the worst case will be described later.

4. When applying an inverse LFNST, a preset number (e.g., 16) of transform coefficients are set as input vectors, and the LFNST set obtained from a process 2 and the LFNST kernel (e.g., 16x16 matrix) derived from the parsed LFNST index are selected and then by multiplying the LFNST kernel and the corresponding input vector, the output vector may be derived.

In the case of an Mx2 (Mxl) block, the output vectors may be disposed in row-first order of (b) of FIG. 17, and in the case of the 2xM (1×M) block, the output vectors may be disposed in column-first order of (a) of FIG. 17.

The remaining regions, except for a region in which the corresponding output vector is disposed within the top-left Mx2 (Mxl) or 2xM (Mx2) region and a region other than the top-left Mx2 (Mxl) or 2xM (Mx2) region in the partition block may be all zero-out with zero values or may be configured to maintain reconstructed transform coefficients as they are through residual coding and inverse quantization processes.

When configuring the input vector, as in No. 3, input data may be arranged in scanning order of FIG. 18, and in order to control computational complexity for the worst case to a certain level or less, an input vector may be configured by reducing the number of input data (e.g., 8 instead of 16).

For example, when M = 8, if 8 input data are used, only the left 16x8 matrix may be taken from the corresponding 16x16 matrix and multiplied to obtain 16 output data. The complexity control for the worst case will be described later.

In the above embodiment, when applying LFNST, a case in which symmetry is applied between an Mx2 (Mxl) block and a 2xM (1×M) block is presented, but according to another example, different LFNST sets may be applied to each of two block shapes.

Hereinafter, various examples of an LFNST set configuration for the ISP mode and a mapping method using the intra prediction mode will be described.

In the case of an ISP mode, the LFNST set configuration may be different from the existing LFNST set. In other words, kernels different from the existing LFNST kernels may be applied, and a mapping table different from the mapping table between an intra prediction mode index applied to the current VVC standard and the LFNST set may be applied. A mapping table applied to the current VVC standard may be the same as that of Table 2.

In Table 2, a preModeIntra value means an intra prediction mode value changed in consideration of WAIP, and an lfnstTrSetIdx value is an index value indicating a specific LFNST set. Each LFNST set is configured with two LFNST kernels.

When the ISP prediction mode is applied, if both a horizontal length and a vertical length of each partition block are equal to or greater than 4, the same kernels as the LFNST kernels applied in the current VVC standard may be applied, and the mapping table may be applied as it is. A mapping table and LFNST kernels different from the current VVC standard may be applied.

When the ISP prediction mode is applied, when a horizontal length or a vertical length of each partition block is less than 4, a mapping table and LFNST kernels different from those in the current VVC standard may be applied. Hereinafter, Tables 5 to 7 represent mapping tables between an intra prediction mode value (intra prediction mode value changed in consideration of WAIP) and an LFNST set, which may be applied to an Mx2 (Mxl) block or a 2xM (1×M) block.

[Table 5]

| predModeIntra | lfnstTrSetIdx |
|---|---|
| predModeIntra < 0 | 1 |
| 0 <= predModeIntra <= 1 | 0 |
| 2 <= predModeIntra <= 12 | 1 |
| 13 <= predModeIntra <= 23 | 2 |
| 24 <= predModeIntra <= 34 | 3 |
| 35 <= predModeIntra <= 44 | 4 |
| 45 <= predModeIntra <= 55 | 5 |
| 56 <= predModeIntra <= 66 | 6 |
| 67 <= predModeIntra <= 80 | 6 |

(continued)

| predModeIntra | IfnstTrSetIdx |
|---|---|
| 81 <= predModeIntra <= 83 | 0 |

[Table 6]

| predModeIntra | IfnstTrSetIdx |
|---|---|
| predModeIntra < 0 | 1 |
| 0 <= predModeIntra <= 1 | 0 |
| 2 <= predModeIntra <= 23 | 1 |
| 24 <= predModeIntra <= 44 | 2 |
| 45 <= predModeIntra <= 66 | 3 |
| 67 <= predModeIntra <= 80 | 3 |
| 81 <= predModeIntra <= 83 | 0 |

[Table 7]

| predModeIntra | IfnstTrSetIdx |
|---|---|
| predModeIntra < 0 | 1 |
| 0 <= predModeIntra <= 1 | 0 |
| 2 <= predModeIntra <= 80 | 1 |
| 81 <= predModeIntra <= 83 | 0 |

A first mapping table of Table 5 is configured with seven LFNST sets, a mapping table of Table 6 is configured with four LFNST sets, and a mapping table of Table 7 is configured with two LFNST sets. As another example, when it is configured with one LFNST set, an InstTrSetIdx value may be fixed to 0 with respect to the preModeIntra value.

Hereinafter, a method of maintaining the computational complexity for the worst case when LFNST is applied to the ISP mode will be described.

In the case of an ISP mode, when LFNST is applied, in order to maintain the number of multiplications per sample (or per coefficient, per position) to a certain value or less, the application of LFNST may be limited. According to the size of the partition block, the number of multiplications per sample (or per coefficient, per position) may be maintained to 8 or less by applying LFNST as follows.

1. When both a horizontal length and a vertical length of the partition block are 4 or more, the same method as a calculation complexity control method for the worst case for LFNST in the current VVC standard may be applied.

That is, when the partition block is a 4x4 block, instead of a 16x16 matrix, an 8x16 matrix obtained by sampling the top 8 rows from a 16x16 matrix may be applied in a forward direction, and a 16x8 matrix obtained by sampling the left 8 columns from a $16 \times 16$ matrix may be applied in a reverse direction. Further, when the partition block is 8x8 blocks, in the forward direction, instead of a 16x48 matrix, an 8x48 matrix obtained by sampling the top 8 rows from a 16x48 matrix is applied, and in the reverse direction, instead of a 48x16 matrix, a 48x8 matrix obtained by sampling the left 8 columns from a 48x16 matrix may be applied.

In the case of a 4xN or Nx4 (N > 4) block, when a forward transform is performed, 16 coefficients generated after applying a 16x16 matrix to only the top-left 4x4 block may be disposed in the top-left 4x4 region, and other regions may be filled with a value of 0. Further, when performing an inverse transform, 16 coefficients located in the top-left 4x4 block are disposed in scanning order to form an input vector, and then 16 output data may be generated by multiplying the 16x16 matrix. The generated output data may be disposed in the top-left 4x4 region, and the remaining regions, except for the top-left 4x4 region, may be filled with a value of 0.

In the case of an 8xN or Nx8 (N > 8) block, when the forward transform is performed, 16 coefficients generated after applying the 16x48 matrix to only an ROI region (the remaining regions excluding bottom-right 4x4 blocks from the top-left 8x8 blocks) inside the top-left 8x8 blocks may be disposed in the top-left 4x4 region, and all other regions may be filled with a value of 0. Further, when performing an inverse transform, 16 coefficients located in the top-left 4x4 block are disposed in scanning order to form an input vector, and then 48 output data may be generated by multiplying the input vector by a 48x16 matrix. The generated output data may be filled in the ROI region, and all other regions may be filled with a value of 0.

2. When the size of the partition block is Nx2 or 2xN and LFNST is applied to the top-left Mx2 or 2xM region (M ≤ N), a matrix sampled according to the N value may be applied.

In the case of M = 8, for a partition block of N = 8, that is, an 8x2 or 2x8 block, an 8x16 matrix obtained by sampling the top 8 rows from a 16x16 matrix may be applied instead of a 16x16 matrix in the case of a forward transform, and in the case of an inverse transform, instead of a 16x16 matrix, a 16x8 matrix obtained by sampling left 8 columns from the 16x16 matrix may be applied.

When N is greater than 8, 16 output data generated after applying the 16x16 matrix to the top-left 8x2 or 2x8 block in the case of a forward transform are disposed in the top-left 8x2 or 2x8 block, and the remaining regions may be filled with a value of 0. In the case of an inverse transform, 16 coefficients located in the top-left 8x2 or 2x8 block are disposed in the scanning order to form an input vector, and then 16 output data may be generated by multiplying the 16x16 matrix. The generated output data may be disposed in the top-left 8x2 or 2x8 block, and all remaining regions may be filled with a value of 0.

3. When the size of the partition block is N×1 or 1×N and LFNST is applied to the top-left M×1 or 1×M region (M ≤ N), a matrix sampled according to the N value may be applied.

When M = 16, for a partition block of N = 16, that is, a 16x1 or 1x16 block, instead of a 16x16 matrix, an 8x16 matrix obtained by sampling the top 8 rows from a 16x16 matrix may be applied in the case of a forward transform, and in the case of an inverse transform, instead of a 16x16 matrix, a 16x8 matrix obtained by sampling the left 8 columns from the 16x16 matrix may be applied.

When N is greater than 16, 16 output data generated after applying the 16x16 matrix to the top-left 16x1 or 1x16 block in the case of a forward transform may be disposed in the top-left 16x1 or 1x16 block, and the remaining regions may be filled with a value of 0. In the case of an inverse transform, 16 coefficients located in the top-left 16x1 or 1x16 block may be disposed in scanning order to form an input vector, and then 16 output data may be generated by multiplying the 16x16 matrix. The generated output data may be disposed in the top-left 16x1 or 1x16 block, and all remaining regions may be filled with a value of 0.

As another example, in order to maintain the number of multiplications per sample (or per coefficient, per position) to a certain value or less, the number of multiplications per sample (or per coefficient, per position) based on the ISP coding unit size rather than the size of the ISP partition block may be maintained to 8 or less. When there is only one block satisfying the condition to which LFNST is applied among the ISP partition blocks, the complexity calculation for the worst case of LFNST may be applied based on the corresponding coding unit size rather than the size of the partition block. For example, if a luma coding block for a specific coding unit is coded with ISP by being split into four partition blocks having a size of 4x4 and a non-zero transform coefficient does not exist for two partition blocks among them, it may be configured such that not 8 but 16 transform coefficients are generated for each of the other two partition blocks.

Hereinafter, a method of signaling an LFNST index in an ISP mode is described.

As described above, the LFNST index may have values 0, 1, and 2, where 0 indicates that LFNST is not applied, and 1 and 2 indicate one of two LFNST kernel matrices included in a selected LFNST set. The LFNST is applied based on the LFNST kernel matrix selected by the LFNST index. In the current VVC standard, the LFNST index is transmitted as described below.

1. The LFNST index may be transmitted once for each coding unit (CU). In a dual-tree case, an individual LFNST index may be signaled for each of a luma block and a chroma block.
2. When the LFNST index is not signaled, an LFNST index value is inferred to be 0 as a default value. The LFNST index value is inferred to be 0 in the following cases.

A. When in a mode in which a transform is not applied (e.g., transform skip, a BDPCM lossless coding, etc.)
B. When a primary transform is not DCT-2 (when it is DST7 or DCT 8), that is, when a horizontal transform or a vertical transform is not DCT-2
C. When a horizontal length or vertical length for a luma block of a coding unit exceeds a size of a transformable maximum luma transform, for example, when the size for the luma block of the coding block is 128x16 in a case where the size of the transformable maximum luma transform is 64, the LFNST is not applicable.

In the dual-tree case, it is determined whether each of the coding unit for the luma component and the coding unit for the chroma component exceeds the size of the maximum luma transform. That is, it is checked whether the luma block exceeds the size of the transformable maximum luma transform, and it is checked whether the chroma block exceeds the horizontal/vertical length of a corresponding luma block for a color format and the size of the maximum transformable luma transform. For example, when the color format is 4:2:0, each of the horizontal/vertical length of the corresponding luma block is twice that of the chroma block, and the transform size of the corresponding luma block is twice that of the chroma block. As another example, when the color format is 4:4:4, the horizontal/vertical length of the corresponding luma block is the same as that of the chroma block.

A 64-length transform or a 32-length transform may mean a transform applied horizontally or vertically with a length of 64 or 32, respectively, and a "transform size" may mean a corresponding length of 64 or 32.

In a single-tree case, it is checked whether the horizontal or vertical length for the luma block exceeds the size of the transformable maximum luma transform block, and if it exceeds the size, LFNST index signaling may be skipped.

D. The LFNST index may be transmitted only when both the horizontal length and vertical length of the coding unit are greater than or equal to 4.

In the dual-tree case, the LFNST index may be signaled only for a case where both a horizontal length and vertical length for a corresponding component (i.e., a luma or chroma component) are greater than or equal to 4.

In the single-tree case, the LFNST index may be signaled only for a case where both the horizontal length and vertical length for the luma component are greater than or equal to 4.

E. In a case where a last non-zero coefficient position is not a DC position (a top-left position of a block), when it is the dual-tree type luma block, the LFNST index is transmitted if the last non-zero coefficient position is not the DC position. When it is the dual-tree type chroma block, the LNFST index is transmitted if even one of a last non-zero coefficient position for Cb and a last non-zero coefficient position for Cr is not the DC position.

In case of the single-tree type, the LFNST index is transmitted if a last non-zero coefficient position is not the DC position in even one of the luma component, the Cb component, and the Cr component.

Herein, if a coded block flag (CBF) value indicating whether a transform coefficient exits for one transform block is 0, a last non-zero coefficient position for the transform block is not checked to determine whether the LFNST index is signaled. That is, if the CBF value is 0, since a transform is not applied to the block, the last non-zero coefficient position may not be considered when a condition for the LFNST index signaling is checked.

For example, 1) in case of a dual-tree type and a luma component, the LFNST index is not signaled if a corresponding CBF value is 0, 2) in case of the dual-tree type and a chroma component, the LFNST index is transmitted by checking only a last non-zero coefficient position for Cr if a CBF value for Cb is 0 and a CBF value for Cr is 1, and 3) in case of a single-tree type, the last non-zero coefficient position is checked only for components of which respective CBF values are 1 for all of luma, Cb, and Cr.

F. When it is identified that a transform coefficient exists at a position other than a position where the LFNSF transform coefficient may exist, the LFNST index signaling may be skipped. In case of a 4x4 transform block and an 8x8 transform block, the LFNST transform coefficient may exist at 8 positions from a DC position according to a transform coefficient scanning order in the VVC standard, and all of the remaining positions are filled with 0. In addition, when the transform block is not the 4x4 transform block and the 8x8 transform block, the LFNST transform coefficient may exist at 16 positions from the DC position according to the transform coefficient scanning order in the VVC standard, and all of the remaining positions are filled with 0.

Accordingly, when the non-zero transform coefficient exists in a region to be filled with 0 after residual coding is performed, the LFNST index signaling may be skipped.

Meanwhile, an ISP mode may be applied to only the luma block or may be applied to both the luma block and the chroma block. As described above, when ISP prediction is applied, it is predicted by splitting a corresponding coding unit into 2 or 4 partition blocks, and a transform may be applied to each of the partition blocks. Accordingly, a fact that the LFNST is applicable to each of the partition blocks shall also be considered when a condition in which an LFNST index is signaled is determined on a coding unit basis. In addition, when the ISP prediction mode is applied only for a specific component (e.g., luma block), the LFNST index shall be signaled by considering a fact that splitting into partition blocks is achieved only for the component. LFNST index signaling schemes which are possible when in the ISP mode are summarized as follows.

1. The LFNST index may be transmitted once for each coding unit (CU). In a dual-tree case, an individual LFNST index may be signaled for each of a luma block and a chroma block.
2. When the LFNST index is not signaled, an LFNST index value is inferred to be 0 as a default value. The LFNST index value is inferred to be 0 in the following cases.

A. When in a mode in which a transform is not applied (e.g., transform skip, a BDPCM lossless coding, etc.)
B. When a horizontal length or vertical length for a luma block of a coding unit exceeds a size of a transformable maximum luma transform, for example, when the size for the luma block of the coding block is 128x16 in a case where the size of the transformable maximum luma transform is 64, the LFNST is not applicable.

Whether the LFNST index is signaled may also be determined based on a size of a partition block instead of the coding unit. That is, when a horizontal length or vertical length for a partition block of a corresponding luma block exceeds a size of a transformable maximum luma transform, the LFNST index signaling may be skipped and the LFNST index may be inferred to be 0.

In the dual-tree case, it is determined whether each of the coding unit or partition block for the luma component and the coding unit or partition block for the chroma component exceeds the maximum transform block size. That is, each of horizontal and vertical lengths of the coding unit or partition block for the luma is compared with the maximum luma transform size, and if any one of them is greater than the maximum luma transform size, the LFNST is not applied, and in case of the coding unit or partition block for the chroma, horizontal/vertical lengths of a corresponding luma block for a color format and the transformable maximum luma transform size are compared. For example, when the color format is 4:2:0, each of the horizontal/vertical length of the corresponding luma block is twice that of the chroma block, and the transform size of the corresponding luma block is twice that of the chroma block. As another example, when the color format is 4:4:4, the horizontal/vertical length of the corresponding luma block is the same as that of the chroma block.

In a single-tree case, it is checked whether the luma block (coding unit or partition block) exceeds the size of the transformable maximum luma transform block, and if it exceeds the size, LFNST index signaling may be skipped.

C. If LFNST included in the current VVC standard is applied, the LFNST index may be transmitted only when both the horizontal length and vertical length of the partition block are greater than or equal to 4.

If up to LFNST for a 2xM (1×M) or Mx2 (Mxl) block is applied in addition to the LFNST included in the current VVC standard, the LFNST index may be transmitted only when a partition block has a size greater than or equal to the 2xM (1×M) or Mx2 (Mxl) block. Herein, a PxQ block greater than or equal to an RxS block means that P≥R and Q≥S.

In summary, the LFNST index may be transmitted only when the partition block has a size greater than or equal to a minimum size applicable to the LFNST. In the dual-tree case, the LFNST index may be signaled only when a partition block for a luma or chroma component has a size greater than or equal to the minimum size applicable to the LFNST. In the single-tree case, the LFNST index may be signaled only when the partition block for the luma component has a size greater than or equal to the minimum size applicable to the LFNST.

In this document, an MxN block greater than equal to a KxL block means that M is greater than or equal to K, and N is greater than or equal to L. The MxN block greater than the LxL block means that M is greater than or equal to K and N is greater than or equal to L, where M is greater than K or N is greater than L. The MxN block less than or equal to the KxL means that N is less than or equal to K, N is less than or equal to L. The MxN block less than the KxL block means that M is less than or equal to K and N is less than or equal to L, where M is less than K or N is less than L.

D. In a case where a last non-zero coefficient position is not a DC position (a top-left position of a block), when it is a dual-tree type luma block, LFNST transmission may be performed if a corresponding last non-zero coefficient position is not the DC position in even any one of all partition blocks. When it is a dual-tree type and a chroma block, a corresponding LNFST index may be transmitted if even any one of a non-zero coefficient position of all partition blocks for Cb (herein, when an ISP mode is not applied to a chroma component, it is regarded that the number of partition blocks is one) and a last non-zero coefficient position of all partition blocks for Cr (herein, when the ISP mode is not applied to the chroma component, it is regarded that the number of partition blocks is one) is not the DC position.

In case of the single-tree type, a corresponding LNFST index may be transmitted if a last non-zero position is not a DC position in even any one of all partition blocks for the luma component, Cb component, and Cr component.

Herein, if a coded block flag (CBF) value indicating whether a transform coefficient exists for each partition block is 0, a last non-zero coefficient position for a corresponding partition block is not checked to determine whether an LFNST index is signaled. That is, if the CBF value is 0, since a transform is not applied to the block, the last non-zero coefficient position is not considered when a condition for the LFNST index signaling is checked.

For example, 1) in case of a dual-tree type and a luma component, a corresponding partition block may be excluded when determining whether the LFNST index is signaled for each partition block, if a corresponding CBF value is 0, 2) in case of the dual-tree type and a chroma component, whether the LFNST index is signaled may be determined by checking only a non-zero coefficient position for Cr for each partition block if a CBF value for Cb is 0 and a CBF value for Cr is 1, and 3) in case of a single-tree type, whether the LFNST index is signaled may be determined by checking the last non-zero coefficient position only for blocks of which CBF values are 1 for all partition blocks of luma, Cb, and Cr components.

In case of the ISP mode, image information may be configured not to check the last non-zero coefficient position, and an embodiment thereof may be as follows.

i. In case of the ISP mode, LFNST index signaling may be allowed by skipping a check for a non-zero coefficient position for both the luma block and the chroma block. That is, the LFNST index signaling may be allowed even if a last non-zero coefficient position is a DC position for all partition blocks or a corresponding CBF value is 0.

ii. In case of the ISP mode, a check for a non-zero coefficient position may be skipped only for a luma block, and the non-zero coefficient position may be checked for a chroma block, based on the aforementioned scheme. For example, in case of the dual-tree type and the luma block, LFNST index signaling is allowed without checking the non-zero coefficient position, and in case of the dual-tree type and the chroma block, whether the LFNST index is signaled may be determined by checking whether a DC position exists for the last non-zero coefficient position through the aforementioned scheme.

iii. In case of the ISP mode and the single-tree type, the scheme i or ii may be applied. That is, in case of the ISP mode and the single-tree type, when the scheme i is applied, the LFNST index signaling may be allowed by skipping a check for the last non-zero coefficient position for both the luma block and the chroma block. Alternatively, the scheme ii may be applied to determine whether the LFNST index is signaled in such a manner that the check for the non-zero coefficient position is skipped for partition blocks for the luma component and the check for the non-zero coefficient position is performed for partition blocks for the chroma component (the number of partition blocks may be considered to be 1 when the ISP is not applied to the chroma component) through the aforementioned scheme.

E. The LFNST index signaling may be skipped if it is identified that a transform coefficient exists at a position other than a position where the LFNST transform coefficient may exist for even one partition block among all partition blocks.

For example, in case of a 4x4 partition block and an 8x8 partition block, the LFNST transform coefficient may exist at 8 positions from a DC position according to a transform coefficient scanning order in the VVC standard, and all of the remaining positions are filled with 0. In addition, when the transform block is greater than or equal to a 4x4 size and is not the 4x4 partition block and the 8x8 partition block, the LFNST transform coefficient may exist at 16 positions from the DC position according to the transform coefficient scanning order in the VVC standard, and all of the remaining positions are filled with 0.

Accordingly, when the non-zero transform coefficient exists in a region to be filled with 0 after residual coding is performed, the LFNST index signaling may be skipped.

If the LFNST is also applicable when the partition block has a size of 2xM ($1\times M$) or Mx2 ($M\times1$), a region where the LFNST transform coefficient is located may be specified as follows. The LFNST index signaling may be skipped if a region outside the region where the transform coefficient is located may be filled with 0 and if a non-zero transform coefficient exists in a region to be filled with 0 when it is assumed that the LFNST is applied.

i. If the LFNST is applicable to the 2xM or Mx2 block and if M=9, only 8 LFNST transform coefficients may be generated for 2x8 or 8x2 partition blocks. When the transform coefficient is arranged according to the scanning order of FIG. 18, 8 transform coefficients may be arranged according to the scanning order from a DC position, and the remaining 8 positions may be filled with 0.

When 16 LFNST transform coefficients may be generated for a 2xN or Nx2 (N > 8) partition block and when the transform coefficients are arranged according to the scanning order of FIG. 18, 16 transform coefficients may be arranged according to the scanning order from the DC position, and the remaining positions may be filled with 0. That is, in the 2xN or Nx2 (N > 8) partition block, a region other than a top-left 2x8 or 8x2 block may be filled with 0. Instead of the 8 LFNST transform coefficients, 16 transform coefficients may also be generated for the 2x8 or 8x2 partition blocks. In this case, there is no region to be filled with 0. As described above, when the LFNST is applied, upon determining that a non-zero transform coefficient exists in a region determined to be filled with 0 even in one partition block, the LFNST index signaling may be skipped and the LFNST index may be inferred to be 0.

ii. If the LFNST is applicable to the $1\times M$ or $M\times1$ block and if M=16, only 8 LFNST transform coefficients may be generated for 1x16 or 16x1 partition blocks. When the transform coefficient is arranged according to a scanning order from left to right or from top to bottom, 8 transform coefficients may be arranged according to a corresponding scanning order from a DC position, and the remaining 8 positions may be filled with 0.

When 16 LFNST transform coefficients may be generated for the $1\times N$ or $N\times1$ (N > 16) partition blocks and when the transform coefficient is arranged according to the scanning order from left to right or from top to bottom, 16 transform coefficients may be arranged according to a corresponding scanning order from a DC position, and the remaining positions may be filled with 0. That is, a region other than a top-left $1\times16$ or $16\times1$ block in the $1\times N$ or $N\times1$ (N > 16) partition blocks may be filled with 0.

Instead of the 8 LFNST transform coefficients, 16 transform coefficients may also be generated for the 1x16 or 16x1 partition blocks. In this case, there is no region to be filled with 0. As described above, when the LFNST is applied, upon determining that a non-zero transform coefficient exists in a region determined to be filled with 0 even in one partition block, the LFNST index signaling may be skipped and the LFNST index may be inferred to be 0.

Meanwhile, in case of the ISP mode, instead of DCT-2, DST-7 is applied without signaling for an MTS index in the current VVC standard by considering a length condition independently for each of a horizontal direction and a vertical direction. Whether a horizontal or vertical length is greater than or equal to 4 or greater than or equal to 16 is determined, and a primary transform kernel is determined according to a result of the determination. Accordingly, when in the ISP mode and when the LFNST is applicable, a transform combination may be configured as follows.

1. In a case where the LFNST index is 0 (including a case where the LFNST index is inferred to be 0), it may conform to a condition of determining a primary transform when the ISP is included in the current VVC standard. That is, whether a length condition is satisfied independently for each of a horizontal direction and a vertical direction (a condition in which a length is greater than or equal to 4 and less than or equal to 16) is checked, and DST-7 is applied for the primary transform instead of DCT-2 if the condition is satisfied, and DCT-2 may be applied if the condition is not satisfied.

2. In a case where the LFNST index is greater than 0, the following two configurations may be possible for the primary transform.

A. DCT-2 is applicable to both the horizontal direction and the vertical direction.

B. It may conform to the condition of determining the primary transform when the ISP is included in the current VVC standard. That is, whether a length condition is satisfied independently for each of a horizontal direction and a vertical direction (a condition in which a length is greater than or equal to 4 and less than or equal to 16) is checked, and DST-7 is applied instead of DCT-2 if the condition is satisfied, and DCT-2 may be applied if the condition is not satisfied.

When in the ISP mode, image information may be configured so that the LFNST index is transmitted not every coding unit but every partition block. In this case, whether the LFNST index is signaled may be determined by regarding that only one partition block exists in units by which the LFNST index is transmitted in the aforementioned LFNST index signaling scheme.

Embodiments in which the LFNST is applied in the aforementioned ISP mode is summarized as follows.

(1) When the LFNST is applied in the ISP mode, a transform unit to be split shall have a size of at least 4x4.

(2) The same LFNST kernel as the existing LFNST kernel applied to a coding unit to which the ISP mode is not applied may be used.

(3) All transform units shall satisfy a maximum last position value condition (a condition for a position of a last non-zero significant coefficient). If one or more transform units do not satisfy the maximum last position value, the LFNST is not used, and the LFNST index is not parsed.

(4) When the ISP mode is applied, a configuration in which the LFNST is applicable only when a significant coefficient exists at a position other than a DC position may be ignored.

(5) When the LFNST is applied, a primary transform of a transform unit to which the ISP is applied uses DCT-2.

Table 8 below shows a syntax element including the aforementioned content.

[Table 8]

| |
|---|
| LfnstDcOnly = 1 |
| LfnstZeroOutSigCoeffFlag = 1 |
| transform_tree( x0, y0, cbWidth, cbHeight, treeType) |
| lfnstWidth = ( treeType == DUAL_TREE_CHROMA) ? cbWidth / SubWidthC : (( IntraSubPartitionsSplitType == ISP_VER_SPLIT) ? cbWidth / NumIntraSubPartitions : cbWidth) |
| lfnstHeight = (treeType == DUAL_TREE_CHROMA) ? cbHeight / SubHeightC : (( IntraSubPartitionsSplitType == ISP_HOR_SPLIT) ? cbHeight / NumIntraSubPartitions : cbHeight) |
| if( Min( lfnstWidth, lfnstHeight) >=4 && sps_lfnst_enabled_flag == 1 && CuPredMode[ chType ][ x0 ][ y0 ] == MODE_INTRA && ( !intra_mip_flag[ x0 ][ y0 ] ‖ Min( lfnstWidth, lfnstHeight) >= 16) && tu_mts_idx[ x0 ][ y0 ] == 0 && Max( cbWidth, cbHeight) <= MaxTbSizeY) { |
| if( (IntraSubPartitionsSplitType != ISP_NO_SPLIT ‖ LfnstDcOnly == 0) && LfnstZeroOutSigCoeffFlag == 1 ) |
| **lfnst_idx**[ x0 ][ y0 ] |
| } |

Table 8 configures a width and height of a region to which the LFNST is applied based on a tree type, and shows conditions for transmitting the LFNST index. Syntax elements of Table 8 may be signaled at a coding unit (CU) level. In a dual-tree case, an individual LFNST index may be signaled for each of a luma block and a chroma block.

First, if a tree type of a coding unit is a dual tree chroma, a width "lfnstWidth" of the region to which the LFNST is applied may be set to a width to which a color format is applied in a width of the coding unit ((treeType = = DUAL_TREE_CHROMA) ? cbWidth / SubWidthC).

Meanwhile, if the tree type of the coding unit is not the dual-tree chroma, that is, if it is the dual-tree luma or the single tree, the width "lfnstWidth" of the region to which the LFNST is applied may be set to a width of the coding unit or a value obtained by dividing the coding unit by the number of sub-partitions according to whether the coding unit is split by the ISP ((IntraSubPartitionsSplitType = = ISP_VER_SPLIT) ? cbWidth / NumIntraSubPartitions : cbWidth). That is, if the coding unit is split in a vertical direction by the ISP (IntraSubPartitionsSplitType = = ISP_VER_SPLIT), the width of the region to which the LFNST is applied may be set to a value (cbWidth / NumIntraSubPartitions) obtained by dividing the coding unit by the number of sub-partitions. Otherwise, if the coding unit is not split, the width of the region may be set to a width "cbWidth" of the coding unit.

Similarly, a height "lfnstHeight" of the region to which the LFNST is applied may be set to a height to which a color format is applied in a height of the coding unit ((treeType = = DUAL_TREE_CHROMA) ? cbHeight / SubHeightC).

Meanwhile, if the tree type of the coding unit is not the dual-tree chroma, that is, if it is the dual-tree luma or the single tree, the height "lfnstHeight" of the region to which the LFNST is applied may be set to a height of the coding unit or a value obtained by dividing the coding unit by the number of sub-partitions according to whether the coding unit is split by the ISP((IntraSubPartitionsSplitType = = ISP_HOR_SPLIT) ? cbHeight / NumIntraSubPartitions : cbHeight). That is, if the coding unit is split in a horizontal direction by the ISP (IntraSubPartitionsSplitType = = ISP_HOR_SPLIT), the height of the region to which the LFNST is applied may be set to a value (cbHeight / NumIntraSubPartitions) obtained by dividing the coding unit by the number of sub-partitions. Otherwise, if the coding unit is not split, the height of the region may be set to a height "cbHeight" of the coding unit.

As such, in order to apply the LFNST, the width and height of the region to which the LFNST is applied shall be greater than or equal to 4 (Min( lfnstWidth, lfnstHeight ) >= 4). That is, in case of dual-tree coding, the LFNST index may be signaled only when a horizontal length and vertical length for a corresponding component (i.e., a luma or chroma component) are greater than or equal to 4, and in a single-tree case, the LFNST index may be signaled when both a horizontal length and vertical length of a luma component are greater than or equal to 4.

When the ISP is applied to the coding unit, the LFNST index may be transmitted only when both the horizontal length and vertical length of the partition block are greater than or equal to 4.

In addition, if the horizontal length or vertical length for the luma block of the coding unit exceeds a size of a transformable maximum luma transform block (if a condition of Max( cbWidth, cbHeight ) <= MaxTbSizeY is not satisfied), the LFNST is not applicable, and the LFNST index is not transmitted.

In addition, the LFNST index may be signaled only when a last non-zero coefficient position is not a DC position (a top-left position of the block).

In case of a dual-tree type luma block, the LFNST index is transmitted if the last non-zero coefficient position is not the DC position. In case of a dual-tree type chroma block, the LFNST index is transmitted if even any one of a last non-zero coefficient position for Cb and a last non-zero coefficient position for Cr is not the DC position. In a single-tree type case, the LFNST index may be transmitted if a corresponding last non-zero coefficient position is not the DC position in even any one of the luma component, the Cb component, and the Cr component.

Meanwhile, when the ISP is applied to the coding unit, the LFNST index may be signaled without checking the last non-zero coefficient position (IntraSubPartitionsSplitType ! = ISP_NO_SPLIT | | LfnstDcOnly = = 0). That is, the LFNST index signaling may be allowed even if a last non-zero coefficient position for all partition blocks is located at a DC position. The DC position indicates a top-left position of a corresponding block.

Finally, when it is identified that a transform coefficient exists at a position other than a position where the LFNSF transform coefficient may exist, the LFNST index signaling may be skipped (LfnstZeroOutSigCoeffFlag = = 1).

When the ISP is applied to the coding unit, LFNST index signaling may be skipped if it is identified that a transform coefficient exists at a position other than a position where the LFNST transform coefficient may exist for even one partition block among all partition blocks.

Hereinafter, an embodiment in which an LFNST kernel sampled from an 8x8 LFNST is applied in case of an ISP mode is described.

According to an embodiment, kernel data may be sampled from the 8x8 LFNST (a 16x48 matrix for forward LFNST, e.g., an 8x8 LFNST included in the current VVC standard) to derive an LFNST kernel (A) applicable to a top-left 4x4 block, an LFNST kernel (B) applicable to a top-left 4x8 block, and an LFNST kernel (C) applicable to a top-left 8x4 block.

The derived kernels may be used as LFNST kernels when in the ISP mode and when the LFNST is applied. For example, (A) may be applied to the 4x4 ISP partition block, (B) may be applied to the Nx4 ISP partition block (N ≥ 8), and (C) may be applied to the 4xN ISP partition block (N ≥ 8). The existing 8x8 LFNST (e.g., the 8x8 LFNST included in the current VVC standard) may be applied to an ISP partition of which both a horizontal length and a vertical length are greater than or equal to 8.

A 16x48 LFNST kernel for LFNST has been proposed to unify an amount of LFNST computation and to reduce memory usage. For example, a block having a small size such as 4xN or Nx4 may be regarded as part of an 8xN or Nx8 block. To this end, a portion overlapping with the 16x48 LFNST kernel, that is, part of the 16x48 LFNST kernel, may be used as the LFNST kernel.

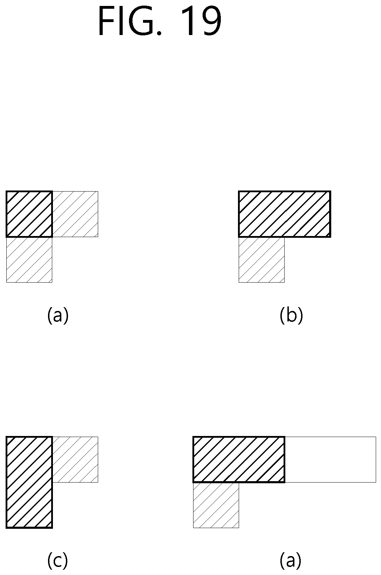

FIG. 19 is a drawing illustrating a sampled LFSNT kernel when in an ISP mode according to an embodiment.

In case of forward LFNST, when a $16 \times 48$ LFNST kernel is applied to a $4 \times N$ or $N \times 4$ block, a matrix overlapping with the $16 \times 48$ LFNST kernel may be used for a secondary transform.

The $16 \times 48$ LFNST kernel of FIG. 19 is applicable to a $4 \times 4$, $8 \times 4$, $4 \times 8$, and $16 \times 4$ region. (a) of FIG. 19 illustrates that only a kernel of a portion overlapping with the 4x4 region is used when the $16 \times 48$ LFNST kernel is applied to the 4x4 region. (b) of FIG. 19 illustrates that only a kernel of a portion overlapping with the 8x4 region is used when the $16 \times 48$ LFNST kernel is applied to the 8x4 region. (c) of FIG. 19 illustrates that only a kernel of a portion overlapping with the 4x8 region is used when the $16 \times 48$ LFNST kernel is applied to the 4x8 region. (d) of FIG. 19 illustrates that a 16x32 matrix overlapping with the 16x48 LFNST kernel of the 16x4 region may be used when the $16 \times 48$ LFNST kernel is applied to the 16x4 region.

In case of backward LFNST, 8 or 16 coefficients may be input, and 16 or 48 coefficients may be output as an output. Meanwhile, a computation for a transform may be performed only for a sample in a block size region, that is, for a coefficient, and the remaining samples are not computed. For example, in case of a 4x4 transform unit, when 8 coefficients and a 16x48 LFNST kernel are given, only a top-left 4x4 region is computed as an output, and a coefficient outside the 4x4 region is not computed.

In order to maintain the number of worst-case multiplication calculations per coefficient, only 8 coefficients are calculated for 8x4 and 4x8 blocks, which is equal to the number of calculations of LFNST applied to the existing 4x4 and 8x8 transform units.

The following drawings are provided to describe specific examples of the present disclosure. Since the specific designations of devices or the designations of specific signals/messages/fields illustrated in the drawings are provided for illustration, technical features of the present disclosure are not limited to specific designations used in the following drawings.

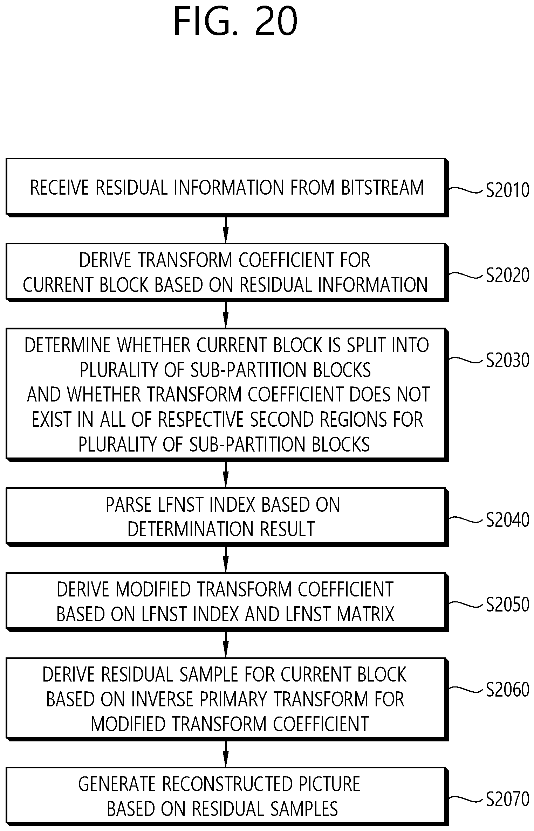

FIG. 20 is a flowchart illustrating an operation of a video decoding apparatus according to an embodiment of the present disclosure.

Each step disclosed in FIG. 20 is based on some of the descriptions mentioned above with reference to FIG. 2 to FIG. 19. Accordingly, detailed descriptions overlapping with those described above with reference to FIG. 2 to FIG. 19 will be omitted or simplified.

The decoding apparatus 200 according to an embodiment may receive residual information from a bitstream (S2010).

More specifically, the decoding apparatus 200 may decode information on quantized transform coefficients for the target block from the bitstream and may derive the quantized transform coefficients for the current block based on the information on the quantized transform coefficients for the current block. The information on the quantized transform coefficients for the target block may be included in a sequence parameter set (SPS) or a slice header and may include at least one of information on whether a reduced transform (RST) is applied, information on the simplification factor, information on a minimum transform size in which the reduced transform is applied, information on a maximum transform size in which the reduced transform is applied, a reduced inverse transform size, and information on a transform index indicating any one of transform kernel matrices included in a transform set.

In addition, the decoding apparatus may further include information on an intra prediction mode for the current block and information on whether ISP is applied to the current block. The decoding apparatus may derive whether the current block is split into a specific number of sub-partition transform blocks by receiving or parsing flag information indicating whether ISP coding or an ISP mode is applied. Herein, the current block may be a coding block. In addition, the decoding apparatus may derive a size of the number of sub-partition blocks split through flag information indicating a specific direction in which the current block is split.

For example, as shown in FIG. 14, if a size (width $\times$ height) of the current block is 8x4, the current block may be divided into 2 sub-blocks by being split in a vertical direction, and if the size (width $\times$ height) of the current block is 4x8, the current block may be divided into 2 sub-blocks by being split in a horizontal direction. Alternatively, as shown in FIG. 15, if the size (width $\times$ height) of the current block is greater than 4x8 or 8x4, that is, if the size of the current block is 1) 4xN or Nx4 (N $\geq$ 16) or 2) M $\times$ N (M $\geq$ 8, N $\geq$ 8), the current block may be split into 4 sub-blocks in a horizontal or vertical direction.

The same intra prediction mode is applied to the sub-partition block split from the current block, and the decoding apparatus may derive a prediction sample for each sub-partition block. That is, the decoding apparatus performs intra prediction sequentially, for example, horizontally or vertically, from left to right or from up to down, according to a split type of the sub-partition blocks. For the leftmost or uppermost sub-block, a reconstructed pixel of a coding block which has already been coded is referred, as in a conventional intra prediction scheme. In addition, when each side of a subsequent internal sub-partition block is not adjacent to a previous sub-partition block, in order to derive reference pixels adjacent to the corresponding side, a reconstructed pixel of an adjacent coding block which has already been coded is referred, as in the conventional intra prediction scheme.

The decoding apparatus 200 may derive transform coefficients by performing dequantization on residual information on the current block, i.e., quantized transform coefficients (S2020).

The derived transform coefficients may be arranged according to a reverse diagonal scan order in units of 4x4 blocks, and transform coefficients in the 4x4 block may also be arranged according to the reverse diagonal scan order. That is, transform coefficients subjected to dequantization may be arranged according to the reverse scan order applied to a video codec such as in VVC or HEVC.

The transform coefficient derived based on such residual information may be a dequantized transform coefficient as described above, or may be a quantized transform coefficient. That is, the transform coefficient may be any data capable of checking whether it is non-zero data in the current block irrespective of whether it is quantized or not.

The decoding apparatus may determine whether the transform coefficient exists in a second region other than a first region located at a top-left position of the current block, and if the transform coefficient does not exist in the second region, may parse an LFNST index. In addition, the decoding apparatus may determine whether the current block is split into a plurality of sub-partition blocks and whether the transform coefficient does not exist in all of the respective second regions for the plurality of sub-partition blocks (S2030).

The decoding apparatus may check whether zero-out is performed on the second region by deriving a first variable indicating whether a significant coefficient exists in the second region other than the first region located at the top-left position of the current block.

The first variable may be a variable LfnstZeroOutSigCoeffFlag capable of indicating that zero-out is performed when the LFNST is applied. The first variable may be initially set to 1, and if the significant coefficient exits in the second region, the second variable may be modified to 0.

The variable LfnstZeroOutSigCoeffFlag may be derived as 0 if an index of a sub-block in which a last non-zero coefficient exists is greater than 0 and both a width and height of a transform block are greater than or equal to 4, or if a last position of a non-zero coefficient in a sub-block in which a last non-zero coefficient exists is greater than 7 and a size of a transform block is 4x4 or 8x8. The sub-block means a 4x4 block used on a coding basis in case of residual coding, and may be referred to as a coefficient group (CG). When an index of the sub-block is not 0, it indicates a top-left 4x4 sub-block.

That is, the variable LfnstZeroOutSigCoeffFlag is set to 0 if a non-zero coefficient is derived in a region other than a top-left region in which an LFNST transform coefficient exists in a transform block, or if a non-zero coefficient exits beyond an $8^{th}$ position in a scan order for a 4x4 block and an 8x8 block.

According to an example, when ISP is applied to the coding unit, LFNST index signaling may be skipped if it is identified that a transform coefficient exists at a position other than a position where an LFNST transform coefficient may exist even for one sub-partition block among all sub-partition blocks. That is, if zero-out is not performed in one sub-partition block and a significant coefficient exists in the second region, the LFNST index is not signaled.

Meanwhile, the first region may be derived based on a size of the current block.

For example, if the size of the current block is 4x4 or 8x8, the first region may be up to an $8^{th}$ sample position in a scan direction from a top-left position of the current block. When the current block is split, if the size of the sub-partition block is 4x4 or 8x8, the first region may be up to an $8^{th}$ sample position in a scan direction from a top-left position of the sub-partition block.

If the size of the current block is 4x4 or 8x8, since 8 pieces of data are output through forward LFNST, 8 transform coefficients received in the decoding apparatus may be arranged to up to the $8^{th}$ sample position in the scan direction of the current block as shown in (a) of FIG. 11 and (a) of FIG. 12.

In addition, in the other cases where the size of the current block is not 4x4 or 8x8, the first region may be a 4x4 region of the top-left position of the current block. If the size of the current block is not 4x4 or 8x8, since 16 pieces of data are output through forward LFNST, 16 transform coefficients received in the decoding apparatus may be arranged in the 4x4 region of the top-left position of the current block as shown in (b) to (d) of FIG. 11 and (b) of FIG. 12.

Meanwhile, transform coefficients which may be arranged in the first region may be arranged according to a diagonal scan direction as shown in FIG. 7.

As described above, when the current block is split into sub-partition blocks, if a transform coefficient does not exist in all of respective second regions for a plurality of sub-partition blocks, the decoding apparatus may parse an LFNST index. If the transform coefficient exists in the second region for any one sub-partition block, the LFNST index is not parsed.

As described above, the LFNST may be applied to a sub-partition block of which a width and a height are greater than or equal to 4, and the LFNST index for the current block which is a coding block may be applied to the plurality of sub-partition blocks.

Meanwhile, since zero-out to which LFNST is applied (including every zero-out which may be involved to apply the LFNST) is also directly applied to a sub-partition block, the first region is also equally applied to the sub-partition block. That is, if the split sub-partition block is a 4x4 block or an 8x8 block, the LFNST is applied to a transform coefficient from a top-left position of the sub-partition block to up to an $8^{th}$ transform coefficient in a scan direction, and if the sub-partition block is not the 4x4 block or the 8x8 block, the LFNST may be applied to the transform coefficient of a top-left 4x4 region of the sub-partition block.

Meanwhile, according to an embodiment, in order to determine whether the LFNST index is parsed, the decoding apparatus may derive a second variable indicating whether the transform coefficient, i.e., a significant coefficient, exists in a region other than the DC position of the current block.

The second variable may be a variable LfnstDcOnly which may be derived in a residual coding process. The second variable may be derived as 0 if an index of a sub-block including a last significant coefficient in the current block is 0 and a position of the last significant coefficient in the sub-block is greater than 0, and the LFNST index may be parsed if the second variable is 0. The sub-block means a 4x4 block used as a coding unit in residual coding, and may be referred to as a coefficient group (CG). A sub-block index 0 indicates a top-left 4x4 sub-block.

The second variable may be initially set to 1, and may be maintained to be 1 or may be changed to 0 according to whether the significant coefficient exists in the region other than the DC position.

The variable LfnstDcOnly indicates whether a non-zero coefficient exists at a position other than a DC component for at least one transform block in one coding unit, and may be 0 if the non-zero coefficient exists in the DC component for at least one transform block in one coding unit, and may be 1 if the non-zero coefficient does not exist at the position other than the DC component for all transform blocks in one coding unit.

The decoding apparatus may parse the LFNST index, based on a derived result (S2040).

That is, when the current block is slit into a plurality of sub-partition blocks, if a transform coefficient does not exist in all of respective second regions for a plurality of sub-partition blocks, the decoding apparatus may perform the LFNST by parsing the LFNST index.

LFNST index information may be received as syntax information, and the syntax information may be received as a binarized bin string including 0 and 1.

A syntax element of the LFNST index according to the present embodiment may indicate whether an inverse LFNST or an inverse non-separable transform is applied and any one of transform kernel matrices included in a transform set. When the transform set includes two transform kernel matrices, the syntax element of the transform index may have 3 values.

That is, according to an embodiment, the syntax element value for the LFNST index may include 0 indicating a case where the inverse LFNST is not applied, 1 indicating a first transform kernel matrix among the transform kernel matrices, and 2 indicating a second transform kernel matrix among the transform kernel matrices.

The intra prediction mode information and the LFNST index information may be signaled at a coding unit level.

Meanwhile, the decoding apparatus may parse the LFNST index without deriving the second variable based on the current block being split into the plurality of sub-partition blocks.

According to an embodiment, if the current block is not split into the plurality of sub-partition blocks and if the second variable indicates that the transform coefficient exists in the region other than the DC position, the decoding apparatus may parse the LFNST index. If the current block is split into the plurality of sub-partition blocks, the LFNST index may be parsed without having to check the second variable or by ignoring the first variable value.

That is, when the ISP is applied to the current block, the LFNST index signaling may be allowed even if the last non-zero coefficient for all sub-partition blocks is located at the DC position.

The decoding apparatus may derive modified transform coefficients from the transform coefficient based on the LFNST index and the LFNST matrix for the LFNST (S2050).

The LFNST is a non-separable transform in which a transform is applied without having to separate coefficients in a specific direction, unlike the primary transform in which coefficients to be subjected to the transform are transmitted by being separated in a vertical or horizontal direction. Such a non-separable transform may be a low-frequency non-separable transform in which a forward transform is applied only in a low-frequency region, not the entire block region.

The decoding apparatus may determine an LFNST set including the LFNST matrix based on the intra prediction mode derived from intra prediction mode information, and select any one of the plurality of LFNST matrices based on the LFNST set and the LFNST index.

In this case, the same LFNST set and the same LFNST index may be applied to the sub-partition transform block divided from the current block. That is, because the same intra prediction mode is applied to the sub-partition transform blocks, the LFNST set determined based on the intra prediction mode may be equally applied to all sub-partition transform blocks. Further, because the LFNST index is signaled at a coding unit level, the same LFNST matrix may be applied to the sub-partition transform block divided from the current block.

As described above, the transform set may be determined according to the intra prediction mode of the transform block to be transformed, and inverse LFNST may be performed based on any one of transform kernel matrices, that is, LFNST matrices, included in the transform set indicated by the LFNST index. A matrix applied to the inverse LFNST may be referred to as an inverse LFNST matrix or an LFNST matrix, and such a matrix may have any name as long as it has a transpose relationship with the matrix used for the forward LFNST.

In one example, the inverse LFNST matrix may be a non-square matrix in which the number of columns is smaller than the number of rows.

A predetermined number of transform coefficients, which are output data of LFNST may be derived based on the size of the current block or a sub-partition transform block. For example, when the height and width of the current block or the sub-partition transform block are 8 or more, 48 transform coefficients may be derived, as illustrated in the left of FIG. 6, and when the width and height of the sub-partition transform block are not 8 or more, that is, when the width or height of the sub-partition transform block is 4 or more and less than 8, 16 transform coefficients may be derived, as illustrated in the right side of FIG. 6.

As illustrated in FIG. 6, 48 transform coefficients may be arranged in the top-left, top-right, and lower left 4x4 regions of the top-left 8x8 region of the sub-partition transform block, and 16 transform coefficients may be arranged in the top-left 4x4 region of the sub-partition transform block.

The 48 transform coefficients and 16 transform coefficients may be arranged in a vertical or horizontal direction according to an intra prediction mode of the sub-partition transform block. For example, when the intra prediction mode is a horizontal direction (modes 2 to 34 in FIG. 4) based on a diagonal direction (mode 34 in FIG. 4), the transform coefficients may be arranged in a horizontal direction, that is, in row-first direction order, as illustrated in (a) of FIG. 6, and when the intra prediction mode is a vertical direction (modes 35 to 66 in FIG. 4) based on a diagonal direction, the transform coefficients may be arranged in a horizontal direction, that is, in column-first direction order, as illustrated in (b) of FIG. 6.

The decoding apparatus may derive residual samples for the current block, based on an inverse primary transform for the modified transform coefficient (S2060).

In this case, the inverse primary transform may use a conventional separated transform, or may use the aforementioned MTS.

Subsequently, the decoding apparatus 200 may generate reconstructed samples, based on residual samples for the current block and prediction samples for the current block (S2070).

The following drawings are provided to describe specific examples of the present disclosure. Since the specific designations of devices or the designations of specific signals/messages/fields illustrated in the drawings are provided for illustration, technical features of the present disclosure are not limited to specific designations used in the following drawings.

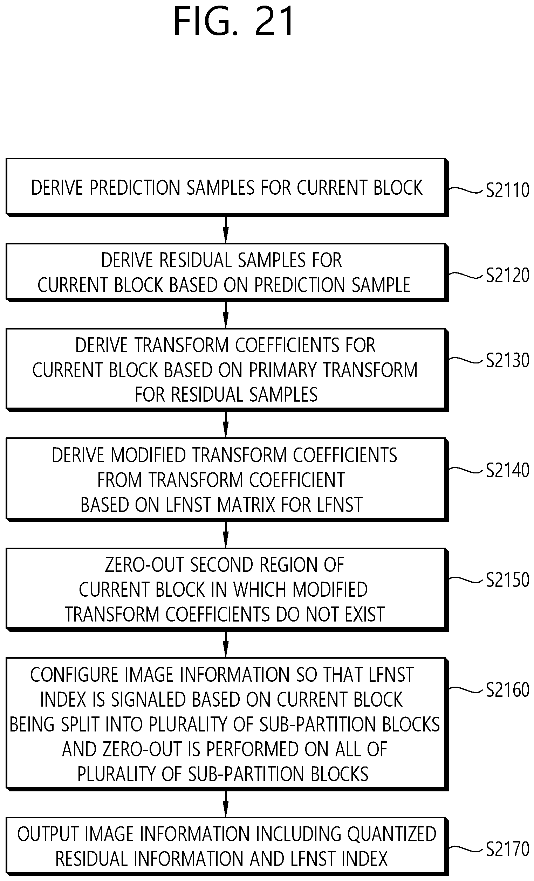

FIG. 21 is a flowchart illustrating an operation of a video encoding apparatus according to an embodiment of the present disclosure.

Each step disclosed in FIG. 21 is based on some of the descriptions mentioned above with reference to FIG. 3 to FIG. 19. Accordingly, detailed descriptions overlapping with those described above with reference to FIG. 1 and FIG. 3 to FIG. 19 will be omitted or simplified.

The encoding apparatus 100 according to an embodiment may derive a prediction sample for a current block, based on an intra prediction mode applied to a current block (S2110).

When ISP is applied to the current block, the encoding apparatus may perform prediction for each sub-partition transform block.

The encoding apparatus may determine whether to apply ISP coding or an ISP mode to the current block, that is, the coding block, determine a direction in which the current block will be divided according to the determination result, and derive the size and number of divided sub-blocks.

For example, when the size (width × height) of the current block is 8x4, as illustrated in FIG. 14, the current block may be vertically divided and divided into two sub-blocks, and when the size (width × height) of the current block is 4x8, the current block may be horizontally divided and divided into two sub-blocks. Alternatively, as illustrated in FIG. 15, when the size (width × height) of the current block is greater than 4x8 or 8x4, that is, when the size of the current block is 1) 4xN or Nx4 (N ≥ 16) or 2) M × N (M ≥ 8, N ≥ 8), the current block may be divided into 4 sub-blocks in a horizontal or vertical direction.

The same intra prediction mode may be applied to the sub-partition transform block divided from the current block, and the encoding apparatus may derive a prediction sample for each sub-partition transform block. That is, the encoding apparatus sequentially performs intra prediction, for example, horizontally or vertically, from left to right, or from top to bottom according to a division form of the sub-partition transform blocks. For the leftmost or uppermost subblock, a reconstructed pixel of an already coded coding block is referred to, as in a conventional intra prediction method. Further, for each side of the subsequent internal sub-partition transform block, when it is not adjacent to the previous sub-partition transform block, in order to derive reference pixels adjacent to the corresponding side, a reconstructed pixel of an already coded adjacent coding block is referred to, as in a conventional intra prediction method.

The encoding apparatus 100 may derive residual samples of the current block based on prediction samples (S2120).

Further, the encoding apparatus 100 may derive transform coefficients for the current block based on a primary transform of the residual sample (S2130).

The primary transform may be performed through a plurality of transform kernels, and in this case, a transform kernel may be selected based on the intra prediction mode.

The encoding apparatus 100 may determine whether to perform a secondary transform or a non-separable transform on transform coefficients for the current block, specifically, determine whether to perform an LFNST, and may derive modified transform coefficients by applying the LFNST to the transform coefficient.

The LFNST is a non-separable transform in which a transform is applied without having to separate coefficients in a specific direction, unlike the primary transform in which coefficients to be subjected to the transform are transmitted by being separated in a vertical or horizontal direction. Such a non-separable transform may be a low-frequency non-separable transform in which a transform is applied only in a low-frequency region, not the entire target block to be subjected to the transform.

When the ISP is applied to the current block, the encoding apparatus may determine whether the LFNST is applicable to a height and width of a split sub-partition block.

The encoding apparatus may determine whether the LFNST is applicable to the height and width of the split sub-partition block. In this case, when the height and width of the sub-partition block are greater than or equal to 4, the decoding apparatus may parse an LFNST index.

In addition, the encoding apparatus may determine whether the LFNST is applicable based on a color format and a tree type of the current block.

According to an embodiment, when the tree type of the current block is a dual-tree type, the encoding apparatus may determine that the LFNST is applied if a height and width corresponding to a chroma component block of the current block are greater than or equal to 4.

In addition, according to an embodiment, when the tree type of the current block is a single-tree or dual-tree luma, the encoding apparatus may determine that the LFNST is applicable if a height and width corresponding to a luma component block of the current block are greater than or equal to 4.

For example, when the tree type of the current block is a dual-tree chroma, the ISP may not be applied. In this case, the encoding apparatus may determine that the LFNST is applicable if a height and width corresponding to a chroma component block of the current block are greater than or equal to 4.

On the other hand, when the tree type of the current block is not the dual-tree chroma but the dual-tree luma or the single-tree, the encoding apparatus may determine that the LFNST is applicable if a height and width of a sub-partition block for a luma component block of the current block or a height and width of the current block are greater than or equal to 4 according to whether the ISP is applied to the current block.

In addition, according to an embodiment, when the current block is a coding unit and when a width and height of the coding unit are less than or equal to a size of a transformable maximum luma transform, the encoding apparatus may determine that the LFNST is applicable.

When it is determined to perform LFNST, the encoding apparatus 100 may derive a modified transform coefficient for the current block or the sub-partition transform block based on an LFNST set mapped to the intra prediction mode and an LFNST matrix included in the LFNST set (S2240).

The encoding apparatus 100 may determine the LFNST set based on a mapping relationship according to the intra prediction mode applied to the current block, and perform an LFNST, that is, a non-separable transform based on one of two LFNST matrices included in the LFNST set.

In this case, the same LFNST set and the same LFNST index may be applied to the sub-partition transform block divided from the current block. That is, because the same intra prediction mode is applied to the sub-partition transform blocks, the LFNST set determined based on the intra prediction mode may also be equally applied to all sub-partition transform blocks. Further, because the LFNST index is encoded in units of a coding unit, the same LFNST matrix may be applied to the sub-partition transform block divided from the current block.

As described above, a transform set may be determined according to an intra prediction mode of a transform block to be transformed. A matrix applied to LFNST has a transpose relationship with a matrix used for an inverse LFNST.

In one example, the LFNST matrix may be a non-square matrix in which the number of rows is smaller than that of columns.

A region in which transform coefficients used as input data of LFNST are located may be derived based on the size of a sub-partition transform block. For example, when the height and width of the sub-partition transform block are 8 or more, the region is top-left, top-right, and bottom-left 4x4 regions of the top-left 8x8 region of the sub-partition transform block, as illustrated in the left of FIG. 6, and when the height and width of the sub-partition transform block are not equal to or greater than 8, the region may be the top-left 4x4 region of the current block, as illustrated in the right side of FIG. 6.

For a multiplication calculation with an LFNST matrix, transform coefficients of the aforementioned region may be read in a vertical or horizontal direction according to an intra prediction mode of a sub-partition transform block to constitute a 1-dimensional vector.

48 modified transform coefficients or 16 modified transform coefficients may be read in a vertical or horizontal direction according to the intra prediction mode of the sub-partition transform block and arranged in one dimension. For example, when the intra prediction mode is a horizontal direction (modes 2 to 34 in FIG. 3) based on a diagonal direction (mode 34 in FIG. 3), the transform coefficients may be arranged in a horizontal direction, that is, in row-first direction order, as illustrated in (a) of FIG. 6, and when the intra prediction mode is a vertical direction (modes 35 to 66 in FIG. 3) based on a diagonal direction, the transform coefficients may be arranged in a horizontal direction, that is, in column-first direction order, as illustrated in (b) of FIG. 6.

In one embodiment, the encoding apparatus may include steps of determining whether the encoding apparatus is in a condition to apply LFNST, generating and encoding an LFNST index based on the determination, selecting a transform kernel matrix, and applying the LFNST to the residual samples based on the selected transform kernel matrix and/or a simplification factor when the encoding apparatus is in a condition to apply LFNST. In this case, a size of the simplification transform kernel matrix may be determined based on a simplification factor.

Meanwhile, according to an embodiment, the encoding apparatus may zero-out a second region of the current block in which modified transform coefficients do not exist (S2150).

As shown in FIG. 11 and FIG. 12, all of the remaining regions of the current block in which the modified transform coefficients do not exist may be filled with 0. The entire transform process requires less computations due to the zero-out, and the decrease in the amount of computation required for the entire transform process may lead to a decrease in power consumption required to perform the transform. In addition, since a latency involved in the transform process is decreased, image coding efficiency may be increased.

In addition, the encoding apparatus may configure image information so that the LFNST index is signaled based on that the current block is split into a plurality of sub-partition blocks and the zero-out is performed on all of the plurality of sub-partition blocks (S2160).

In addition, according to an embodiment, the encoding apparatus may configure image information so that an LFNST index indicating an LFNST matrix is signaled based on that a transform coefficient exists in a region other than a DC position of the current block, and may configure the image information so that the LFNST index is signaled irrespective of whether the transform coefficient exists in the region other than the DC position, based on that the current block is split into a plurality of sub-partition blocks.

The encoding apparatus may configure image information so that the image information shown in Table 8 is parsed in the decoding apparatus.

That is, when the current block is not split into the plurality of sub-partition blocks and when it is indicated that the transform coefficient exists in the region other than the DC position of the current block, the encoding apparatus may configure image information so that the LFNST index is parsed. When the current block is split into the plurality of sub-partition blocks, the encoding apparatus may configure the image information so that the LFNST index is parsed without having to check whether the transform coefficient exists in the region other than the DC position.

That is, when the ISP is applied to the current block, the encoding apparatus configures the image information so that the LFNST index is signaled even if a non-zero coefficient position for all sub-partition blocks is located at a DC position.

According to an embodiment, if an index of a sub-block including a last significant coefficient in the current block (or sub-partition block) is 0 and if a position of the last significant coefficient in the sub-block is greater than 0, the encoding apparatus may determine that the significant coefficient exists in the region other than the DC position and may configure the image information so that the LFNST index is signaled. In this document, a first position in a scan order may be 0.

In addition, according to an embodiment, if the index of the sub-block including the last significant coefficient in the current block (or sub-partition block) is greater than 0 and if a width and height of the current block are greater than or equal to 4, the encoding apparatus may determine that the LFNST is surely not applied and may configure the image information so that the LFNST index is not signaled.

In addition, according to an embodiment, if a size of the current block (or sub-partition block) is 4x4 or 8x8 and if a position in a scan order starts from 0, when a position of a last significant coefficient is greater than 7, the encoding apparatus may determine that the LFNST is surely not applied and may configure the image information so that the LFNST index is not signaled.

That is, the encoding apparatus may configure image information so that a variable LfnstDcOnly and a variable LfnstZeroOutSigCoeffFlag are derived in the decoding apparatus and then the LFNST index is parsed according to the derived variable value.

The encoding apparatus may perform quantization based on modified transform coefficients for the current block to derive quantized transform coefficients, and may encode and output image information including information on the quantized transform coefficients and LFNST index information indicating an LFNST matrix when the LFNST is applicable (S2170).

That is, the encoding apparatus may generate residual information including information on quantized transform coefficients. The residual information may include the above-described transform related information/syntax element. The encoding apparatus may encode image/video information including residual information and output the encoded image/video information in the form of a bitstream.

More specifically, the encoding apparatus 100 may generate information about the quantized transform coefficients and encode the information about the generated quantized transform coefficients.

The syntax element of the LFNST index according to the present embodiment may indicate whether (inverse) LFNST is applied and any one of the LFNST matrices included in the LFNST set, and when the LFNST set includes two transform kernel matrices, there may be three values of the syntax element of the LFNST index.

According to an embodiment, when a division tree structure for the current block is a dual tree type, an LFNST index may be encoded for each of a luma block and a chroma block.

According to an embodiment, the syntax element value for the transform index may be derived as 0 indicating a case in which (inverse) LFNST is not applied to the current block, 1 indicating a first LFNST matrix among LFNST matrices, and 2 indicating a second LFNST matrix among LFNST matrices.

In the present disclosure, at least one of quantization/dequantization and/or transform/inverse transform may be omitted. When quantization/dequantization is omitted, a quantized transform coefficient may be referred to as a transform coefficient. When transform/inverse transform is omitted, the transform coefficient may be referred to as a coefficient or a residual coefficient, or may still be referred to as a transform coefficient for consistency of expression.

In addition, in the present disclosure, a quantized transform coefficient and a transform coefficient may be referred to as a transform coefficient and a scaled transform coefficient, respectively. In this case, residual information may include information on a transform coefficient(s), and the information on the transform coefficient(s) may be signaled through a residual coding syntax. Transform coefficients may be derived based on the residual information (or information on the transform coefficient(s)), and scaled transform coefficients may be derived through inverse transform (scaling) of the transform coefficients. Residual samples may be derived based on the inverse transform (transform) of the scaled transform coefficients. These details may also be applied/expressed in other parts of the present disclosure.

In the above-described embodiments, the methods are explained on the basis of flowcharts by means of a series of steps or blocks, but the present disclosure is not limited to the order of steps, and a certain step may be performed in order or step different from that described above, or concurrently with another step. Further, it may be understood by a person having ordinary skill in the art that the steps shown in a flowchart are not exclusive, and that another step may be incorporated or one or more steps of the flowchart may be removed without affecting the scope of the present disclosure.

The above-described methods according to the present disclosure may be implemented as a software form, and an encoding apparatus and/or decoding apparatus according to the disclosure may be included in a device for image processing, such as, a TV, a computer, a smartphone, a set-top box, a display device or the like.

When embodiments in the present disclosure are embodied by software, the above-described methods may be embodied as modules (processes, functions or the like) to perform the above-described functions. The modules may be stored in a memory and may be executed by a processor. The memory may be inside or outside the processor and may be connected to the processor in various well-known manners. The processor may include an application-specific integrated circuit (ASIC), other chipset, logic circuit, and/or a data processing device. The memory may include a read-only memory (ROM), a random access memory (RAM), a flash memory, a memory card, a storage medium, and/or other storage device. That is, embodiments described in the present disclosure may be embodied and performed on a processor, a microprocessor, a controller or a chip. For example, function units shown in each drawing may be embodied and performed on a computer, a processor, a microprocessor, a controller or a chip.

Further, the decoding apparatus and the encoding apparatus to which the present disclosure is applied, may be included in a multimedia broadcasting transceiver, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an over the top (OTT) video device, an Internet streaming service providing device, a three-dimensional (3D) video device, a video telephony video device, and a medical video device, and may be used to process a video signal or a data signal. For example, the over the top (OTT) video device may include a game console, a Blu-ray player, an Internet access TV, a Home theater system, a smartphone, a Tablet PC, a digital video recorder (DVR) and the like.

In addition, the processing method to which the present disclosure is applied, may be produced in the form of a program executed by a computer, and be stored in a computer-readable recording medium. Multimedia data having a data structure according to the present disclosure may also be stored in a computer-readable recording medium. The computer-readable recording medium includes all kinds of storage devices and distributed storage devices in which computer-readable data are stored. The computer-readable recording medium may include, for example, a Blu-ray Disc (BD), a universal serial bus (USB), a ROM, a PROM, an EPROM, an EEPROM, a RAM, a CD-ROM, a magnetic tape, a floppy disk, and an optical data storage device. Further, the computer-readable recording medium includes media embodied in the form of a carrier wave (for example, transmission over the Internet). In addition, a bitstream generated by the encoding method may be stored in a computer-readable recording medium or transmitted through a wired or wireless communication network. Additionally, the embodiments of the present disclosure may be embodied as a computer program product by program codes, and the program codes may be executed on a computer by the embodiments of the present disclosure. The program codes may be stored on a computer-readable carrier.

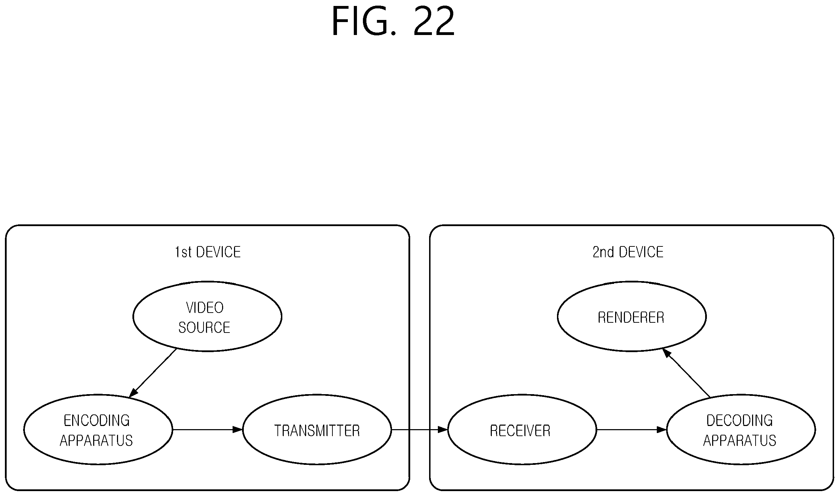

FIG. 22 illustrates an example of a video/image coding system to which the present disclosure is applicable.

Referring to FIG. 22, a video/image coding system may include a source device and a receiving device. The source device may transfer encoded video/image information or data to the receiving device through a digital storage medium or network in the form of a file or streaming.

The source device may include a video source, an encoding apparatus, and a transmitter. The receiving device may include a receiver, a decoding apparatus, and a renderer. The encoding apparatus may be called a video/image encoding apparatus, and the decoding apparatus may be called a video/image decoding apparatus. The transmitter may be included in the encoding apparatus. The receiver may be included in the decoding apparatus. The renderer may include a display, and the display may be configured as a separate device or an external component.

The video source may acquire video/image through a process of capturing, synthesizing, or generating the video/image. The video source may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding apparatus may encode input video/image. The encoding apparatus may perform a series of procedures such as prediction, transform, and quantization for compaction and coding efficiency. The encoded data (encoded video/image information) may be output in the form of a bitstream.

The transmitter may transfer the encoded image/image information or data output in the form of a bitstream to the receiver of the receiving device through a digital storage medium or a network in the form of a file or streaming. The digital storage medium may include various storage mediums such as USB, SD, CD, DVD, Blu-ray, HDD, SSD, and the like. The transmitter may include an element for generating a media file through a predetermined file format and may include an element for transmission through a broadcast/communication network. The receiver may receive/extract the bitstream and transmit the received bitstream to the decoding apparatus.

The decoding apparatus may decode the video/image by performing a series of procedures such as dequantization, inverse transform, and prediction corresponding to the operation of the encoding apparatus.

The renderer may render the decoded video/image. The rendered video/image may be displayed through the display.

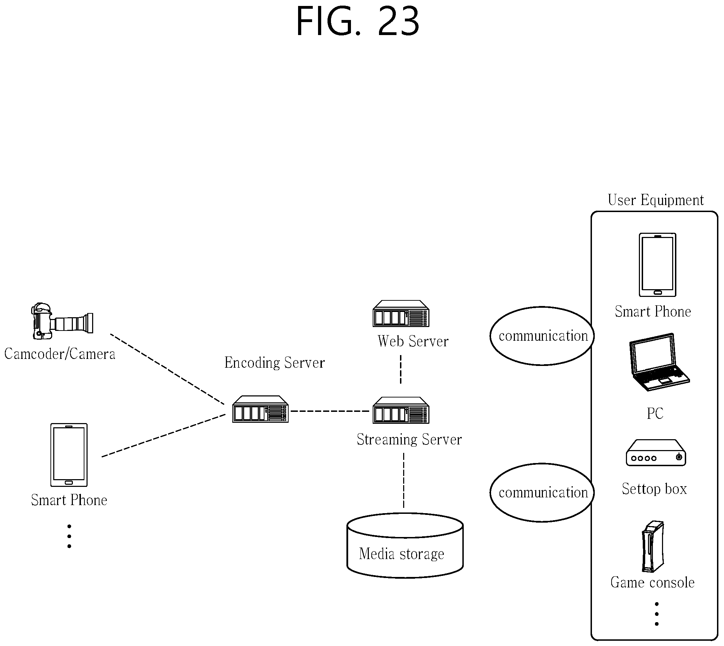

FIG. 23 illustrates the structure of a content streaming system to which the present disclosure is applied.

Further, the contents streaming system to which the present disclosure is applied may largely include an encoding server, a streaming server, a web server, a media storage, a user equipment, and a multimedia input device.

The encoding server functions to compress to digital data the contents input from the multimedia input devices, such as the smart phone, the camera, the camcoder and the like, to generate a bitstream, and to transmit it to the streaming server. As another example, in a case where the multimedia input device, such as, the smart phone, the camera, the camcoder or the like, directly generates a bitstream, the encoding server may be omitted. The bitstream may be generated by an encoding method or a bitstream generation method to which the present disclosure is applied. And the streaming server may store the bitstream temporarily during a process to transmit or receive the bitstream.

The streaming server transmits multimedia data to the user equipment on the basis of a user's request through the web server, which functions as an instrument that informs a user of what service there is. When the user requests a service which the user wants, the web server transfers the request to the streaming server, and the streaming server transmits multimedia data to the user. In this regard, the contents streaming system may include a separate control server, and in this case, the control server functions to control commands/responses between respective equipments in the content streaming system.

The streaming server may receive contents from the media storage and/or the encoding server. For example, in a case the contents are received from the encoding server, the contents may be received in real time. In this case, the streaming server may store the bitstream for a predetermined period of time to provide the streaming service smoothly.

For example, the user equipment may include a mobile phone, a smart phone, a laptop computer, a digital broadcasting terminal, a personal digital assistant (PDA), a portable multimedia player (PMP), a navigation, a slate PC, a tablet PC, an ultrabook, a wearable device (e.g., a watch-type terminal (smart watch), a glass-type terminal (smart glass), a head mounted display (HMD)), a digital TV, a desktop computer, a digital signage or the like. Each of servers in the contents streaming system may be operated as a distributed server, and in this case, data received by each server may be processed in distributed manner.

Claims disclosed herein can be combined in a various way. For example, technical features of method claims

# EP 4 024 870 A1

of the present disclosure can be combined to be implemented or performed in an apparatus, and technical features of apparatus claims can be combined to be implemented or performed in a method. Further, technical features of method claims and apparatus claims can be combined to be implemented or performed in an apparatus, and technical features of method claims and apparatus claims can be combined to be implemented or performed in a method.

## Claims

1. An image decoding method performed by a decoding apparatus, the method comprising:

    receiving residual information from a bitstream;
    deriving a transform coefficient for a current block based on the residual information;
    deriving modified transform coefficients by applying a low-frequency non-separable transform (LFNST) to the transform coefficients;
    deriving residual samples for the current block based on an inverse primary transform for the modified transform coefficients; and
    generating a reconstructed picture based on the residual samples,
    wherein deriving the modified transform coefficient comprises:

        determining whether the transform coefficient exists in a second region other than a first region located at a top-left position of the current block;
        parsing an LFNST index based on a result of the determination; and
        deriving the modified transform coefficient based on the LFNST index and an LFNST matrix,
        wherein the LFNST index is parsed based on that the current block is split into a plurality of sub-partition blocks and the transform coefficient does not exist in all of the respective second regions for the plurality of sub-partition blocks.

2. The method of claim 1, wherein the LFNST index is parsed if the current block is not split into the plurality of sub-partition blocks and the transform coefficient does not exist in the second region.

3. The method of claim 1,

    wherein the current block is a coding block, and
    wherein if a width and height of each sub-partition block are greater than or equal to 4, the LFNST index for the current block is applied to the plurality of sub-partition blocks.

4. The method of claim 1, wherein if the split sub-partition block is a 4x4 block or an 8x8 block, the LFNST is applied to up to an 8th transform coefficient in a scan direction from a top-left position of the current block.

5. The method of claim 1,

    wherein deriving the modified transform coefficient further includes
    deriving a first variable indicating whether the transform coefficient exists in a region other than a DC position of the current block, and
    wherein the LFNST index is parsed when the first variable indicates that the transform coefficient exists in the region other than the DC position.

6. The method of claim 5, wherein the LFNST index is parsed without deriving the first variable based on the current block being split into the plurality of sub-partition blocks.

7. The method of claim 1, wherein if the sub-partition block is not a 4x4 block or an 8x8 block, the LFNST is applied to a transform coefficient of a 4x4 region located at a top-left position of the sub-partition block.

8. An image encoding method performed by an image encoding apparatus, the method comprising:

    deriving prediction samples for a current block;
    deriving residual samples for the current block based on the prediction sample;
    deriving transform coefficients for the current block based on a primary transform for the residual samples;

deriving modified transform coefficients for the current block based on a specific LFNST matrix and transform coefficients of a first region located at a top-left position of the current block;

zeroing-out a second region of the current block in which the modified transform coefficients do not exist;

configuring image information so that the LFNST index is signaled based on the current block being split into a plurality of sub-partition blocks and the zero-out is performed on all of the plurality of sub-partition blocks; and

outputting the image information including the LFNST index and residual information derived through quantization of the modified transform coefficients.

9. The method of claim 8, wherein the image information is configured such that the LFNST index is signaled if the current block is not split into the plurality of sub-partition blocks and the transform coefficient does not exist in the second region.

10. The method of claim 8,

wherein the current block is a coding block, and

wherein if a width and height of each sub-partition block are greater than or equal to 4, the image information is configured so that the LFNST matrix is applied to the plurality of sub-partition blocks.

11. The method of claim 8,

wherein if the split sub-partition block is a 4x4 block or an 8x8 block, 8 modified transform coefficients are derived, and

wherein if the sub-partition block is not the 4x4 block or the 8x8 block, 16 modified transform coefficients are derived.

12. The method of claim 8, further comprising determining whether the transform coefficient exists in a region other than a DC position of the current block, wherein if the transform coefficient exists in the region other than the DC position of the current block, the image information is configured so that the LFNST index is signaled.

13. The method of claim 12, wherein the image information is configured so that the LFNST index is signaled irrespective of whether the transform coefficient exists in the region other than the DC position, based on that the current block is split into the plurality of sub-partition blocks.

14. A computer readable digital storage medium storing indication information causing an image decoding method to be performed, the image decoding method comprising:

receiving residual information from a bitstream;

deriving a transform coefficient for a current block based on the residual information;

deriving modified transform coefficients by applying a low-frequency non-separable transform (LFNST) to the transform coefficients;

deriving residual samples for the current block based on an inverse primary transform for the modified transform coefficients; and

generating a reconstructed picture based on the residual samples,

wherein deriving the modified transform coefficient comprises:

determining whether the transform coefficient exists in a second region other than a first region located at a top-left position of the current block;

parsing an LFNST index based on a result of the determination; and

deriving the modified transform coefficient based on the LFNST index and an LFNST matrix,

wherein the LFNST index is parsed based on that the current block is split into a plurality of sub-partition blocks and the transform coefficient does not exist in all of the respective second regions for the plurality of sub-partition blocks.

# FIG. 1

EP 4 024 870 A1

# FIG. 2

# FIG. 3

S410       S420

Residual samples → | PRIMARY TRANSFORM (SEPARABLE TRANSFORM) | — Transform coefficients (1st) → | SECONDARY TRANSFORM (NON-SEPARABLE TRANSFORM) TRANSFORMER | → Transform coefficients (2nd)

TRANSFORMER

S450       S460

Transform coefficients (2nd) → | SECONDARY (INVERSE) TRANSFORM (NON-SEPARABLE SECONDARY TRANSFORM) | — Transform coefficients (1st) → | PRIMARY (INVERSE) TRANSFORM (SEPARABLE TRANSFORM) INVERSE TRANSFORMER | → Residual samples

INVERSE TRANSFORMER

# FIG. 4

# FIG. 5

Reduced
Transform

Residual $\longrightarrow$ T x [ ] $\longrightarrow$ Coefficient

(a)

Reduced Inv.
Transform

Coefficient $\longrightarrow$ $T^t$x [ ] $\longrightarrow$ Residual

(b)

# FIG. 6

| 1 | 2 | 3 | 4 | 5 | 6 | 7 | 8 |
|---|---|---|---|---|---|---|---|
| 9 | 10 | 11 | 12 | 13 | 14 | 15 | 16 |
| 17 | 18 | 19 | 20 | 21 | 22 | 23 | 24 |
| 25 | 26 | 27 | 28 | 29 | 30 | 31 | 32 |
| 33 | 34 | 35 | 36 | | | | |
| 37 | 38 | 39 | 40 | | | | |
| 41 | 42 | 43 | 44 | | | | |
| 45 | 46 | 47 | 48 | | | | |

| 1 | 2 | 3 | 4 |
|---|---|---|---|
| 5 | 6 | 7 | 8 |
| 9 | 10 | 11 | 12 |
| 13 | 14 | 15 | 16 |

(a)

| 1 | 9 | 17 | 25 | 33 | 37 | 41 | 45 |
|---|---|---|---|---|---|---|---|
| 2 | 10 | 18 | 26 | 34 | 38 | 42 | 46 |
| 3 | 11 | 19 | 27 | 35 | 39 | 43 | 47 |
| 4 | 12 | 20 | 28 | 36 | 40 | 44 | 48 |
| 5 | 13 | 21 | 29 | | | | |
| 6 | 14 | 22 | 30 | | | | |
| 7 | 15 | 23 | 31 | | | | |
| 8 | 16 | 24 | 32 | | | | |

| 1 | 5 | 9 | 13 |
|---|---|---|---|
| 2 | 6 | 10 | 14 |
| 3 | 7 | 11 | 15 |
| 4 | 8 | 12 | 16 |

(b)

# FIG. 7

| 1 | 3 | 6 | 10 |
|---|---|---|----|
| 2 | 5 | 9 | 13 |
| 4 | 8 | 12 | 15 |
| 7 | 11 | 14 | 16 |

(a)

| 1 | 3 | 6 | |
|---|---|---|---|
| 2 | 5 | | |
| 4 | 8 | | |
| 7 | | | |

(b)

# FIG. 8

(a) 4x4

(b) 8x4 / 4x8

(c) 4xN / Nx4, when N≥16

(d) 8x8

(e) MxN(M≥8, N≥8, M>8 or N>8)

# FIG. 9

(a) 4x4        (b) 8x4 / 4x8

(c) 4xN / Nx4, when N≥16        (d) 8x8

(e) MxN(M≥8, N≥8, M>8 or N>8)

# FIG. 10

4xN / Nx4, when N≥16

# FIG. 11

(a) 4x4                    (b) 8x4 / 4x8

(c) 4xN / Nx4, when N≥16

(d) 4xN / Nx4, when N≥16

# FIG. 12

(a) 8x8

(b) MxN(M≥8, N≥8, M>8 or N>8)

EP 4 024 870 A1

# FIG. 13

55

# FIG. 14

Original WxH partition

Horizontal

Vertical

W

H/2

W/2

H

EP 4 024 870 A1

# FIG. 15

EP 4 024 870 A1

Original WxH partition

Horizontal

Vertical

W

H

H/4

W

W/4

H

# FIG. 16

# FIG. 17

| | |
|---|---|
| 1 | 9 |
| 2 | 10 |
| 3 | 11 |
| 4 | 12 |
| 5 | 13 |
| 6 | 14 |
| 7 | 15 |
| 8 | 16 |

(a)

| 1 | 2 | 3 | 4 | 5 | 6 | 7 | 8 |
|---|---|---|---|---|---|---|---|
| 9 | 10 | 11 | 12 | 13 | 14 | 15 | 16 |

(b)

# FIG. 18

| 1 | 3 | 5 | 7 | 9 | 11 | 13 | 15 |
|---|---|---|---|---|---|---|---|
| 2 | 4 | 6 | 8 | 10 | 12 | 14 | 16 |

| | |
|---|---|
| 1 | 3 |
| 2 | 5 |
| 4 | 7 |
| 6 | 9 |
| 8 | 11 |
| 10 | 13 |
| 12 | 15 |
| 14 | 16 |

# FIG. 19

(a)

(b)

(c)

(a)

# FIG. 20

RECEIVE RESIDUAL INFORMATION FROM BITSTREAM — S2010

DERIVE TRANSFORM COEFFICIENT FOR
CURRENT BLOCK BASED ON RESIDUAL INFORMATION — S2020

DETERMINE WHETHER CURRENT BLOCK IS SPLIT INTO
PLURALITY OF SUB-PARTITION BLOCKS
AND WHETHER TRANSFORM COEFFICIENT DOES NOT
EXIST IN ALL OF RESPECTIVE SECOND REGIONS FOR
PLURALITY OF SUB-PARTITION BLOCKS — S2030

PARSE LFNST INDEX BASED ON
DETERMINATION RESULT — S2040

DERIVE MODIFIED TRANSFORM COEFFICIENT
BASED ON LFNST INDEX AND LFNST MATRIX — S2050

DERIVE RESIDUAL SAMPLE FOR CURRENT BLOCK
BASED ON INVERSE PRIMARY TRANSFORM FOR
MODIFIED TRANSFORM COEFFICIENT — S2060

GENERATE RECONSTRUCTED PICTURE
BASED ON RESIDUAL SAMPLES — S2070

# FIG. 21

DERIVE PREDICTION SAMPLES FOR CURRENT BLOCK — S2110

DERIVE RESIDUAL SAMPLES FOR
CURRENT BLOCK BASED ON PREDICTION SAMPLE — S2120

DERIVE TRANSFORM COEFFICIENTS FOR
CURRENT BLOCK BASED ON PRIMARY TRANSFORM
FOR RESIDUAL SAMPLES — S2130

DERIVE MODIFIED TRANSFORM COEFFICIENTS
FROM TRANSFORM COEFFICIENT
BASED ON LFNST MATRIX FOR LFNST — S2140

ZERO-OUT SECOND REGION OF
CURRENT BLOCK IN WHICH MODIFIED
TRANSFORM COEFFICIENTS DO NOT EXIST — S2150

CONFIGURE IMAGE INFORMATION SO THAT LFNST
INDEX IS SIGNALED BASED ON CURRENT BLOCK
BEING SPLIT INTO PLURALITY OF SUB-PARTITION BLOCKS
AND ZERO-OUT IS PERFORMED ON ALL OF
PLURALITY OF SUB-PARTITION BLOCKS — S2160

OUTPUT IMAGE INFORMATION INCLUDING QUANTIZED
RESIDUAL INFORMATION AND LFNST INDEX — S2170

FIG. 22

1st DEVICE

VIDEO SOURCE

ENCODING APPARATUS

TRANSMITTER

2nd DEVICE

RENDERER

DECODING APPARATUS

RECEIVER

# FIG. 23

# EP 4 024 870 A1

## INTERNATIONAL SEARCH REPORT

| International application No. |
|---|
| **PCT/KR2020/012708** |

### A. CLASSIFICATION OF SUBJECT MATTER

**H04N 19/60**(2014.01)i; **H04N 19/137**(2014.01)i; **H04N 19/132**(2014.01)i; **H04N 19/119**(2014.01)i; **H04N 19/18**(2014.01)i; **H04N 19/122**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/60; H04N 19/107; H04N 19/12; H04N 19/122; H04N 19/136; H04N 19/137; H04N 19/169; H04N 19/132; H04N 19/119; H04N 19/18; H04N 19/70

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 변환(transform), 계수(coefficient), LFNST, 인덱스(index), 분할(split)

### C. DOCUMENTS CONSIDERED TO BE RELEVANT

| Category* | Citation of document, with indication, where appropriate, of the relevant passages | Relevant to claim No. |
|---|---|---|
| Y | BROSS, Benjamin et al. Versatile Video Coding (Draft 6). JVET-O2001-vE. Joint Video Experts Team (JVET) of ITU-T SG 16 WP 3 and ISO/IEC JTC 1/SC 29/WG 11. 15th Meeting: Gothenburg, SE. 31 July 2019, pp. 1-439. See pages 1, 62-66, 77, 283-287 and 304. | 1-14 |
| Y | KOO, Moonmo et al. Non-CE6: LFNST simplification based on the methods proposed in CE6-2.1a. JVET-O0209. Joint Video Experts Team (JVET) of ITU-T SG 16 WP 3 and ISO/IEC JTC 1/SC 29/WG 11. 15th Meeting: Gothenburg, SE. 05 July 2019, pp. 1-15. See pages 1-3; and figures 1-2. | 1-14 |
| A | JP 2018-529290 A (TELEFONAKTIEBOLAGET LM ERICSSON (PUBL)) 04 October 2018. See pages 1-7; and figure 16A. | 1-14 |
| A | KR 10-1997604 B1 (SK TELECOM CO., LTD.) 08 July 2019. See claims 1-4 and 6-7; and figure 5. | 1-14 |
| A | KR 10-2019-0052008 A (QUALCOMM INCORPORATED) 15 May 2019. See claims 1-13; and figure 10. | 1-14 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 December 2020** | **30 December 2020** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**66**

INTERNATIONAL SEARCH REPORT
Information on patent family members

International application No.

**PCT/KR2020/012708**

| Patent document cited in search report | | | Publication date (day/month/year) | Patent family member(s) | | | Publication date (day/month/year) |
|---|---|---|---|---|---|---|---|
| JP | 2018-529290 | A | 04 October 2018 | CN | 108141600 | A | 08 June 2018 |
| | | | | EP | 3345396 | A1 | 11 July 2018 |
| | | | | EP | 3345396 | A4 | 27 March 2019 |
| | | | | JP | 6557406 | B2 | 07 August 2019 |
| | | | | MX | 2018002209 | A | 23 March 2018 |
| | | | | US | 10080038 | B2 | 18 September 2018 |
| | | | | US | 2017-0257644 | A1 | 07 September 2017 |
| | | | | WO | 2017-039501 | A1 | 09 March 2017 |
| KR | 10-1997604 | B1 | 08 July 2019 | KR | 10-2019-0009408 | A | 28 January 2019 |
| KR | 10-2019-0052008 | A | 15 May 2019 | EP | 3520405 | A1 | 07 August 2019 |
| | | | | JP | 2019-534624 | A | 28 November 2019 |

Form PCT/ISA/210 (patent family annex) (July 2019)